# EUROPEAN PATENT APPLICATION

(11) **EP 1 658 894 A1**
(43) Date of publication of application: **24.05.2006**
(21) Application number: 06101347.0
(22) Date of filing: 24.02.2003
(51) Int. Cl.: B01J 19/00

(54) **Apparatus for dispersing reagent droplets below a fluid surface using non-contact dispensing**

(30) Priority: 22.02.2002 US 359471 P
(62) Divisional of application: 03716153.6
(71) Applicant: Biodot, Inc., Irvine, CA 92614 (US)
(72) Inventor: The designation of the inventor has not yet been filed
(74) Representative: McCall, John Douglas

(57) **Abstract**

There is disclosed a dispensing system for dispensing a liquid droplet into a receptacle, comprising:
a dispenser comprising an exit orifice;
said receptacle comprising at least one containment surface;
a host fluid contained in said receptacle such that said host fluid has an exposed surface not in contact with said exit orifice;
whereby, said dispenser dispenses a droplet from said exit orifice at a velocity such that said droplet penetrates said exposed surface of said host fluid.

## Description

### Background of the Invention

### Field of the Invention

The invention relates generally to dispensing of fluid droplets and, in particular, to methods and systems of dispersing, suspending or arranging microfluidic or sub-microfluidic volumes of droplets of chemical, biological or other reagents or liquids below the surface of a cover or host fluid using non-contact dispensing for creating an assay or reaction that produces a detectable signal or a by product.

### Description of the Related Art

Both genomics and proteomics involve the handling, transfer and assaying of microfluidic and sub-microfluidic quantities of expensive reagents and other liquids. Microfluidic liquid handling is associated with areas such as DNA microarraying, protein crystallization, high-throughput screening and combinatorial chemistry, among others. It has application in key markets such as life science research, biodiagnostics, pharmaceutical, agrochemical and materials science, among others.

It can be a difficult task to precisely, accurately and efficiently handle, transfer and deliver accurate microfluidic quantities of liquids. These microfluidic quantities typically are in the range from the order of a nanoliter (nL) to tens of microliters (µL) though they may be smaller, such as in the picoliter range, or larger. The complexity of the task is further increased when dealing with a wide variety of valuable reagents, a wide range of reagent dispense volumes and many permutations of reagents and reagent volume ratios. Conventional technologies are generally inefficient in precisely controlling such complex operations.

As assay volumes become smaller the issue of evaporation becomes more important. This is also the case where the volume is to be heated, for example, as in the case of a polymerase chain reaction (PCR). Conventional technologies are unable to address these issues adequately

### Summary of the Invention

The invention relates generally to dispensing of fluid droplets and in particular to methods and systems of dispersing, suspending or arranging microfluidic or sub-microfluidic volumes of droplets of chemical, biological or other reagents or liquids below the surface of a cover or host fluid using non-contact dispensing for creating an assay or reaction that produces a detectable signal or a by-product such as a harvestable protein crystal. Advantageously, the preferred embodiments substantially prevent evaporation of valuable reagents. Another advantage, in the case of miscible reagents, is that the drop velocities provide good mixing. Yet another advantage is that, in the non-contact approach, the dispensing nozzle or tip is not immersed into the host fluid, thereby facilitating cleaning.

In protein crystallization, for example, a mineral oil is sometimes used as a cover layer over reagents that have been dispensed into wells of a crystallization or microtiter plate. The mineral oil is used as an evaporation barrier. Typically, the assay reagents are first dispensed into the wells followed by dispensing of the mineral oil.

In accordance with one embodiment, the reagents are dispensed through the mineral oil. For example, 100 nanoliter (nL) drops of reagents can be dispensed through the mineral oil in a 1536 well format. Preferably, ink jet non-contact technology is used for dispensing the various reagents though other suitable technologies may also be efficaciously used, as needed or desired. Advantageously, dispensing of reagents through the mineral oil can prevent evaporation of valuable reagents which may otherwise occur in the time frame when the reagents in the wells are exposed to possible evaporation prior to dispensing of the mineral oil.

In accordance with another embodiment, drops of reagents may be shot though a mineral oil cover to react with previously dispensed reagents which have been dried on the bottom wells. Preferably, ink jet non-contact technology is used for dispensing the various reagents though other suitable technologies may also be efficaciously used, as needed or desired.

In accordance with one embodiment, a method is provided of arranging reagent droplets in a host fluid. The method comprises the step of dispensing a predetermined amount of host fluid in a receptacle such that a surface of the host fluid is exposed. A predetermined microfluidic or sub-microfluidic volume of a reagent in the form of a droplet is ejected from a non-contact dispenser at a controlled velocity and/or momentum onto the exposed surface of the host fluid such that the droplet penetrates the surface of the host fluid.

For putoses of summarizing the invention, certain aspects, advantages and novel features of the invention have been described herein above. Of course, it is to be understood that not necessarily all such advantages may be achieved in accordance with any particular embodiment of the invention. Thus, the invention may be embodied or carried out in a manner that achieves or optimizes one advantage or group of advantages as taught or suggested herein without necessarily achieving other advantages as may be taught or suggested herein.

All of these embodiments are intended to be within the scope of the invention herein disclosed. These and other embodiments of the invention will become readily apparent to those skilled in the art from the following detailed description of the preferred embodiments having reference to the attached figures, the invention not being limited to any particular preferred embodiment(s) disclosed.

### Brief Description of the Drawings

Having thus summarized the general nature of the invention and some of its features and advantages, certain preferred embodiments and modifications thereof will become apparent to those skilled in the art from the detailed description herein having reference to the figures that follow, of which:
**FIG. 1** is a simplified view of a dispensing apparatus having features and advantages in accordance with one embodiment of the invention.
**FIG. 2A** is a simplified view of a dispensing apparatus with multiple dispensers and having features and advantages in accordance with one embodiment of the invention.
**FIG. 2B** is a schematic generalized illustration of a dispensing apparatus with an array of dispensers and having features and advantages in accordance with one embodiment of the invention.
**FIG. 2C** is a simplified view of a dispensing apparatus with a manifold and having features and advantages in accordance with one embodiment of the invention.
**FIG. 3A** is a cross-sectional view of a solenoid valve dispensing head for use in accordance with any of the embodiments of **FIGS. 1, 2A, 2B** or **2C**.
**FIG. 3B** is a cross-seelional view of a piezo electric dispensing head for use in accordance with any of the embodiments of **FIGS. 1, 2A, 2B** or **2C.**
**FIG. 3C** is a cross-sectional view of a dispensing tip for use in accordance with any of the embodiments of **FIGS. 1, 2A, 2B, 2C, 3A** or **3B**.
**FIG. 3D** is a top view of the tip of **FIG. 3C.**
**FIG. 3E** is a top view of the tip of **FIG. 3C.**
**FIG. 4** is a cross-sectional view of a positive-displacement syringe pump for use in accordance with either of the embodiments of **FIGS. 1, 2A, 2B** or **2C.**
**FIG. 5** is a graph illustrating initial (non-steady-state) dispense volumes versus target dispense volumes for a reagent dispensing method and apparatus in accordance with one embodiment of the invention and showing the effects of reagent pre-pressurization.
**FIG. 6** is a schematic drawing illustrating a method of depositing an array or pattern of reagent onto a substrate and having features and advantages in accordance with one embodiment of the invention.
**FIG. 7** is a detailed partial schematic circuit diagram of a control system for a reagent dispensing apparatus having features and advantages in accordance with one embodiment of the invention.
**FIG. 8** is a simplified flow chart illustrating one mode of operation of a dispenser apparatus having features and advantages in accordance with one embodiment of the invention.
**FIGS. 9A-9C** are simplified flow charts illustrating one mode of operation of a dispenser apparatus having features and advantages in accordance with one embodiment of the invention.
**FIG. 10A** is a schematic drawing illustrating an example of programmed mode line dispensing in accordance with one embodiment of the invention, such as for creating custom dot array patterns on a membrane or glass slide.
**FIG. 10B** is a schematic drawing illustrating an example of synchronized line dispensing in accordance with one embodiment of the invention, such as for creating high-density dot arrays on a membrane or glass slide.
**FIG. 10C** is a schematic drawing illustrating an example of synchronized line dispensing in accordance with one embodiment of the invention such as for filling conventional micro-well plates.
**FIG. 10D** is a schematic drawing illustrating an example of non-synchronized line dispensing in accordance with one embodiment of the invention, such as for filling vision micro-well plates.
**FIG. 10E** is a schematic drawing illustrating an example of dot array mapping in accordance with one embodiment of the invention, such as for mapping one or more micro-well plates onto a slide or other substrate.
**FIG. 11** is a simplified schematic partial representation of a software package and associated text file creation and entry for controlling and coordinating the operation of a dispensing apparatus in accordance with one embodiment of the invention.
**FIG. 12** is a graphical representation of a fluorescence versus peptide concentration standard curve formed by text file controlled dispensing in accordance with one embodiment of the invention.
**FIG. 13** is a graphical representation of a Fluorescence Polarization (FP) Assay curve formed by text file controlled dispensing in accordance with one embodiment of the invention.
**FIG. 14A** is a schematic graphical representation of the valve stopper face displacement and current applied to the solenoid valve as a function of time for a "normal" single dispense mode (valve fully opens and then closes).
**FIG. 14B** is a schematic graphical representation of the valve stopper face displacement and current applied to the solenoid valve as a function of time for a modulated dispense mode in accordance with one embodiment of the invention.
**FIG. 15** is a photographic view of an aspirating and dispensing apparatus comprising a dispense head with a (1 x 4) array of dispense channels and having features and advantages in accordance with one embodiment of the invention.
**FIG. 16** is a photographic close-up view of the dispensing head of **FIG. 15.**
**FIG. 17** is a photographic close up view of a dispensing head comprising a (8 x 12) array of dispensing channels and having features and advantages in accordance with one embodiment of the invention.
**FIG. 18** is a photographic view of an aspirating and dispensing apparatus comprising a dispense head with a (1 x 96) array of dispense channels and having features and advantages in accordance with one embodiment of the invention.
**FIG. 19** is a photographic close-up view of the dispensing head of **FIG. 18.**
**FIG. 20** is a simplified schematic drawing illustrating the dispensing of a droplet into a host fluid and having features and advantages in accordance with one embodiment of the invention.
**FIG. 21** is a simplified schematic drawing illustrating a suspended droplet in a host fluid and having features and advantages in accordance with one embodiment of the invention.
**FIG. 22** is a simplified schematic drawing illustrating the mixing of a suspended droplet in a host fluid and having features and advantages in accordance with one embodiment of the invention.
**FIG. 23** is a simplified schematic drawing illustrating a settled droplet in a host fluid and having features and advantages in accordance with one embodiment of the invention.
**FIG. 24** is a simplified schematic drawing illustrating a suspended droplet in a host fluid and having features and advantages in accordance with one embodiment of the invention.
**FIG. 25** is a simplified schematic drawing illustrating a droplet in a host fluid impacting a containment wall and having features and advantages in accordance with one embodiment of the invention.
**FIG. 26** is a simplified schematic drawing illustrating the mixing of a droplet in a host fluid and having features and advantages in accordance with one embodiment of the invention.

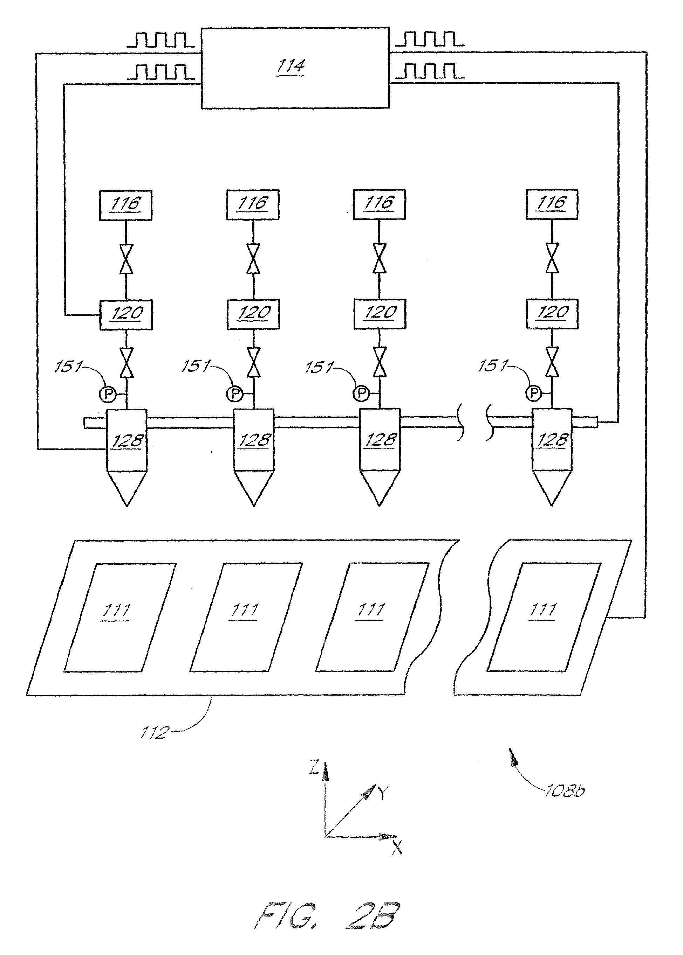

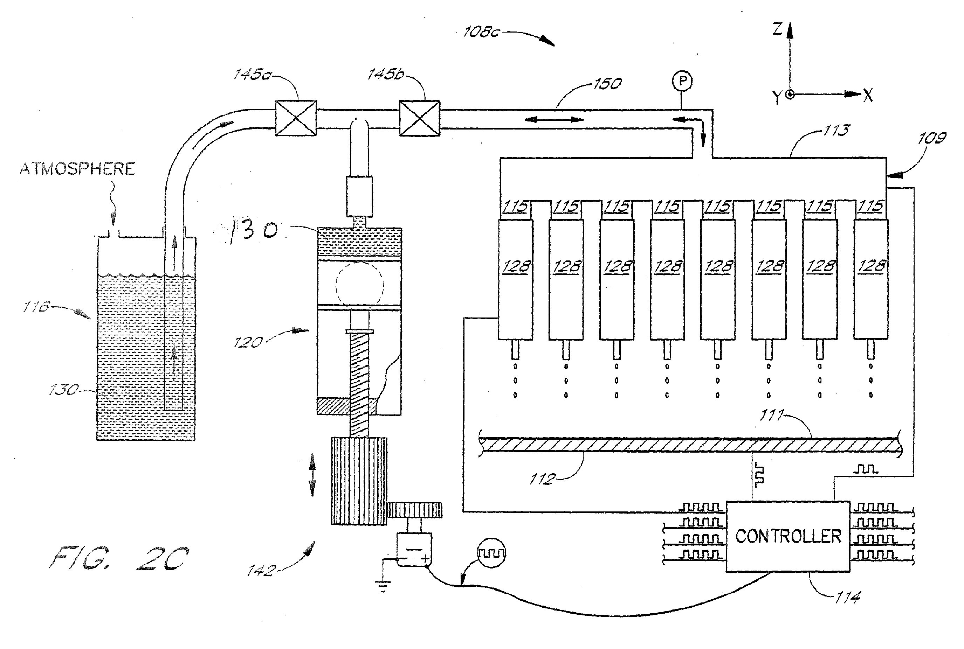

**FIG. 2**7 is a simplified schematic drawing illustrating the break-up of a droplet into smaller droplets in a host fluid and having features and advantages in accordance with one embodiment of the invention.

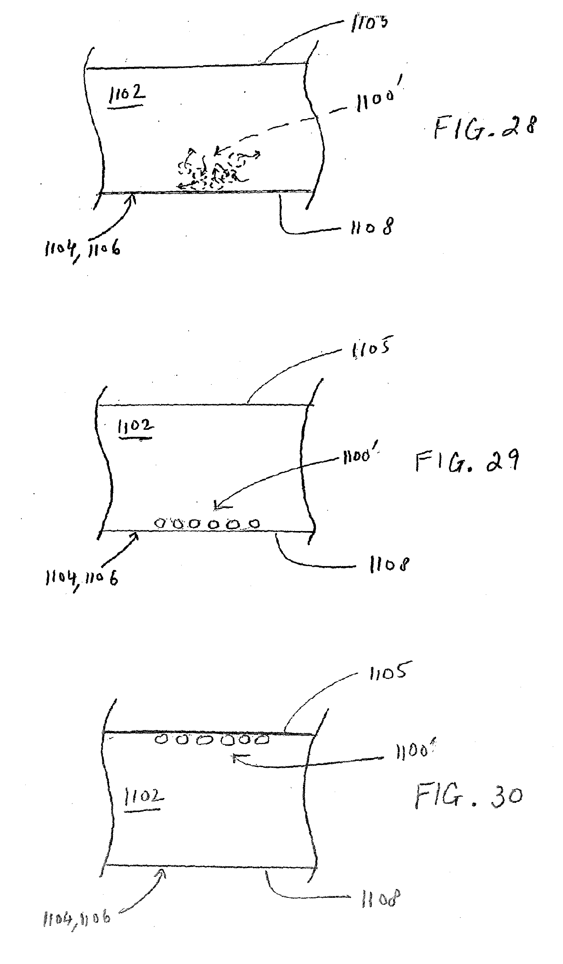

**FIG. 28** is a simplified schematic drawing illustrating the mixing of small droplets in a host fluid and having features and advantages in accordance with one embodiment of the invention.
**FIG. 29** is a simplified schematic drawing illustrating settled droplets in a host fluid and having features and advantages in accordance with one embodiment of the invention.
**FIG. 30** is a simplified schematic drawing illustrating suspended droplets in a host fluid and having features and advantages in accordance with one embodiment of the invention.

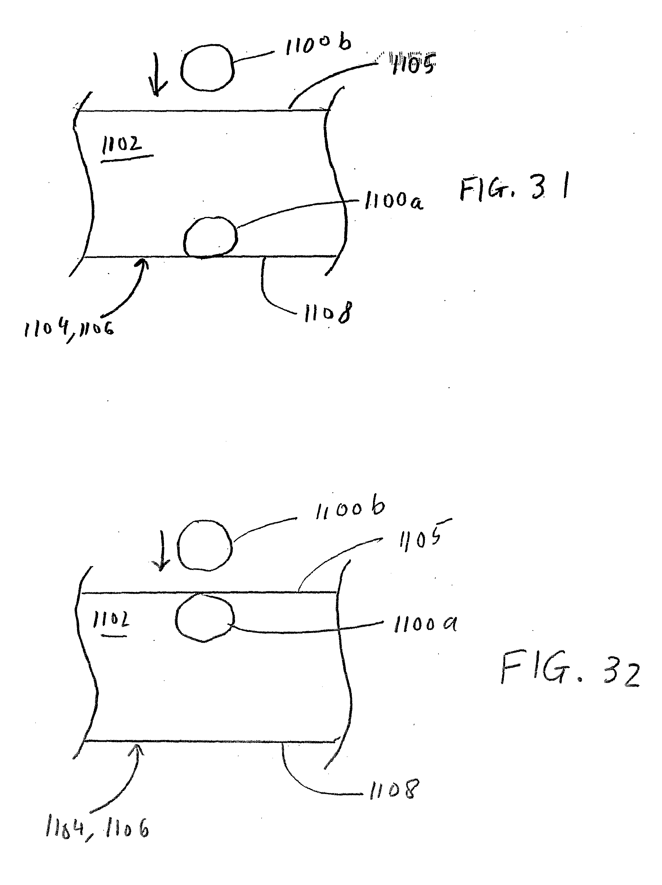

**FIG. 31** is a simplified schematic drawing illustrating the dispensing of droplets at a predetermined XY position in a host fluid and having features and advantages in accordance with one embodiment of the invention.
**FIG. 32** is a simplified schematic drawing illustrating the dispensing of droplets at a predetermined XY position in a host fluid and having features and advantages in accordance with one embodiment of the invention.

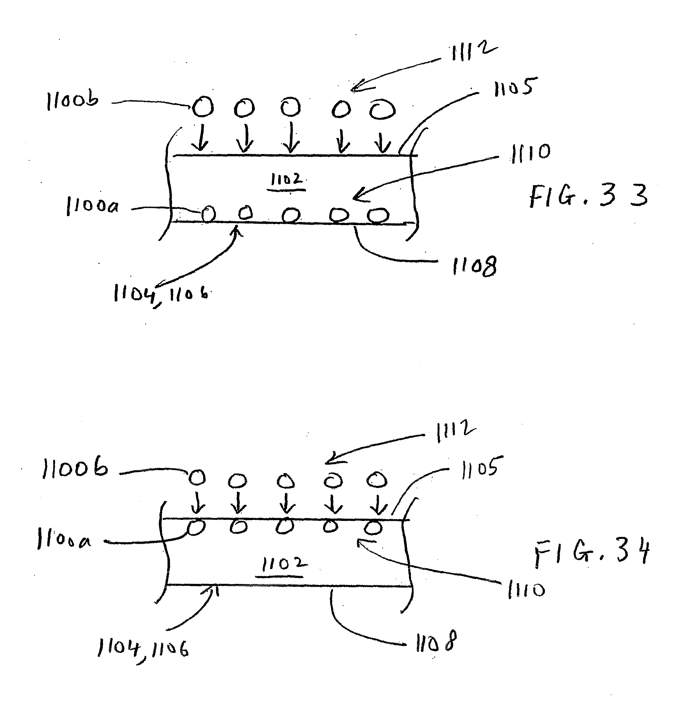

**FIG. 33** is a simplified schematic drawing illustrating the interaction of arrays of droplets in a host fluid and having features and advantages in accordance with one embodiment of the invention.
**FIG. 34** is a simplified schematic drawing illustrating the interaction of arrays of droplets in a host fluid and having features and advantages in accordance with one embodiment of the invention.

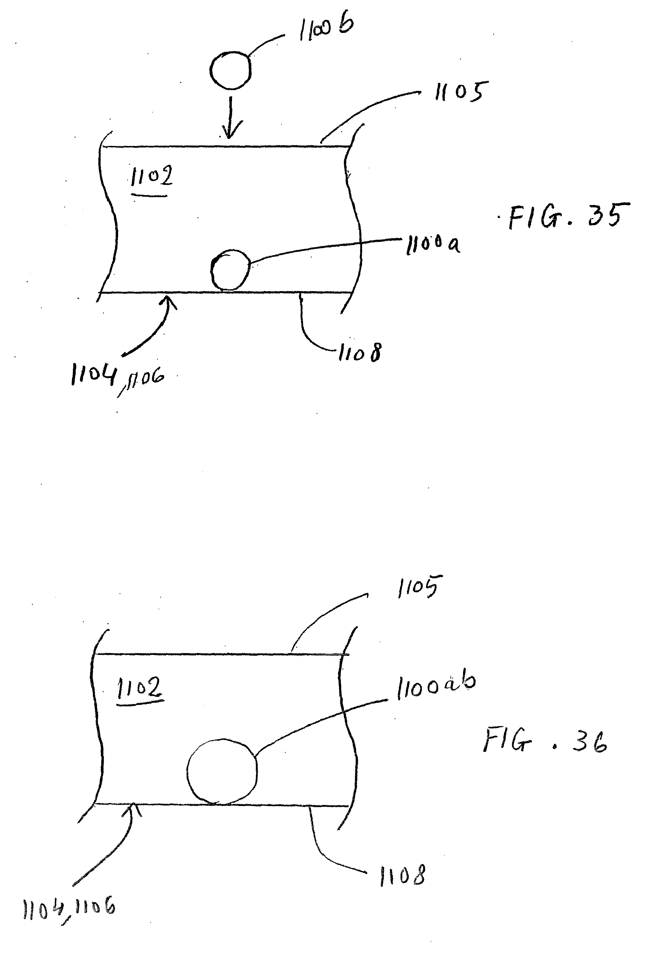

**FIGS. 35** and **36** are simplified schematic drawings illustrating the coalescence of droplets in a host fluid and having features and advantages in accordance with one embodiment of the invention.

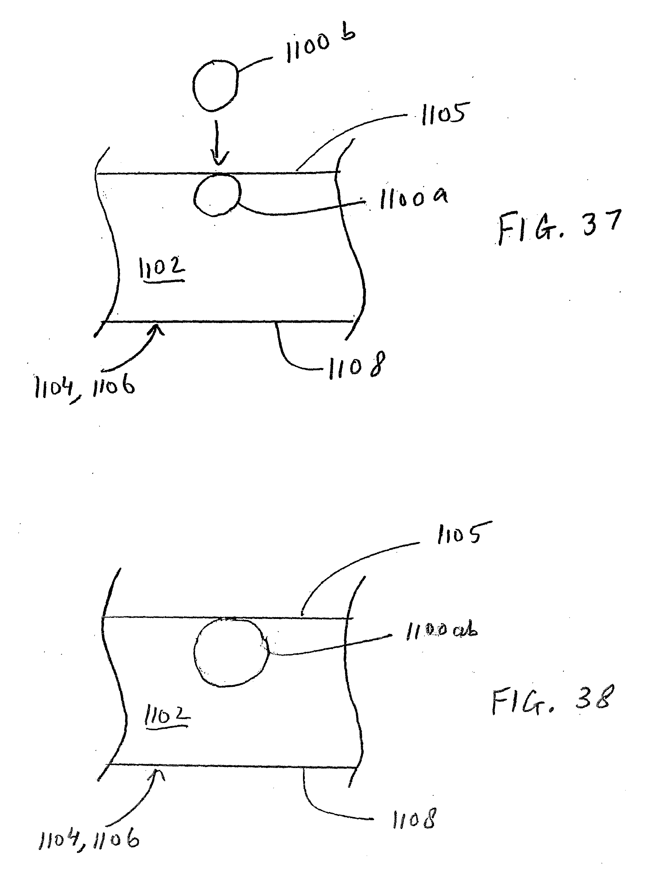

**FIGS. 37** and **38** are simplified schematic drawings illustrating the coalescence of droplets in a host fluid and having features and advantages in accordance with one embodiment of the invention.

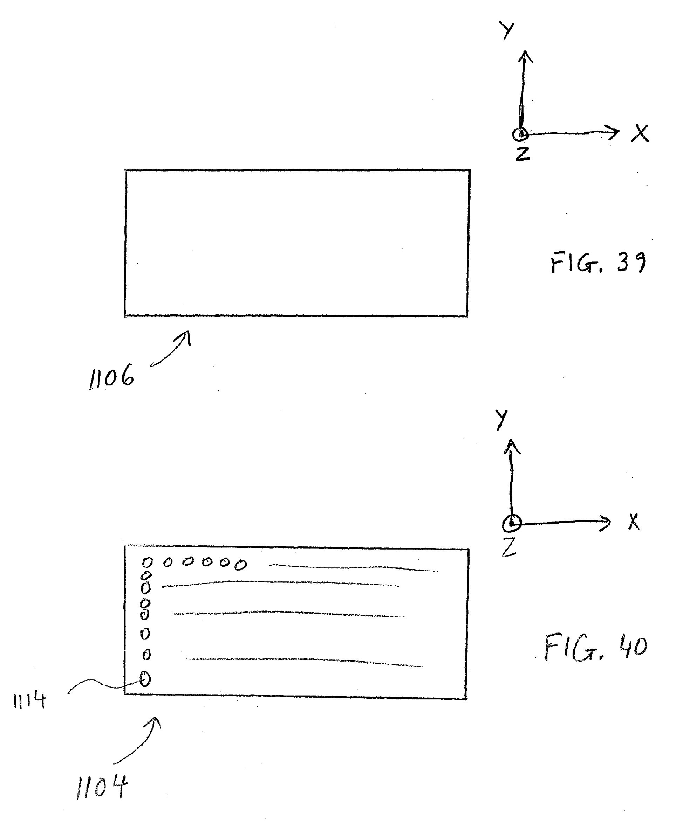

**FIG. 39** is a simplified schematic drawing illustrating a well-less plate having features and advantages in accordance with one embodiment of the invention.
**FIG. 40** is a simplified schematic drawing illustrating a micro-well plate having features and advantages in accordance with one embodiment of the invention.

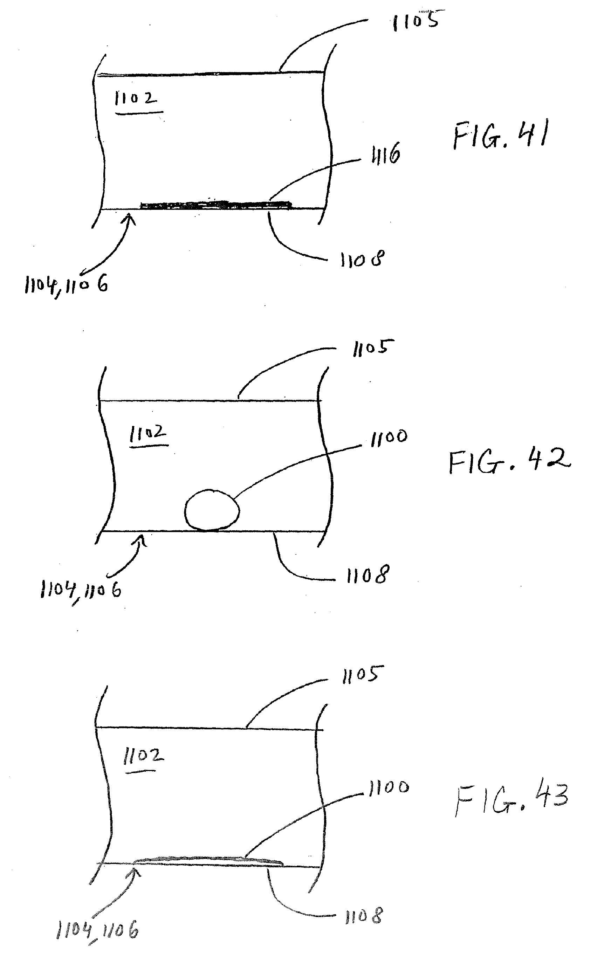

**FIG. 41** is a simplified schematic drawing illustrating a coating on a containment surface in a host fluid and having features and advantages in accordance with one embodiment of the invention.
**FIG. 42** is a simplified schematic drawing illustrating the interaction between a droplet and a hydrophobic surface in a host fluid and having features and advantages in accordance with one embodiment of the invention.

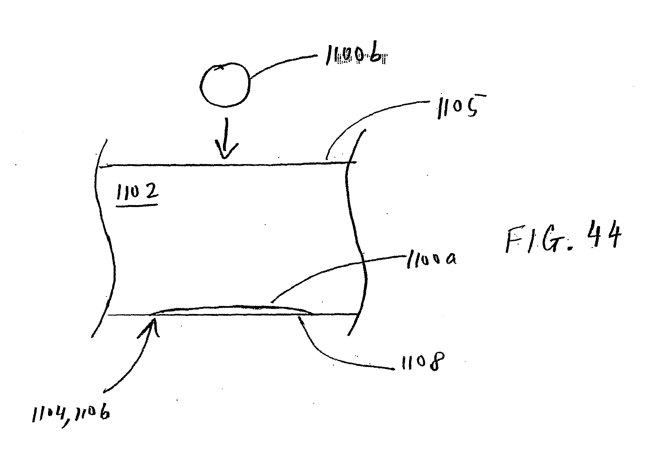

**FIG. 43** is a simplified schematic drawing illustrating the interaction between a droplet and a hydrophilic surface in a host fluid and having features and advantages in accordance with one embodiment of the invention.
**FIG. 44** is a simplified schematic drawing illustrating the interaction between a reagent treated surface and a reagent droplet in a host fluid and having features and advantages in accordance with one embodiment of the invention.

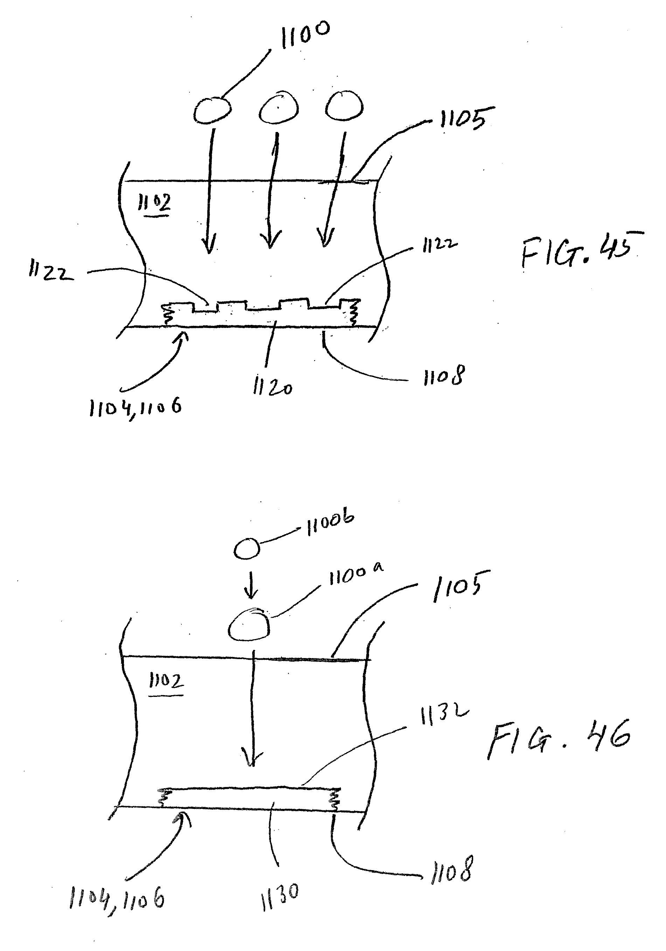

**FIG. 45** is a simplified schematic drawing illustrating the interaction between reagent droplets and a microfluidic chip in a host fluid and having features and advantages in accordance with one embodiment of the invention.
**FIG. 46** is a simplified schematic drawing illustrating the interaction between dispensed reagents on an epitaxial growth chip in a host fluid and having features and advantages in accordance with one embodiment of the invention.

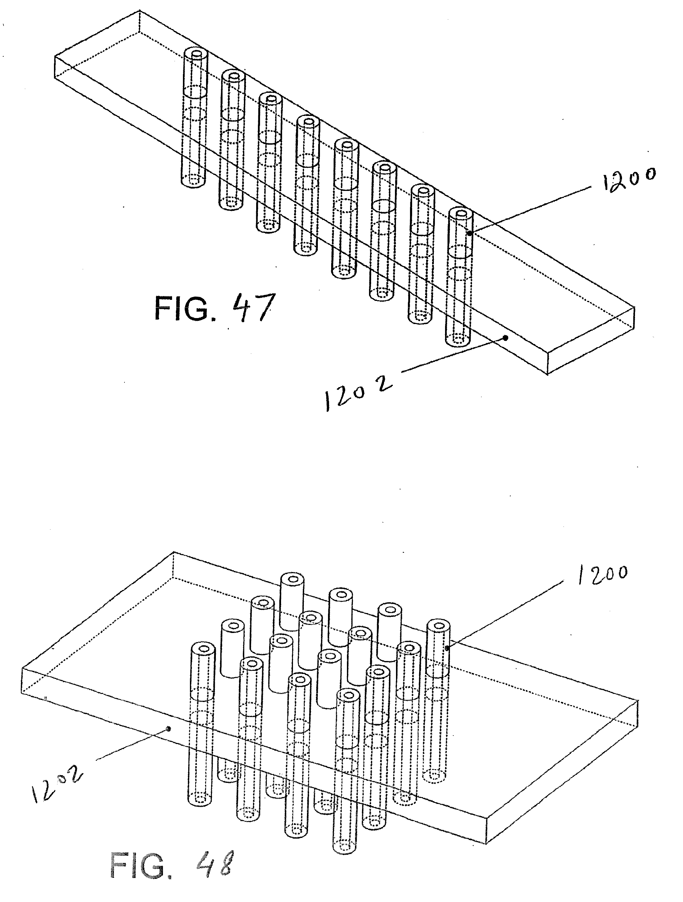

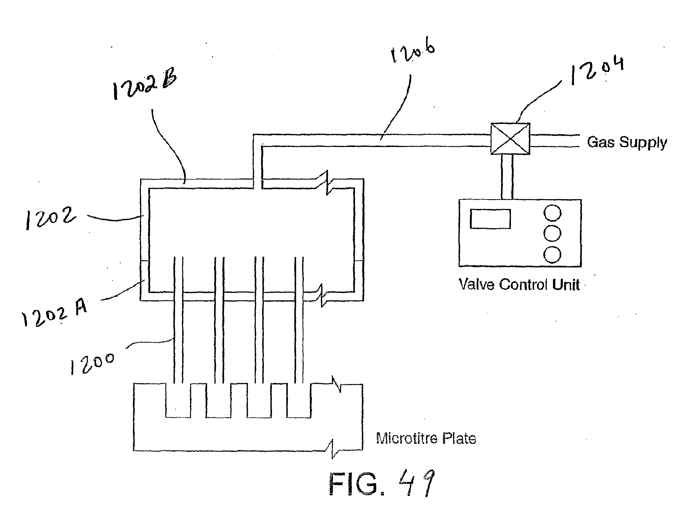

**FIGS. 47-50** are various views and arrangements of a liquid handling system having features and advantages in accordance with one embodiment of the invention.

### Detailed Description of the Preferred Embodiments

U.S. Patent Nos. 6,063,339, 5,916,524, 5,738,728, 5,743,960 and 5,741,554, the entirety of each one of which is hereby incorporated by reference, disclose the concept of a reagent dispensing apparatus and method in which a positive displacement syringe pump is used in combination with a liquid dispenser, such as a solenoid valve dispenser or piezoelectric dispenser, to achieve improved dispensing operations. The syringe pump meters a predetermined quantity or flow rate of reagent to the dispenser to regulate the quantity or flow rate of liquid reagent dispensed. Simultaneously, an associated X, X-Y or X-Y-Z table is controlled so as to move a substrate in coordinated relation with the dispenser operation such that the reagent density can be controlled, for example, in terms of volume of reagent deposited per unit length of substrate substantially independently of the particular flow characteristics of the liquid reagent or the particular operating parameters of the dispenser (within a given range).

Providing a positive displacement pump in series with the dispenser advantageously allows the quantity or flow rate of reagent to be controlled independently of the particular flow characteristics of the liquid being dispensed and/or the operating parameters of the particular dispenser. For example, the size of droplets formed by a dispenser can be adjusted by changing the frequency (for a solenoid valve or piezoelectric dispenser) or by adjusting the air pressure or exit orifice size (for an air brush dispenser) without affecting the flow rate of reagent. Also, the reagent flow rate can be controlled without substantial regard to the system operating parameters otherwise required to achieve stable operations. The quantity or flow rate of reagent dispensed is controlled or regulated independently by the positive displacement pump.

Copending U.S. Patent Application No. 09/945,388, filed August 30, 2001, Publication No. US 2002/0159919 A1, published October 31, 2002, and International Application No. PCT/US01/41964, filed August 30, 2001, International Publication No. WO 02/18053 A1, published March 7, 2002, both entitled METHOD AND APPARATUS FOR HIGH-SPEED MICROFLUIDIC DISPENSING USING TEXT FILE CONTROL, the entirety of each one of which is hereby incorporated by reference, disclose the concept of a method and apparatus for dispensing reagents and other liquids onto a target or substrate and, in particular, a method and apparatus for high-speed precision dispensing, controlled by input data from a user-defined text file, of multiple chemical or biological reagents with the ability to dispense a wide dynamic range of dispense volumes in complex combinatorial patterns, ratios and arrays onto or into a high-density microwell plate, glass slide, receptive membrane, test strip, vial or other suitable target.

Embodiments of the invention relate to methods and systems for high-speed precision dispensing and/or aspirating of microfluidic quantities of reagents and other liquids. In some embodiments, the operation of the systems is controlled by data accessed from a customized user-defined text file. Advantageously, the use of such text file control allows high-speed precision dispensing of one or more reagents with a wide dynamic range of dispense volumes in complex combinatorial patterns, ratios and arrays onto or into multiple predetermined locations of a desired target or substrate. This is particularly advantageous when a large number of permutations of different reagent and permutations of reagent volume ratios are involved. In some embodiments, the systems are operated in a high frequency modulated mode to further improve accuracy and reliability.

Some embodiments relate generally to dispensing of fluid droplets and in particular to methods and systems of dispersing, suspending or arranging microfluidic or sub-microfluidic volumes of droplets of chemical, biological or other reagents or liquids below the surface of a cover or host fluid using non-contact dispensing for creating an assay or reaction that produces a detectable signal or a by-product such as a harvestable protein crystal. Advantageously, evaporation of valuable reagents is substantially prevented or reduced. Another advantage, in the case of miscible reagents, is that the drop velocities provide good mixing. Yet another advantage is that, in the non-contact dispensing scheme, the nozzle or tip is not immersed into the host fluid, thereby facilitating cleaning.

### System Overview

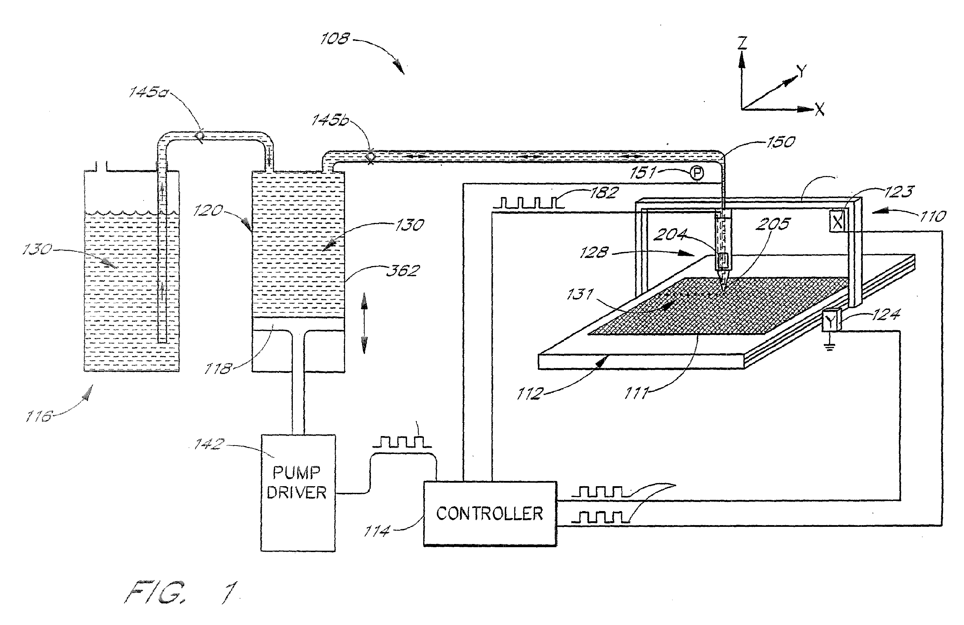

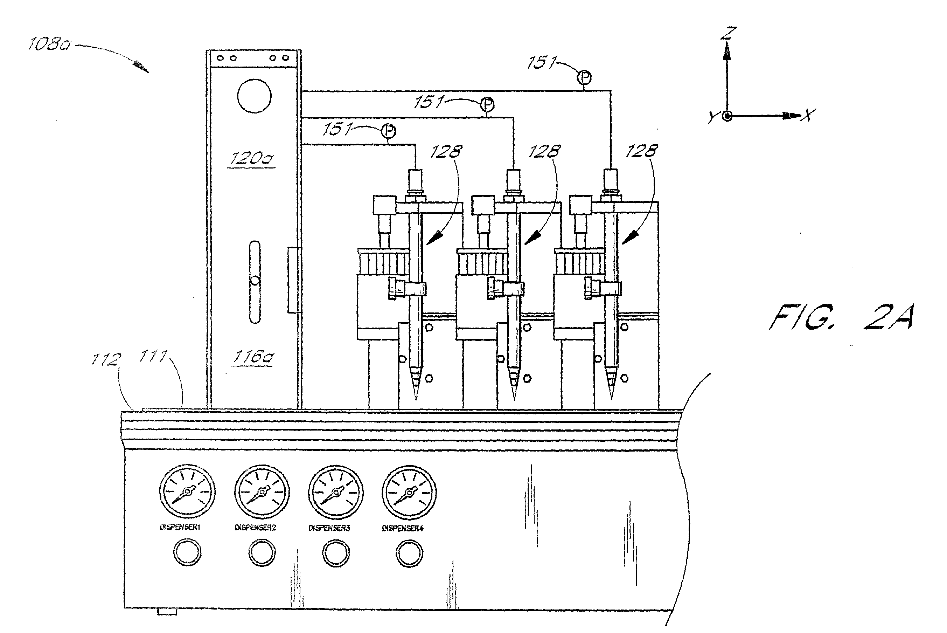

**FIG. 1** is a simplified overview which illustrates one embodiment of a dispensing apparatus **108** having certain features and advantages in accordance with the invention. The dispensing apparatus **108** is particularly adapted for automated high-speed precision dispensing (and aspirating) of liquids such as chemical and biological reagents, for example, DNA, cDNA, RNA, proteins, peptides, oligonucletides, other organic or inorganic compounds, among others.

The dispensing apparatus **108 (FIG. 1)** generally comprises a dispensing head or dispenser **128** having a valve or other dispensing means **204** operated by an actuator, such as a solenoid. The dispenser **128** is hydraulically coupled or in fluid communication with a positive displacement pump **120** for metering precise quantities of fluid or liquid **130** to or towards the dispenser **128.** The dispenser **128** is mounted on or in association with an X-Y table or gantry **110.**

As shown in **FIG. 1,** a substrate or target **111** is mounted on a carrier platform, table or carriage **112** to receive reagent or liquid dispensed from the dispenser **128.** The target **111** can comprise one or more microtiter plates, glass slides, receptive membranes, test strips, or other suitable porous or non-porous targets such as one or more single-well receptacles, vials or tubes. The microtiter plates can be configured in 96, 384, 1536 and 2080 well plate formats, among other configurations.

Those skilled in the art will appreciate that the X-Y table **110** (**FIG. 1**) may include one or more position stepper motors **123, 124** or the like, which are operable to move either the dispenser **128** and/or the carrier platform or table **112** relative to one another in the X, X-Y or X-Y-Z directions, as indicated in the drawing. Alternatively, or in addition, one or more suitable robot arms may be efficaciously used, as needed or desired, to provide controlled relative motion between the dispenser **128** and the target substrate **111** and/or other components or associated components of the apparatus 108.

Though **FIG. 1** shows only a single dispenser **128**, in other preferred embodiments and as discussed further below, it is contemplated that multiple dispensers in linear (1 x N) or two-dimensional (M x N) arrays are used. These may be provided and operated either in parallel or in another coordinated fashion, as desired. It should be understood that any discussion herein with specific reference to the single dispenser embodiment is substantially equally applicable, with passible modifications as apparent to the skilled artisan, to multiple dispensers each connected to respective pumps or a single pump.

The positive displacement pump **120** (**FIG. 1**) preferably comprises a syringe pump though other direct current (DC) fluid sources may be used with efficacy. The syringe pump **120** is hydraulically coupled to or in fluid communication with a fluid reservoir **116** through a first one-way check valve or open-close valve **145a.** The syringe pump **120** draws fluid **130** from the fluid reservoir **116** and provides it to the dispenser **128** through a second check valve or open-close valve **145b** on a supply line or feedline **150,** as shown in **FIG. 1.**

The syringe pump **120 (FIG. 1)** has a movable piston **118** within a syringe barrel **362**. The syringe pump **120** is operated by a syringe pump driver **142** comprising, for example, a stepper motor and an associated lead screw, for extending and retracting the piston **118** within the syringe barrel **362.** Those skilled in the art will readily appreciate that when the piston **118** is retracted, fluid **130** is drawn from the reservoir **116** into the syringe pump **120**. When the piston **118** is again extended, fluid **130** is forced to flow from the syringe barrel **362** into the dispenser **128** via the supply tube **150**, whereupon it is ejected by the dispenser 128 onto or into the target substrate **111** in the form of droplets **131** or a spray pattern.

In one embodiment, the fluid or liquid **130 (FIG. 1)** comprises the reagent that is dispensed onto or into the target **111.** That is the system (reservoir **116,** pump barrel **362,** dispenser **128** and other connection lines) is filled with the reagent **130** to be dispensed. This set-up is particularly advantageous when relatively large quantities of the same reagent are to be dispensed.

In another embodiment, the fluid or liquid **130 (FIG. 1)** comprises a system fluid or backing reagent, such as distilled water, and the dispensing apparatus **108** operates in a "suck-and-spit" mode. In this embodiment, the dispenser **128** is used to aspirate a predetermined amount of fluid, liquid or reagent from a source receptacle or microtiter plate and the like and then dispense the aspirated reagent onto or into the target **111.** As the skilled artisan will appreciate, reagent is aspirated by retracting or decrementing the pump piston **118** with the valve **145b** open to create a reduced pressure or partial vacuum to draw source reagent into the dispenser **128** via a suitable tip or nozzle thereon.

As discussed in further detail later herein, a controller **114** (**FIG. 1**) oversees operation of the pump **120**, X-Y table **110** (or X, or X-Y-Z table) and the dispenser **128**, among other associated components. The controller **114** coordinates and controls the motion of each of the stepper motors 123, 124, and the syringe pump driver **142,** as well as the opening and closing of the dispensing valve **204** to precisely dispense an amount of reagent at one or more predetermined location(s) on or in the target substrate **111.** The controller **114** also controls and coordinates aspiration of source reagent, as and if needed.

As also discussed in further detail later herein, a computer software program is interfaced with the controller **114** (**FIG. 1**) to guide dispensing (and/or aspirating) for different modes of operation and different applications. Preferably, a user-defned text file is created, for example, from a spreadsheet of values or template, with lists of numbers of user-defined dispense volumes of one or more reagents and corresponding coordinates of the dispense (and/or aspirate) operation. The controller **114** uses this text file data in cooperation with the software program to precisely control and coordinate the operation of the dispensing apparatus **108**.

Advantageously, the use of such text file control allows high-speed precision dispensing of one or more reagents with a wide dynamic range of dispense volumes in complex combinatorial patterns, ratios and arrays onto or into multiple predetermined locations of a desired target or substrate. This is particularly advantageous when a large number of permutations of different reagent and permutations of reagent volume ratios are involved. In such cases, typically, more than one dispenser (see **FIGS. 2A** and **2B**) or a manifold system (see **FIG. 2C**) or a combination thereof is utilized to facilitate process efficiency. These multiple dispensers can be operated in parallel or in synchronous coordination.

**FIG. 2A** is a simplified view of a dispensing apparatus **108a** comprising a plurality of dispensers **128**. As has been described above in reference to **FIG. 1**, each dispenser **128** is connnected to a respective pump **120** (in **FIG. 2A**, the pumps **120** are part of a pump bank **120a** and a reservoir bank **116a** comprises the reservoirs **116**). A single reagent may be dispensed by all of the dispensers **128** or multiple reagents, as needed or desired. Moreover, reagent(s) can be first aspirated and then dispensed, as discussed above.

Still referring in particular to **FIG. 2A**, relative motion is provided between the substrate or target **111** and the dispensing channels **128**. The dispensers **128** and/or the platform **112** are movable in the X, X-Y or X-Y-Z directions to allow for precision dispensing at predetermined locations. Multiple targets **111** may be placed on the table **112**, as needed or desired. The dispensers **128** can be independently moved or together in the form of a dispense head comprising multiple dispense channels **128** paced from one another by predetermined distance(s). Moreover, the dispensers **128** can be individually (serially or sequentially) operated or substantially simultaneously (parallely) or a combination thereof, as needed or desired. A central or main controller, possibly in conjunction with sub-controllers, is used to control and coordinate the actuations of the pumps **120,** dispensers **128** and relative movement between the target **111** and dispense channels **128.**

**FIG. 2B** is a schematic view of a dispensing apparatus **108b** comprising a plurality of dispensers **128**. In general, the dispensing apparatuses described herein can comprise one or more dispensers **128** arranged in a wide variety of configurations such as linear (1 x N), two-dimensional (M x N) or even three-dimensional (M x N x K) arrays. It should be noted that the array or collection of dispensers or dispenser heads **128** may be referred to as a "dispensing head" comprising multiple dispense channels **128.**

**FIG. 2C** is a simplified view of a dispensing apparatus **108c** comprising a manifold 109 connected to a plurality of dispensers **128**. The manifold generally comprises a main supply line **113** in fluid communication (hydraulically coupled) with a plurality of independent channels **115** each of which is in fluid communication (hydraulically coupled) with a respective one of the dispensers **128.** A positive displacement syringe pump **120** is in fluid communication (hydraulically coupled) with the manifold **109** via the feedline **150.** Reagent(s) can be first aspirated and then dispensed or a single reagent may fill the system, as discussed above.

Still referring in particular to **FIG. 2C**, relative motion is provided between the substrate or target **111** and the dispensing channels **128**. The dispensers **128** and/or the platform **112** are movable in the X, X-Y or X-Y-Z directions to allow for precision dispensing at predetermined locations. Multiple targets **111** may be placed on the table **112**, as needed or desired. The dispensers **128** are in the form of multiple dispense channels spaced from one another by predetermined distance(s). More than one manifold may be utilized, as needed or desired.

The dispensers **128 (FIG. 2C)** can be individually (serially or sequentially) operated or substantially simultaneously (parallely) or a combination thereof, as needed or desired. A linear (1 x N) or two-dimensional (M x N) array of dispensers **128** may be used with efficacy. A central or main controller **114** is used to control and coordinate the actuations of the pump **120,** dispensers **128** and relative movement between the target **111** and dispense channels **128.** Certain embodiments of a multi-channel aspirate-dispense system comprising a manifold are described in copending U.S. Patent Application No. 09/372,719, filed August 11, 1999, entitled MULTI-CHANNEL DISPENSING SYSTEM, the entirety of which is hereby incorporated by reference herein.

Advantageously, and as shown in **FIG. 2C**, the use of a manifold **109** allows only one pump **120** to meter fluid to and from a plurality of dispensers **128**. Desirably, this saves on cost. Moreover, balanced and controlled output can be achieved by adjusting the frequency and/or duty cycle of one or more of the dispensers **128** to compensate for any variations in flow resistances between channels.

### Solenoid Valve Dispenser

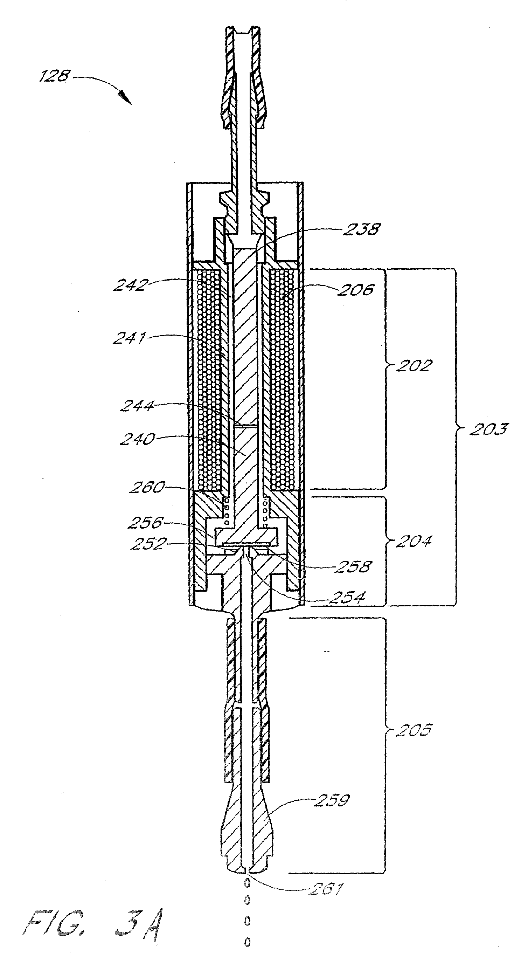

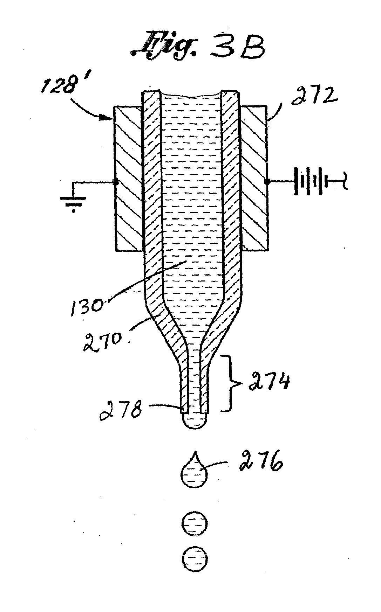

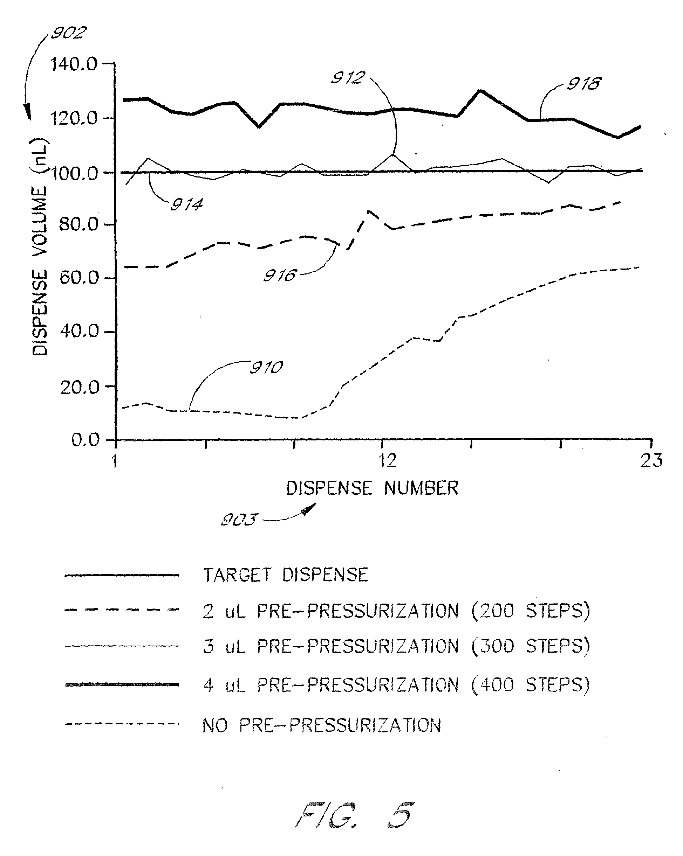

**FIG. 3A** is a cross-sectional view of one embodiment of a solenoid valve dispensing head **128** for use with the dispensing (and/or aspiration) systems as described herein. Solenoid valve dispensers of the type shown in **FIG. 3A** are commonly used for inkjet printing applications and are commercially available from sources such as The Lee Company of Westbrook, Connecticut. Other suitable drop-on-demand dispensers and valves may be efficaciously used, as needed or desired.

The drop-on-demand dispenser **128** (**FIG. 3A**) generally comprises a solenoid portion **202**, a valve portion **204** and a tube, capillary, tip or nozzle portion **205**. The solenoid portion **202** and the valve portion **204** in combination can be termed a drop-on-demand valve, a solenoid-actuated valve or a micro-solenoid valve **203.**

The solenoid portion **202 (FIG. 3A)** comprises an electromagnetic coil or winding **206**, a static core **238** and a movable plunger **240**. Tne static core **238** and movable plunger **240** are disposed within a hollow cylindrical sleeve **241** and are preferably spaced at least sligbdy away from the inner walls of the sleeve **241** so as to form an annular passage **242** there between through which the reagent **130** or other liquid to be dispensed may flow. The static core **238** and movable plunger **240** are preferably formed of a ferrous or magnetic material, such as an iron alloy, and are separated by a small gap **244**. Those skilled in the art will appreciate that when the solenoid coil **206** is energized, for example by a current or voltage, a magnetic field is created which draws the plunger **240** upward toward the static core **238**, closing the gap **244** and opening the valve **234.**

The valve portion **204 (FIG. 3A)** comprises a valve seat **252,** having an orifice opening **254,** and a stopper **256** having a valve face **258** adapted to seal against the valve seat **252.** The stopper **256** is in electro-mechanical communication with the plunger **240** and is spring biased toward the valve seat **252** via coil spring **260**. Again, those skilled in the art will readily appreciate that as the plunger **240** moves up and down, the valve 234 will open and close, accordingly, hence providing selective fluid communication with the tip **205.** Moreover, each time the valve **234** opens and closes, a volume of liquid is allowed to escape through the valve orifice **254.** This, in conjunction with the metering of fluid by the pump **120,** forms an energy pulse or pressure wave which causes a droplet of liquid to be ejected from the exit orifice **261** of the nozzle tip **259.**

As indicated above, preferably, the pump **120** (see, for example, **FIG. 1**) is a positive displacement pump and is provided in series with the solenoid valve dispenser **128.** Configuring the dispensing system in this manner has the benefit of forcing the solenoid valve dispenser **128** to admit and eject a quantity and/or flow rate of reagent as determined solely by the positive displacement pump **120,** with which it is hydraulically in series. For example, the syringe pump could be instructed to deliver a flow rate of 1 microliter per second of reagent to the solenoid valve dispenser **128** at a steady rate. As the valve stopper **256** is opened and closed at a given frequency and duty cycle a series of droplets are formed which will exactly match the desired flow rate. The syringe pump acts as a forcing function for the entire system, ensuring that the desired flow rate is maintained regardless of the duty cycle or frequency of the dispensing valve.

Advantageously, within a certain operating range the frequency and/or velocity of the droplets can be adjusted without affecting the flow rate of reagent simply by changing the frequency aud/or duty cycle of the energizing pulses **182** (**FIG. 1**) provided to the solenoid valve dispenser **128**. Of course, there are physical limitations of valve open time or duty-cycle necessary to achieve stable droplet formation. If the open time is too short relative to the flow rate, the pressure will increase and possibly prevent the valve dispenser **128** from functioning properly. If the open time is too long relative to the flow rate, then drop formation may be impaired or may not be uniform for each open/close cycle. Nevertheless, for a given flow rate of reagent **130** by the syringe pump **120** there will be a range of compatible frequencies and/or valve open times or duty-cycles in which stable dispensing operations may be achieved at the desired flow rate and droplet size. This range may be determined experimentally for a given production set up.

Certain embodiments of a solenoid actuated dispenser are described in copending U.S. Patent Application No. 09/238,285, filed January 28, 1999, and International Application No. PCT/US/99/02884, filed February 11, 1999, International Publication No. WO 99/42752, published August 26, 1999, both entitled REAGENT DISPENSING VALVE, the entirety of each one of which is hereby incorporated by reference herein.

Those skilled in the art will recognize that other types of dispensers and valve actuation devices exist and may be used with efficacy. These may include, for example, but are not limited to piezoelectric dispensers, fluid impulse dispensers, heat actuated dispensers, air brush dispensers, and the like.

**FIG. 3B** shows a cross-sectional view of a piezoelectric dispenser **128'** which also has advantageous use in accordance with embodiments of the invention. The piezoelectric dispenser **128'** generally comprises a capillary tube **270** made of glass or other suitable material and a piezoelectric constrictor **272** disposed around the capillary tube **270,** as shown. The capillary tube **270** has a nozzle portion **274** of a reduced diameter. When the capillary tube **270** is constricted by the piezoelectric constrictor **272,** droplets **276** are formed at the exit orifice **278** of the nozzle portion **274.** Advantageously, the dynamics of the piezoelectric dispenser **128'** are such that it may be able to operate at even higher frequencies and shorter duty cycles than typical solenoid valve dispensers, resulting in even smaller droplets **276.** Operation of the piezoelectric dispenser **128'** in terms of adjusting droplet size, frequency, velocity and flow rates is substantially the same or similar to that described in connection with the solenoid valve dispenser **128** of **FIG. 3A** and, therefore, will not be repeated here.

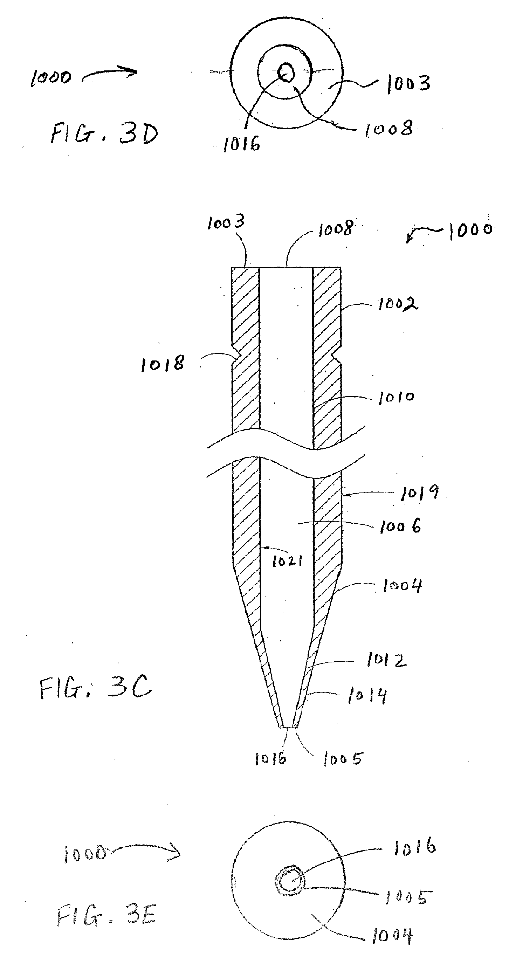

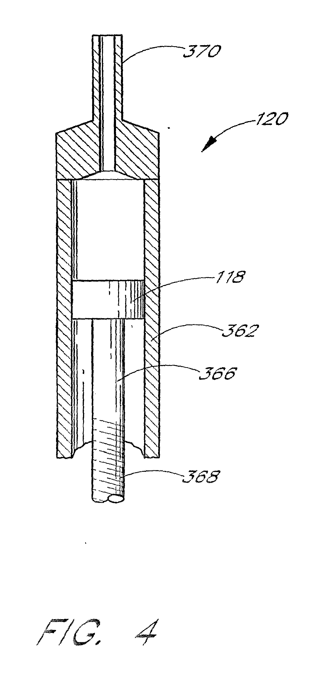

**FIGS. 3C, 3D** and **3E** show different views of a non-contact dispensing capillary tip or tube **1000** having features and advantages in accordance with one embodiment of the invention. The dispensing tip **1000** may be incorporated into any of the dispensing systems taught or suggested herein such as the embodiments of **FIGS. 1, 2A-2C** and **3A-3B**. Embodiments of such tips are disclosed in U.S. Patent Application No. 09/459,245, filed December 10, 1999, and International Application No. PCT/US99/15214, filed July 7, 1999, International Publication No. WO 00/01798, published January 13, 2000, both entitled TIP DESIGN AND RANDOM ACCESS ARRAY FOR MICROFLUIDIC TRANSFER, the entirety of each one of which is hereby incorporated by reference.

In the illustrated embodiment of **FIGS. 3C-3E,** the tip **1000** is generally cylindrical in shape and comprises a non-tapered upper portion or shank **1002** with an upper end **1003,** a tapered lower portion/outer surface **1004** with a lower end **1005** and an inner lumen or through cavity **1006.** The inner lumen **1006** is generally cylindrical in shape with a top opening **1008,** a non-tapered upper portion **1010,** and a tapered lower portion/inner surface **1012** to form a nozzle **1014** having an orifice or opening **1016.** Advantageously, the outer taper **1004** leads to less accumulation of fluid on the tip outer surface, for example, during aspiration. Also, advantageously, the inner taper **1012** is a desirable shape for capillary action, and reduces fluid mixing during aspiration and reduces the precipitation of gaseous bubbles within the fluid during aspirate-dispense operations.

Optionally, as shown in **FIG. 3C,** the tip **1000** may further include a generally circumferential groove, slot or notch **1018** on the non-tapered upper portion **1002.** The slot **1018** is generally V-shaped. The notch **1018** advantageously provides an easy break point in the case of accidental hard or jarring contact between the tip **1000** and a contacting surface of the fluid source or target.

Preferably, the tip **1000 (FIGS. 3C-3E)** is fabricated from a ceramic material, and more preferably, from alumina. Advantageously, the ceramic material provides chemical inertness since alumina is inert to most chemical solvents. Moreover, the ceramic material provides robustness, and hence can withstand extreme mechanical stress. In other embodiments, the tip **1000** can be fabricated from a wide variety of materials with efficacy such as metals, alloys, and plastics, as required or desired, giving due consideration to the goals of providing chemical inertness and robustness.

In one embodiment, the outer surface **1019** (**FIG. 3C**) of the tip **1000** is coated with a thin film or coating that is not only chemically inert and mechanically robust but is also hydrophobic to most fluids such as aqueous reagents, DMSO, and other common solvents. The film helps in keeping the tip **1000** dry and also proves the microfluidic or sub-microfluidic transfer. Preferably, the film comprises a wear-resistant material so that it has an enhanced lifetime. Suitable films or coatings include silicon nitride, silicon carbide, titanium nitride, among others. The film or coating can be applied by a variety of methods as plasma deposition and sputtering, among others, as is known in the art. A suitable hydrophobic coating may also be applied to selected portions of the inner surface **1021** of the tip **1000**, as needed or desired.

The tip 200 may be dimensioned in a wide variety of manners with efficacy, as required or desired, giving due consideration to the goals of providing reliable and repeatable microfluidic and sub-microfluidic transfer of fluid. In one embodiment, the tip 200 has a length of 16 mm and an internal volume of about 20 microliters (µL). In some embodiments, the inner diameter at the nozzle end of the tip 200 is in the range from about 20 to 180 microns (µm) and the outer diameter is in the range from about 50 to 400 µm or more. In other embodiments, the inner diameter at the nozzle end of the tip 200 is in the range from about 100 to 300 µm and the outer diameter is in the range from about 400 to 900 µm.

### Syringe Pump

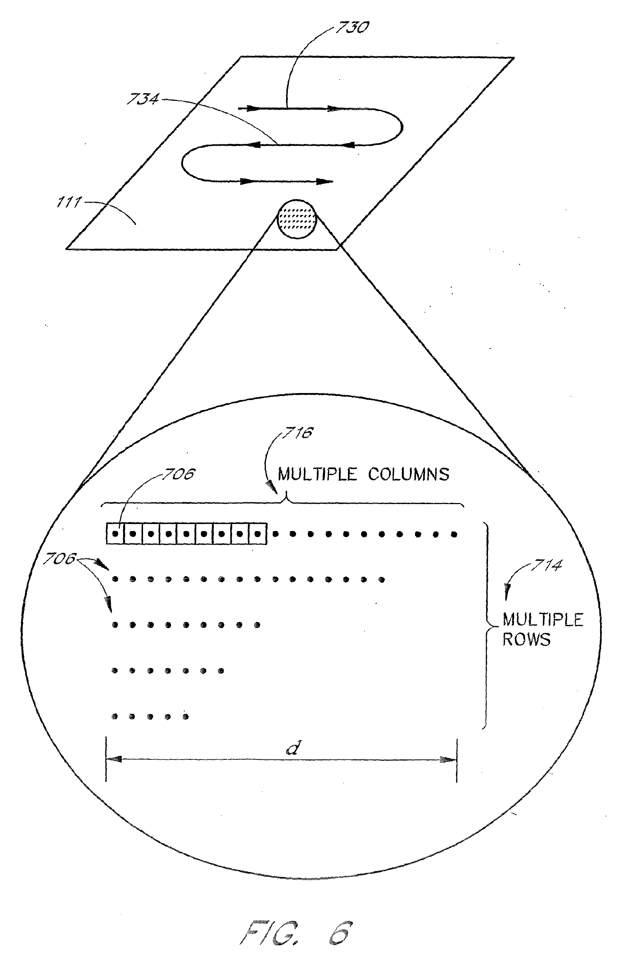

Referring in particular to **FIGS. 1** and **4,** the pump **120** is preferably a high-resolution, positive displacement syringe pump hydraulically coupled to the dispenser **128.** Alternatively, pump **120** may be any one of several varieties of commercially available pumping devices for metering precise quantities of liquid. A syringe-type pump **120,** as shown for example in **FIG. 1,** is preferred because of its convenience and commercial availability. A wide variety of other direct current fluid source means may be used, however, to achieve the benefits and advantages as disclosed herein. These may include, without limitation, rotary pumps, peristaltic pumps, squash-plate pumps, and the like, or an electronically regulated fluid current source.

As illustrated in **FIG. 4**, a suitable syringe pump **120** generally comprises a syringe housing **362** of a predetermined volume and a plunger **118** which is sealed against the syringe housing by O-rings or the like (not shown). The plunger **118** mechanically engages a plunger shaft **366** having a lead screw portion **368** adapted to thread in and out of a base Support (not shown). Those skilled in the art will readily appreciate that as the lead screw portion **368** of the plunger shaft **366** is rotated the plunger **118** will be displaced axially, forcing reagent **130** from the syringe housing **362** into the exit tube **370**. Any number of suitable motors or mechanical actuators may be used to drive the lead screw **368.** Preferably, a pump driver **142** including a stepper motor (**FIG. 1**) or other incremental or continuous actuator device is used so that the amount and/or flow rate of reagent **130** can be precisely regulated.

Several suitable syringe pumps are commercially available. One such syringe pump is the Bio-Dot CV1000 Syringe Pump Dispenser, available from BioDot, Inc. of Irvine, California. This particular syringe pump incorporates an electronically controlled stepper motor for providing precision liquid handling using a variety of syringe sizes. The CV1000 is powered by a single 24 DC volt power supply and is controlled via an industry-standard RS232 or RS485 bus interface. The syringe pump may have anywhere from 3,000-24,000 steps, although higher resolution pumps having 48,000-192,000 steps or more may also be with efficacy. Higher resolution pumps, such as piezoelectric motor driven pumps, may also be used to provide even finer resolutions as desired.

The lead screw **368 (FIG. 4)** may optionally be fitted with an optical encoder or similar device to detect any lost steps. Alternatively, the lead screw of the metering pump can be replaced with a piezoelectric slide to provide both smaller volume increments and also faster acceleration/deceleration characteristics. Multiple syringe pumps may also be used in parallel, for example, for delivering varying concentrations of reagent 130 and/or other liquids to the dispenser or for alternating dispensing operations between two or more reagents. This could have application, for instance, to ink jet printing using one or more colored inks or liquid toners.

Syringe size may vary from less than 50 microliters (µL) to 50 milliliters (mL), or more as needed. The minimum incremental displacement volume of the pump will depend on the pump resolution and syringe volume. For example, for a syringe housing volume of 50 µL and 192,000 step resolution pump the minimum incremental displacement volume will be about 0.260 nanoliters (nL). Minimum incremental displacement volumes from about 0.25 nanoliters to about tens of milliliters (mL) are preferred, although higher or lower incremental displacement volumes may also be used while still enjoying the benefits disclosed, taught or suggested herein.

Of course, a wide variety of other positive displacement or "direct current" fluid sources may also be used to achieve the benefits and advantages as disclosed herein. These may include, for example and without limitation, rotary pumps, peristaltic pumps, squash-plate pumps, pumps incorporating hydraulic or electronic feedback control and the like.

### Press Comuensation and Steady-State Pressure

In one embodiment, one or more pressure sensors **151** are provided in conjunction with the aspirate-dispense apparatuses **108 (FIG. 1), 108a (FIG. 2A), 108b (FIG. 2B)** and **108c (FIG. 2C)** to monitor the system pressure and provide diagnostic information about various fluid and flow parameters within the hydraulic system. The one or more pressure sensors **151** are provided at appropriate locations on the respective systems. In one embodiment, the pressure sensors **151** are placed intermediate the syringe pump(s) **120** and the dispenser(s) **128,** such as on the feedline **150** (see, for example, **FIG. 1).** Alternatively, or in addition, the pressure sensor(s) **151** can be situated at the dispenser(s) **128** such as on the valve portion(s) **204.**

It should be noted that for purposes of brevity of disclosure some of the discussion here refers to a single pump-dispenser apparatus. Of course, it should be understood that this can be suitably extrapolated to include operation of the embodiments of arrays of pump-dispenser systems, for example, the systems of **FIGS. 2A** and **2B**. Moreover, and as one of ordinary skill in the art will appreciate, it is further extendable with some modifications to manifold systems, for example, the manifold dispensing system of **FIG. 2C**.

Referring in particular to **FIG. 1**, the skilled artisan will recognize that the hydraulic coupling between the pump **120** and the dispenser **128** of the aspirate-dispense system **108** provides for the situation where the input from the pump **120** exactly equals the output from the dispenser **128** under steady state conditions. Therefore, the positive displacement system uniquely determines the output volume of the system while the operational dynamics of the dispenser **128** serve to transform the output volume into ejected drop(s) having size, frequency and velocity.

It has been discovered, however, that within the system there exists an elastic compliance partly due to the compliance in the delivery tubing and other connectors and components, and partly due to gaseous air bubbles that may have precipitated from air or other gases dissolved in the system and/or source fluid. As a result of this elastic compliance, initial efforts to dispense small quantities of fluid resulted in gradually overcoming the system compliance and not in dispensing fluid or reagent. Once this elastic compliance was overcome, a steady state pressure was found to exist and complete dispensing occurred thereafter.

A discussion of the theoretical predicted behavior and theoretical flow models relating to positive displacement dispensing and aspirating systems can be found in copending U.S. Patent Application No. 09/253,123, filed February 19, 1999, International Application No. PCT/US99/03677, filed February 19, 1999, International Publication No. WO 99/42804, published August 26, 1999, both entitled METHODS FOR MICROFLUIDIC ASPIRATING AND DISPENSING, copending U.S. Patent Application No. 09/372,719, filed August 11, 1999, entitled MULTI-CHANNEL DISPENSING SYSTEM, and copending U.S. Patent Application No. 09/575,395, filed May 22, 2000, entitled STATE-VARIABLE CONTROL SYSTEM, the entirety of each one of which is hereby incorporated by reference herein.

Thus, by providing a positive displacement pump **120 (FIG. 1)** in series with a dispenser **128 (FIG. 1)** has the benefit of forcing the dispenser **128** to admit and eject a quantity and/or flow rate of reagent as determined solely by the positive displacement pump **120** for steady state operation. In essence, the syringe pump **120** acts as a forcing function for the entire system, ensuring that the desired flow rate is maintained regardless of the duty cycle, frequency or other operating parameters of the dispensing valve, such as the solenoid-actuated valve **128 (FIG. 3A)**. With such configuration and at steady state operation one does not really care what the pressure in the system is because it adjusts automatically to provide the desired flow rate by virtue of having a positive displacement or direct current fluid source as a forcing function for the entire system.

However, this does not address the situation of latent and/or transient pressure variations, such as associated with initial start-up of each dispense and aspirate function. In particular, it has been discovered that the pressure in the system is of critical concern for non-steady state operation involving aspirating or dispensing of mierofluidic quantities, typically greater than about 1 nanoliter (nL) and less than about 50 microliters (µL), of liquid reagents or other fluids. Specifically, for an aspirate function it has been discovered that a system pressure close to or below zero is preferred, while for a dispense function it has been discovered that a finite and positive predetermined steady state pressure is preferred.

The trsnsitions between various modes (aspirate, dispense, purge/wash) and/or flow rates or other operating parameters can result in pressure transients and/or undesirable latent pressure conditions within the positive displacement dispense/aspirate system. Purge and functions usually entail active dispensing in a non-target position. In some cases, when the same reagent is to be aspirated again, several aspirate-dispense cycles can be performed before executing a purge or wash function. Also, sometimes a purge function may have to be performed during a dispense function, for example, to alleviate clogging due to the precipitation of gaseous bubbles within the system and/or source fluid. Moreover, the accumulation of these bubbles can change the system compliance over time, and hence the desired optimum dispensing pressure.

For example, line **910** in **FIG. 5** illustrates transient dispense effects caused by initial start-up of a dispensing system **108 (FIG. 1)** in which no pressure compensation scheme is utilized. The x-axis **903** represents the dispense number or number of dispenses and the y-axis **902** represents the dispense volume, in nanoliters (nL) of each droplet or droplets dispensed. Line **914** in **FIG. 5** represents the target dispense volume of 100 nL.

As can be seen by the data of **FIG. 5,** the non-pressure compensated (non-steady state) dispensed volume represented by line **910** is substantially smaller than the target dispense volume of 100 nL (line **914)** since the system pressure at start-up is substantially lower than the desired steady state and/or predetermined pressure. The non-pressure compensated dispense volume (line **910**) can be lower by a factor of about ten compared to the target dispense volume (line **914**). Moreover, even after 23 dispenses (see **FIG. 5**) the dispensed volume (line **910**) is still below the target volume (line **914).**

Line **912** represents a series of about 100 nL dispenses performed in accordance with one embodiment, wherein an optimized pressurizing (300 steps of the syringe plunger **118** -- shown in **FIGS. 1** and **4**) is performed prior to dispensing, that is, with the valve 204 (**FIGS. 1** and **3A**) closed. The pressure compensation scheme provides dispense volumes (line **912**) which are in substantially close conformity with the target dispense volume (line **914**) of 100 nL. Under-pressurization (200 steps of the syringe plunger **118**), as illustrated by line **916**, can result in dispense volumes that are undesirably less than the target dispense volume **914.** Similarly, as illustrated by line **918,** over-pressurization (400 steps of the syringe plunger **118**) can result in dispense volumes that are undesirably more than the target dispense volume **914.**

Certain embodiments of pressure compensation or adjustment, for example, prior to dispense and aspirate functions, are described in copending U.S. Patent Application No. 09/253,123, filed February 19, 1999, International Application No. PCT/US99/03677, filed February 19, 1999, International Publication No. WO 99/42804, published August 26, 1999, both entitled METHODS FOR MICROFLUIDIC ASPIRATING AND DISPENSING, copending U.S. Patent Application No. 09/372,719, filed August 11, 1999, entitled MULTI-CHANNEL DISPENSING SYSTEM, and copending U.S. Patent Application No. 09/575,395, filed May 22, 2000, entitled STATE-VARIABLE CONTROL SYSTEM, the entirety of each one of which is hereby incorporated by reference herein.

In brief, to set the system pressure to a predetermined and/or steady state dispense pressure, the syringe plunger **118 (FIGS. 1** and **4)** is typically incremented (or possibly decremented) by a predetermined amount to build up (or reduce) pressure, as described above in connection with **FIG**. **5**. Similarly, to set the pressure to a predetermined and/or steady state aspirate pressure, the syringe plunger **118 (FIGS. 1** and **4**) is typically decremented (or possibly incremented) by a predetermined amount. Of course, pre-dispenses of reagent or system fluid in a waste position may be performed to raise or lower the system pressure, as needed or desired.

One or more pressure sensors, such as the pressure sensor(s) **151 (FIGS. 1, 2A, 2B** and **2C)** are used to monitor the system pressure and ensure that the correct operational pressure(s) are achieved. Any one of a number of commercially available pressure sensors may be efficaciously used. The pressure sensors **151** are preferably differential type devices.

The desired steady state dispense pressure can be estimated from flow resistances and/or prior steady state pressure measurements or transient pressure measurements. A number of parameters can affect the selection of this pressure, including the desired droplet volume and system compliance, among other fluid, flow, system and operational parameters.

Some embodiments of methods for estimating this steady state dispense pressure are described in copending U.S. Patent Application No. 09/253,123, filed February 19, 1999, International Application No. PCT/US99/03677, filed February 19, 1999, International Publication No. WO 99/42804, published August 26, 1999, both entitled METHODS FOR MICROFLUIDIC ASPIRATING AND DISPENSING, copending U.S. Patent Application No. 09/372,719, filed August 11, 1999, entitled MULTI-CHANNEL DISPENSING SYSTEM, and copending U.S. Patent Application No. 09/575,395, filed May 22, 2000, entitled STATE-VARIABLE CONTROL SYSTEM, the entirety of each one of which is hereby incorporated by reference herein.

The steady state pressure can also be estimated from previously formulated parametric tables or charts based on one or more fluid, system, flow and operational parameters. Regression analysis techniques may be used to estimate the optimum dispense pressure. Alternatively, or in addition, the dispense pressure may be predetermined for a given production set-up.

In one embodiment, the aspirate-dispense systems disclosed herein are configured to minimize the formation and accumulation of gaseous bubbles within the fluid residing in the system, and particularly in the dispensers **128** (**FIGS. 1, 2A, 2B** and **2C**), feedline **150** and manifold **109** (**FIG. 2C**). For example, to minimize bubble formation, the system components be configured such that the fluid movements within the system avoid sharp local pressure drops, and hence gaseous bubble precipitation. Additionally, the components may be configured such that none or few "dead spots" are encountered by the fluid, thereby discouraging bubble accumulation within the system. These configurations can utilize suitably tapered inner cavities or lumens within the valve portion **204,** tip **205** and/or nozzle 259 to provide relief from gaseous bubble precipitation and/or "dead spots."

In one embodiment, a suitably configured bubble trap (not shown) is provided in fluid communication with the dispenser **128** (see, for example, **FIG. 1**). The trap encourages the migration of gaseous bubbles to collect within the trap and prevents undesirable bubble accumulation within the aspirate-dispense system.

### "On-the-Fly" Operation

In one embodiment, the dispensing operation takes place on-the-fly, that is without stopping the motion of the X-Y table. To accommodate this on-the-fly dispensing without compromising accuracy, precision or repeatability, the controller **114** calculates a phase adjustment for each dispense cycle. The phase adjustment is such as to advance (or retard) the timing of the valve opening and closing so that the dispensed droplet of reagent lands at the desired location on the substrate **111** (or at a desired offset location), taking into account its anticipated trajectory.

Those skilled in the art will recognize that the magnitude of the necessary or desired phase adjustment will depend, among other things, on a number of system input and output parameters and behavioral characteristics, including the desired drop offset (if any), the vertical distance between the dispenser nozzle **205** and the surface of the substrate **111**, the velocity and/or acceleration of the dispenser **128** and/or the substrate **111** relative to one another, the velocity of the dispensed droplets, ambient temperature and humidity, and other controlled and/or uncontrolled factors. While certain of these parameters or characteristics can be isolated and studied such that their impact on the necessary phase adjustment is fairly predictable, other parameters or characteristics can neither be isolated nor predicted. It is however contemplated, that precise phase adjustments can be determined experimentally for a given production set up either before or during production such that a high degree of accuracy, precision and repeatability is attained during long production runs.

### Controller Overview

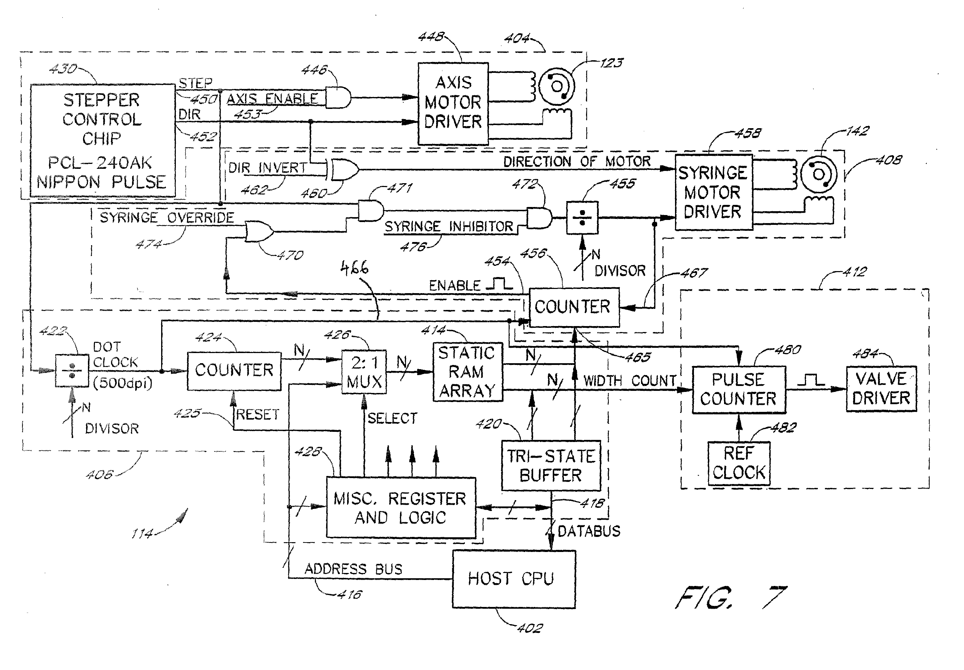

**FIG. 7** illustrates one possible embodiment of an electronic controller **114** for controlling and coordinating the operation of the aspirate-dispense apparatus **108** (**FIG. 1**). Of course, and as indicated above, this controller design is extendable and/or adaptable to control and coordinate the operations of systems comprising multiple pumps **120** and cooperating dispensers **128,** as shown for example in **FIGS. 2A** and **2C**, and/or systems comprising a manifold intermediate a single pump **120** and multiple dispensers **128**, as shown for example in **FIG. 2C.** Thus, as the skilled artisan will appreciate, the following description of the controller **114** should be construed in light of possible modifications and equivalents.

The controller **114** (**FIG. 7**) generally comprises a host CPU **402** or computer which interfaces with some form of data memory. In particular, the controller may be roughly divided into five basic subsystems: host CPU **402,** coordinate control circuitry **404**, memory and logic circuitry **406,** syringe stop count circuit **408**, and valve firing circuit **412.** Each of these subsystems are illustrated schematically by phantom lines in **FIG. 7** and are described in more detail below.

Those skilled in the art will appreciate that each subsystem works in cooperation with the other subsystems to simultaneously control the coordinate stepper motors **123, 124** (**FIG. 1**) the syringe pump motor **142** (**FIG. 1**) and the solenoid valve dispenser **128** (**FIG. 1**) to achieve the desired operation. The controller **114** is further adapted to control aspiration of fluid, perform wash/purge operations and refill the system with fluid from the reservoir **116 (FIG. 1)**, as needed or desired.

### Host CPU

A host CPU **402** serves as the central controller and also the interface between the controller **114** and the user. It allows the operator to input dispensing, aspirating, motion and/or other operational data, preferably in the form of a user-defined "Text File", as discussed in greater detail below. The CPU **402** allows the user to control, either independently or simultaneously, each aspect of the dispensing and aspirating apparatus **108** (**FIG. 1**).

In one embodiment, the host CPU **402** generally comprises a 80x86 or Pentium-based computer having a slot or bus compatible to accept a plug-in circuit board. The circuit board or "controller card" contains the four subsystems shown in **FIG. 7.** The controller card mounts or plugs into a computer bus providing data transfer and communication of instructions. The host CPU **402** also provides power to the controller card and further allows an operator to access, program and control the functions of the controller card. It is further contemplated that the host CPU **402** contains suitable computer software compatible with the host CPU and the controller card which facilitates operation of the system as described herein.

Preferably, a display device and data input means are integral with the host CPU **402** thereby providing means to input data into a memory or static RAM array **414** located on the controller card and to verify the same using the display device. As is known by those of ordinary skill in the art, a keyboard, mouse, trackball, light pen, capacitance touch screen, computer storage media are all acceptable data input means. Likewise, a color video monitor or screen provides a suitable display means.

Using a data entry device, such as a keyboard, an operator may enter data into the host CPU **402** in the form of a data array (or graphical bit map) to thereby instruct the electronic controller and dispensing apparatus of the desired reagent pattern and characteristyes. Conventional computer software may facilitate the entry of the data array (or bit map) via the host CPU **402** to the memory **414** of the controller card. As described in further detail below, preferably, a user-defined text file is used to provide input data to the controller **114 (FIG.7).**

In one embodiment, the controller card is compatible with a PC-AT clone, i.e. 80x86 or Pentium-based architecture. The controller card form factor and bus configuiafion match a PC-104 format, thereby allowing the circuit design to be quickly and inexpensively manufactured in a circuit board format. In the particular preferred embodiment shown and described above, the host CPU **402** utilizes a Motorola 68332 processor as the main microprocessor. However, as known by those skilled in the art, other computer systems and host CPU's may be used with equal advantage.

For the purposes herein, a bus generally comprises an electrical connection which facilitates the exchange of information, such as address information, data information and/or instructions. The controller **114 (FIG. 7)** includes an address bus **416** which carries address information, and a data bus **418** which carries data information. The data bus **418** and the address bus 416 connect to the memory and logic circuitry **406.** Advantageously, the data bus **418** and the address bus **416** are bi-directional thereby allowing the transfer of data between the controller card and the memory and logic circuitry **406.** Thus, the controller **114** may display status information from the controller card on the video display of the host CPU **402** or alternatively, write the information to a data file on a permanent storage medium. As is known to those of ordinary skill in the art, other types of electrical connections exist which carry electronic information and are fully contemplated for use with the embodiments disclosed, taught or suggested herein.

### Memory and Logic Circuitry

Connected to the host CPU **402 (FIG. 7)** is a network of circuitry referred to herein as the memory and logic circuitry **406.** In general, the memory and logic circuitry **406** stores the data which defines the desired dispensing and aspiration pattern and characteristics. As described in further detail below, preferably, a user-defined text file is used to provide operational data to the controller **114 (FIG. 7**). Other hard-wired logic circuitry, such as a counter **424** and multiplexer **426,** may also be used, as desired, to parse dispensing data to the other subsystems of the controller **114** or to speed up the processing of information and control data.

In particular, the memory and logic circuitry **406 (FIG. 7)** generally comprises an electronic memory **414** for storing data regarding reagent disperse, aspirate and motion parameters, a tri-state buffer **420**, a divisor **422,** an address counter **424,** a multiplexer **426** and various logic circuitry to assure proper operation of the electronic controller **114.** The tri-state buffer **420** connects to the host CPU **402** via the data bus **418** and serves to isolate the CPU from the controller card. The buffer is adapted to rapidly accept and store data to further increase data transfer speed and free the host CPU **402** of data transfer operations. In turn, the tri-state buffer **420** connects to the memory module **414,** preferably static ram array. The buffer **420** also connects to the output lines of the static ram array **414** for direct control of the syringe motor **142 (FIG. 1)** and the solenoid valve dispenser **128 (FIG. 1).**

The static ram array **414 (FIG. 7)** comprises an electronic memory device which stores the data in the form of a data array sent from host CPU **402** via the tri-state buffer **420.** The data array **414** defines the reagent dispensing and/or aspiration pattern, preferably, provided at least in part by a text file, as discussed below. Advantageously, access to each value in the data array **414** corresponds to a data array address thereby allowing access to specific data in the data array.

A 2:1 multiplexer **426** (**FIG. 7**) connects via the address bus **416** to the host CPU **402.** The 2:1 multiplexer **426** allows the operator to select which of the two inputs pass to the output. The multiplexer **426** has two inputs: a first input which connects to the output of the counter **424** and a second input which connects to the address bus **416.** In one embodiment, the multiplexer 426 provides a data array address from the host CPU **402** or, during steady state operation, from the output of the memory and logic circuitry counter **424**. Those skilled in the art will recognize that when the multiplexer **426** passes the counter output to the static RAM array **414,** the address increments automatically by way of a stepper control chip output. The output of the stepper control chip **430** advantageously serves as the main clock for the controller and thereby synchronizes operation of the system **108.** A more detailed discussion of the stepper control chip **430** is provided below.

The counter output **424 (FIG. 7)** provides one of the two inputs to the multiplexer **426**. As known by those of ordinary skill in the art, a counter **424** comprises digital logic circuit which records input pulses to produce a binary word that increases or decreases in value by a predetermined number (preferably 1) upon each input pulse. This binary word provides the next address for retrieving data from the data array and/or directly from a user-defined text file. Thus, the counter **424** operates to increment the address of the data array **414.** The counter **424** is preferably a resettable circuit and a reset line **425** is provided from the miscellaneous register and logic **428** to reset the counter **424**. The counter **424** may also be reset either automatically or manually via an interrupt (not shown) from the host CPU **402.**

The output of divisor circuitry **422 (FIG. 7)** provides input to the counter **424.** The divisor **422** provides an output after receiving N number of input pulses, where N is the number of input pulses required to trigger an output pulse. If desired, the divisor **422** can be user adjustable so that the value for N may be set by the operator. Thus, the resolution of the dispensing apparatus may be controlled by the number of pulses output by the stepper control chip **430** and the value assigned to N. As known by those of ordinary skill in the art, a divisor **422** can readily be implemented using a form of a counter circuit wherein the counter circuit outputs a pulse upon receipt of a certain number of input pulses. The input to the divisor **422** is the main clock signal provided by the stepper control chip **430.** The divisor circuit **422** also provides output to the syringe stop count circuit **408** and the valve firing circuit **412,** described below.

Dual output lines from the static ram array **414 (FIG. 7)** connect to each of the syringe stop count circuit **408** and the valve single shot circuit **412,** both of which are described in more detail below. Those skilled in the art will appreciate that the output of the static ram array **414** defines the desired syringe motor increment and the valve pulse duration and is sequentially incremented by the address counter input.

To facilitate operation, miscellaneous registers and logic, shown at step or block **428,** are integral with the above described componentry. As known by those of ordinary skill in the art, various logic circuitry and storage registers **428** are interspersed with the componentry described herein as appropriate. Alternatively, much of the electronic hardware described herein could be embodied through the use of suitable software, as desired or appropriate.

### Coordinate Control Circuitry

Coordinate control circuitry **404 (FIG. 7)** moves the dispensing head **128 (FIG. 1)** to each desired and/or predetermined location. While **FIG. 7** only shows circuitry for X axis motion control, those skilled in the art will readily appreciate that Y axis motor control is also contemplated in embodiments of the invention to facilitate operation with an X-Y table. In another embodiment, the controller **114** may also incorporate Z axis motion to achieve compatibility with an X-Y-Z table. This provides additional control of the system by providing means to vary the distance between the dispensing head **128** and the substrate **111 (FIG. 1)**. Also, one of both of the dispenser **128** and substrate may be movable in the X, X-Y or X-Y-Z. Furthermore, as indicated above, relative movement may be provided for the embodiments of **FIGS. 2A-2C.**

The coordinate control circuitry **404 (FIG. 7)** generally comprises a stepper control chip **430,** control logic **446** and an axis motor driver **448.** As discussed in greater detail below, the coordinate control circuitry **404** provides input to the divisor **422** of the memory and logic circuitry **406.** The coordinate control circuitry **404** also provides control of an axis stepper motor **123** (**FIG. 1**) and input to the syringe stop count circuit **408** and the valve firing circuit **412.**

The stepper control chip **430 (FIG. 7)** generates a constant step pulse output. This step pulse output serves dual purposes. First, the step pulse provides a control signal to the axis motor drive 443 which in turn powers the stepper motor **123.** The stepper motor controls the dispensing head position along the X-axis. Second, the step pulse, or a divided form thereof propagates throughout the system as the main clock pulse. The stepper control chip 430 is of the type often used to operate stepper motors. One embodiment described herein utilizes a Nippon Pulse PCL-240AK available from the Nippon Pulse Motor Co., Ltd, although other stepper motor control chips are currently available and are operational with the embodiments disclosed herein.

Moving now in more detail to the coordinate control circuitry, the stepper control chip **430 (FIG. 7)** has two outputs: a step pulse output **450** and a direction signal output **452.** The first output, the step pulse output **450,** connects to at least one logic device to regulate the operation of the step motor **123.** In this embodiment the logic device comprise a dual-input AND gate **446.** One input of the AND gate **446** connects to the step pulse output **450** from the stepper control chip **430.** An axis enable line **453** connects to the other input of the AND gate **446.** The axis enable signal, when high, allows the step pulse output to propagate to the output of the AND gate **446.** The memory and logic circuitry **406,** described above, provides the axis enable signal to the AND gate **446** thereby providing means to cease movement of the dispensing head **128,** either automatically via the data array or manually via the host CPU **402.**

The second output of the stepper control chip **430** (**FIG. 7**), the motor direction control signal, is provided on a direction control line **452** to control the direction of the X axis stepper motor **123.** The motor direction line **452,** which carries the motor direction signal, connects directly to the axis motor driver **448**. The stepper motor direction signal is also fed to the syringe stop count circuit **408,** described in more detail below. Changing the state or logic level of the direction line, changes the direction of the X-axis stepper motor **123.** This advantageously provides for bi-directional printing which, as noted above, speeds dispensing operation.

An axis motor driver **448 (FIG. 7)** receives the output from the AND gate **446** and the stepper control chip **430.** The axis motor driver 440 is an electronic device controlled by normal logic level signals which correlates the logic level input signals into a specialized output having increased current sourcing ability to drive a stepper motor. As is known by those of ordinary skill in the art many different axis motor drivers are available which satisfy the needs of the current invention.

The output of the axis motor driver **448 (FIG. 7)** is provided to the X-axis stepper motor **123 (FIG. 1).** The stepper motor **123** controls movement of the dispensing head **128** in relation to the substrate **111 (FIG. 1).** Preferably, the stepper control chip **430,** axis motor driver 448, and stepper motor 123 have resolution of greater than about a hundred steps per linear inch, more preferably greater than about five hundred steps per linear inch, even most preferably greater than about seven hundred fifty steps per linear inch.

### Syringe Stop Count Circuit

The syringe stop count circuit **408 (FIG. 7)** controls the syringe pump **120 (FIG. 1)** based on signals received from the stepper control chip **430** and the memory and logic circuitry **406.** The syringe stop count circuit **408** comprises control logic, a syringe circuit divisor **455,** a syringe circuit counter **456,** and a syringe motor driver **458.** Advantageously, the syringe stop count circuit **408** is synchronized with the other subsystems of the controller **114** to ensure precise and synchronized control over syringe motor driver **458.**

The control logic provides means to obtain manual control over the syringe and includes a direction control NOR gate **460** which has two inputs, the first of which connects to the direction line **452** of the stepper control chip **430** and the second of which connects to a syringe direction invert line **462**. The syringe direction invert line **462**, although not shown, connects to the memory and logic circuitry **406** and is discussed in more detail below. The output of the direction control NOR gate **460** connects to the syringe motor driver **458**, described below. Based on the signals entering the NOR gate **460** the syringe motor driver can be made to charge the direction of the syringe stepper motor **142** (**FIG. 1**). Advantageously, the syringe motor **142** is bi-directional thereby providing means to draw liquid into the syringe or expel liquid from the syringe **120.** The syringe direction invert signal may be provided, for example, in accordance with data contained in the static ram array **414** and thus may operate based on initial programming.

If the direction of the stepper chip **430 (FIG. 7)** reverses direction, then the motion of the syringe plunger **118 (FIG. 1)** also reverses direction. However, the values in the static ram array **414** may exist to ensure bi-directional printing, that is, the level of the signal on the direction invert line **462** changes when the direction of the stepper motor **123** changes.

Preferably, aspiration, dispensing and filling of the syringe **120** are all automatically controlled via the controller **114**, associated software and user-defined inputs. Optionally, an operator may manually control the direction of the syringe **120 (FIG. 1)** through the host CPU **402** via the direction invert line **462.** Manual control over the syringe **120 (FIG. 1)** provides the operator with the ability to aspirate, dispense or fill the syringe **120** on a non-automated basis, as needed or desired.

The syringe stop count circuit **408 (FIG. 7)** also contains a syringe circuit counter **456.** The syringe circuit counter **456** determines the number of pulses to be provided to the syringe motor during a discreet dispense operation. In the illustrated embodiment, the syringe circuit counter **456** has three inputs **465, 466, 467** and an output **464.** The first input **465** accepts the syringe increment value from the static RAM array 414. The syringe increment value is the number of steps the syringe motor **142 (FIG. 1)** will move at a particular target location. The second input **466** accepts the output of the divisor 422 from the memory and logic circuitry divisor **422.** The divisor output acts as the main clock for the syringe circuitry counter **456** thereby synchronizing the counter's output to each rising pulse of the divisor output. The counter's third input **467** is a tap to monitor the pulses arriving at the syringe motor driver **458** and thereby count down the value at the counter. Thus, the syringe circuit counter **456** obtains a value from the data array, in this case the number of steps the syringe **120** is to increment, and in response to each upward edge of the main clock signal, provides an equal number of pulses to an output **454**.

The output **454** (**FIG. 7**) of the counter **456** feeds to the three part logic network of the syringe stop count circuit **408**. In general, the logic network synchronizes operation of the positive displacement pump **120** (**FIG. 1**) with the position stepper motor **123** and provides manual control, as needed, for a user to inhibit operation of the syringe. The logic network comprises a syringe override OR gate **470,** an AND gate **471,** and a syringe inhibitor AND gate **472.** The syringe override OR **470** gate has a first input connected to the counter output **454** described above. The syringe override OR gate **470** has a second input connected to a syringe override signal line **474,** which provides means to manually operate the syringe motor **142.** The data array in the static RAM array **414** may provide the syringe override signal, or alternatively, in manual control mode, the host CPU **402** may provide the syringe override signal via the memory and logic circuitry **406.**

The output of the syringe override OR gate **470 (FIG. 7)** connects to a first input of an AND gate **471.** The second input of the AND gate connects directly to the output of the stepper control chip **430.** The AND gate **471** allows for syringe motor signal propagation from either the syringe override signal or, during automatic operation based on the values from the static ram array **414.** The output of the AND gate **471** connects to a first input of a syringe inhibit AND gate **472.** The second input to the syringe inhibit AND gate **472** comprises a syringe inhibit signal line 476, which provides means to cease operation of the syringe motor **142.** The data array in the static RAM array **414** provides the syringe inhibit signal, or when the dispenser is under manual control, the host CPU **402** provides the syringe inhibit signal.

The output of the syringe inhibit AND gate **472 (FIG. 7)** enters a syringe circuitry divisor **455.** The divisor **455** is substantially identical to the divisor described above in the memory and logic circuitry **406,** and thus is not described in detail again. The divisor **455** provides an output pulse for every N number of input pulses, when N determines the resolution of the system. The divisor **455** provides its output to the syringe circuitry counter **467** and the input of the syringe motor driver **458.**

The syringe motor driver **458 (FIG. 7)** operates substantially in accordance with the principles of the previously described axis motor driver **448** of the coordinate control circuitry **404** and therefore will not be repeated here.

### Valve Firing Circuit

Valve firing circuit **412 (FIG. 7)** controls and synchronizes operation of the dispensing head **128 (FIG. 1)** in coordination with the remaining subsystems of the dispensing apparatus **108 (FIG. 1).** In this embodiment the valve firing circuit **412** comprises a valve pulse counter **480,** a reference clock **482,** and a valve driver **484.** The valve firing circuit **412** obtains two input signals. The first input, from the memory and logic circuitry **406**, comprises a valve pulse value from the static RAM array **414.** The valve pulse value is the time or number of click cycles the valve is to remain open. The second input comprises the main clock pulse from the output of the memory and logic circuitry divisor **422.** The main clock pulse serves to synchronize operation of the valve with the rest of the dispensing apparatus. The pulse counter **480** is responsible for providing the proper pulse duration to the valve driver **484.**

Advantageously the valve firing circuitry includes a reference clock. The reference clock generates pulses of constant time duration. These pulses of constant time duration provide a known time reference on which the counter may base its operation. Since the valve pulse duration is in units of time, the reference clock **482** ensures accurate operation of the dispensing head or dispenser **128 (FIGS.1** and **3A).**

The output of the pulse counter **480 (FIG. 7)** connects to a valve driver **484.** The valve driver **484** receives the logic level input from the pulse counter **480** and provides a driving voltage for driving a solenoid or other such device to open and close the valve **204** of the solenoid valve dispenser **128 (FIG. 3A**). Accordingly, the valve driver 484 electrically communicates with the solenoid valve dispenser **128** and solenoid **202** of the valve **203.**

### Software/Flow Charts Overview

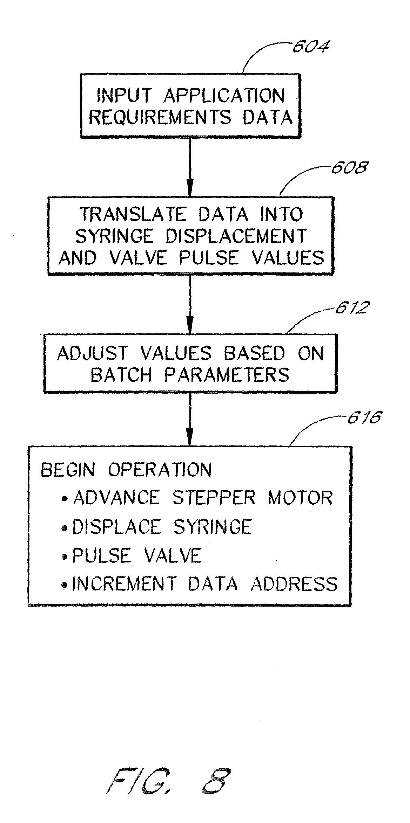

**FIG. 8** is a simplified flow chart, in accordance with one embodiment, illustrating the basic operation of a dispenser apparatus and control system as described herein. The first step **604** typically comprises providing the reagent pattern and application requirements/parameters to the controller. As mentioned above, and discussed further below, the data is preferably provided or entered in the form of a text file, for example, in table format. Optionally, the data may be in graphic form in a bit map graphic file. The reagent application requirements define the location and amount and the application characteristics of the dispensing (and/or aspiration) process. This may be inputted by the operator via a keyboard or graphic interface of it may be loaded directly from a storage media, such as magnetic disk or tape. At the next step **608** the system translates the application requirements into syringe displacement and valve pulse duration values and anges the calculated values in a data array.

An example of the type of data contained in the data array is shown below as TABLE 1. For example, the data array may contain data values which govern the manner in which reagent is dispensed at a particular target location. Thus, each data address corresponds to a target location and consequently each target location has a plurality of corresponding values which define the dispensing characteristics for that location. Of course, for the embodiments with multiple dispensers, similar tables are created for each dispenser.

**TABLE 1**

| DATA ADDRESS | 1 | 2 | 3 | 4 | 5 | 6 | 7 | 8 | ... |
|---|---|---|---|---|---|---|---|---|---|
| SYRINGE INCREMENT VALUE | | | | | | | | | |
| VALVE PULSE VALUE | | | | | | | | | |
| X AXIS DIRECTION | | | | | | | | | |
| Y AXIS DIRECTION | | | | | | | | | |
| X AXIS VELOCITY COMPENSATION | | | | | | | | | |
| Y AXIS VELOCITY COMPENSATION | | | | | | | | | |
| SYRINGE DIRECTION INVERT | | | | | | | | | |
| SYRINGE OVERRIDE | | | | | | | | | |
| SYRINGE INHIBIT | | | | | | | | | |
| VALVE OVERRIDE | | | | | | | | | |
| PULSE INHIBIT | | | | | | | | | |
| REAGENT TEMPERATURE COMPENSATION | | | | | | | | | |
| REAGENT VISCOSITY COMPENSATION | | | | | | | | | |

The syringe displacement value and the valve pulse value for each dispense location corresponds to an address in the data array. Thus, as the controller **114 (FIG. 1)** moves the dispensing head **128** across the substrate **111,** the address in the data array is sequentially incremented thereby progressing through the values in the data array. This provides precise control over the amount of reagent and the manner in which the reagent is provided to each location on the substrate **111.** In one embodiment, all of this occurs simultaneously ("on-the-fly") with the continuous motion of the dispensing head as it travels across the substrate. In another embodiment, a "move-stop-dispense" approach is utilized. These and other different modes of operation are discussed in greater detail below.

Additional data manipulation may occur at step **612** in order to incorporate particular dispensing requirements, parameters or adjustments to aid in the reagent dispensing or aspirating process. Adjustments may include estimated adjustments for fluid viscosity, fluid temperature, dispensing apparatus configuration, substrate composition and other parameters. Adjustments may also include compensation for the velocity of dispensing head for X-axis and/or Y-axis travel. For example, in "on-the-fly" mode, if the dispensing head is moving at a high velocity, the pulsing of the valve and syringe must be phased slightly ahead of the desired dispensing location in order to hit the desired target area given the anticipated trajectory. Likewise, a more viscous liquid may require additional phase adjustments or an increase in the valve pulse time and the syringe increment distance so that the proper amount of reagent exits the valve.

Many of these adjustments may be determined through empirical studies and/or experimentally for a given reagent or production set-up. For example, rough adjustments can be made to the dispense data based on known or determined parametric equations or look-up tables in order to adjust for temperature, viscosity, height or speed of the dispensing head, etc. Finer adjustments can then be made experimentally for a given production set up. This can be done, for example, by programming the dispensing apparatus to dispense known patterns of crossing or parallel lines, target patterns and/or the like, at particular locations on the substrate. By inspecting the resulting patterns, certain adjustments, such as phase lead or lag, can be made to the dispense data to compensate for noted errors. The experiment can be repeated as many times as needed. Optionally, sensors may be provided, such as temperature probes, viscosity sensing devices or other sensor devices, in order to provide real time automated feedback and adjustment of the dispenser.

In one embodiment, the controller **114** further comprises or is interfaced with a Finite State Machine (FSM) controller to provide suitable state-variable automated feedback control. Certain embodiments of a FSM controller are disclosed in copending U.S. Patent Application No. 09/575,395, filed May 22, 2000, entitled STATE-VARLABLE CONTROL SYSTEM, the entirety of which is hereby incorporated by reference herein.

Finally, at step **616,** the controller aligns the reagent dispensing head in its starting position. When the dispensing apparatus begins operation, the dispensing head **128** traverses the substrate. Concurrently, the controller **114 (FIG. 1)** increments the syringe **120 (FIG. 1),** pulses the solenoid valve dispenser **128** (**FIGS. 1** and **3A**) and successively increments the data array address to provide precision reagent dispensing.

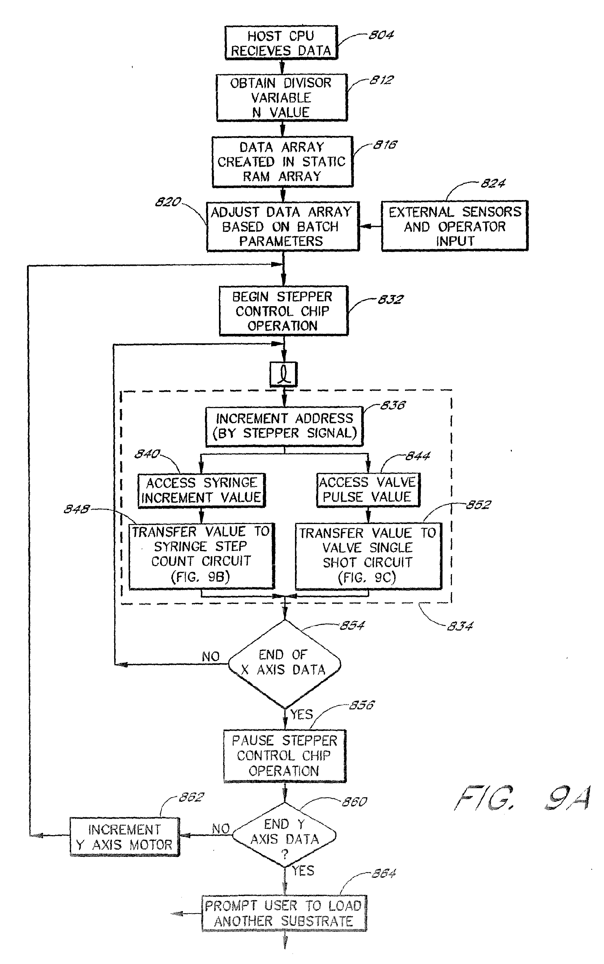

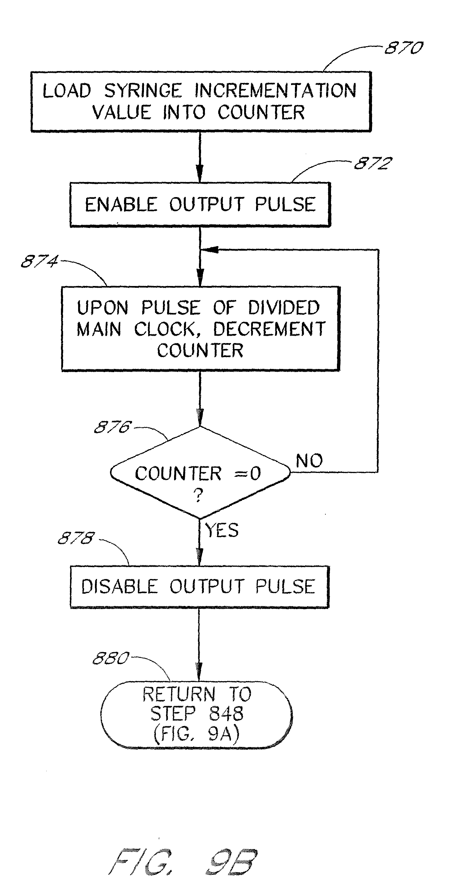

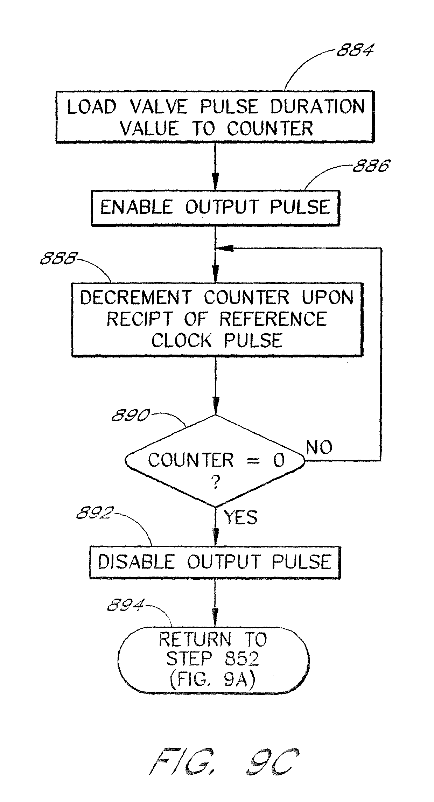

**FIG. 9A** is a flow chart illustrating, in more detail, one preferred dispensing mode of operation of a dispenser apparatus in accordance with one embodiment. At step 804, the host CPU **402 (FIG. 7)** receives data which governs the dispensing for a particular reagent and dispensing operation. A keyboard, hard drive, diskette, CD-ROM, or other data entry device may provide this information to the host CPU 402. The host CPU 402 or controller **114** also receives the value by which the main clock signal will be divided (represented above by the letter N), step 812. This generally determines the resolution of the dispensing operation in terms of the number of addressable target areas per linear distance "d".

At step **816 (FIG. 9A)** the host CPU **402** transfers the dispensing data to the static RAM array **414 (FIG. 7)** of the electronic controller. The host CPU **402** in conjunction with the static RAM array **414** places the data into a data array. The data array contains the dispensing data for each target location **706 (FIG. 6)** and is accessed via a data address location. The data array may also contain specific control information such as syringe inhibit, syringe override, valve inhibit, valve override and stepper motor direction, if such information is applicable, and/or various adjustments.

At step **824 (FIG. 9A),** the system controller **114** monitors the external sensors and/or operator input. Monitoring the external sensors may reveal additional information such as fluid viscosity and/or temperature. Based on the data from the external sensors and any final changes from the operator, the controller **114** adjusts the data array at step 820. For example, if the reagent is determined to be of higher than normal temperature, the valve duly cycle may be adjusted downward to ensure the proper amount of reagent is expelled.

At step **832 (FIG. 9A)**, the stepper control chip **430 (FIG. 7)** begins operation by outputting a series of pulses. The stepper control chip **430,** or some other equivalent output device provides a pulse to the X axis driver **448 (FIG. 7)** thereby actuating the X-axis stepper motor **123 (FIG. 1)** which continuously moves the dispensing head **128 (FIG. 1)** across the substrate **111.** In this embodiment the dispensing head **128 (FIG. 1),** assumes a site of continual steady-state motion because of the high definition of the steps. In this particular embodiment the divided stepper control chip output pulses serve as the main clock for the controller **114** of **FIG. 7.** However, other types of system synchronizers exist and are known by those of ordinary skill in the art. For example, if the invention claimed herein is embodied using computer software, the main computer clock or a divided version thereof may serve as the synchronizing signal.

Next the operation of the controller **114** branches and loops, as represented by the section **834 (FIG. 9A)** enclosed within the dashed line. Within the loop, the system performs several functions simultaneously, namely moving of the dispensing head **128,** incrementing the syringe **120**, and opening/closing the valve **204 (FIGS. 1** and **3A)**. To accomplish this task the output of the stepper chip **430 (FIG. 7)** increments the address of the data array at which data is stored, step **836**. This provides for automated and sequential access to the data values in the data array. Desirably, the data in the data array may be arranged to cause the system **108** to dispense reagent **130** in a desired pattern, be it sequential or non-sequential, contiguous or non-contiguous. Thus, the dispensing head 128 would only dispense reagent at the specific target locations on the substrate **111** indicated by the dispense data contained in the data array.

The multiplexer **426 (FIG. 7)** and miscellaneous registers and logic **(FIG. 7)** access the syringe increment value **840** and the valve pulse value **844**. These values are stored in the static ram array **414 (FIG. 7)** and define how the syringe **120** will move and how long the valve **204 (FIG. 3A)** will remain open for a particular target location **706 (FIG. 6).** The syringe increment value is then transferred to a syringe stop count circuit, step **848**. Simultaneously, the valve pulse value is transferred to a valve firing circuit, step **852**. The sub-routines performed by these circuits control the operation of the syringe **120** and valve **128** (both shown in **FIG. 1)** respectively. The operation of the syringe stop count circuit **848** and the valve firing circuit 852 are described below in more detail.

After the operation of the syringe stop count circuit **848** and the valve firing circuit **852,** the controller **114** queries for additional X axis data at step **854.** If additional X axis data exists the system returns to step **836** to increment the address of the data array and repeat the above-described process. Conversely, if no additional data exist for a particular row, the controller **114** pauses the stepper control chip output, step **856,** and queries whether additional rows of reagent **130** need to be dispensed, step **860.** If data corresponding to additional rows exists in the data array, then the system increments the Y axis motor to thereby advance the dispensing head **128 (FIG. 1)** one row, step **862,** and returns to step 828 to dispense another row of reagent **130.**

If no additional data items exist, i.e. the last X location on the last row has been dispensed, then the controller **114** stops operation. The operator may then load another substrate **111,** step **864,** and repeat the dispensing process or input another dispensing pattern via the host CPU **402.** Alternatively, the dispensing apparatus **108 (FIG. 1),** if equipped with an automatic substrate feed (not shown), may automatically load another substrate **111** upon completion of the process.

**FIG. 9B** illustrates, in more detail, the operation of the syringe stop count circuit **408 (FIG. 7)** in accordance with one embodiment. The syringe stop count circuit **408,** shown in hardware in **FIG. 7**, controls the operation of the syringe **120** based on the values in the data array and the operation of the rest of the controller **114.** In operation, the syringe increment value, obtained from the data array, loads into the syringe counter **456 (FIG. 7)**, step **870.** If the syringe increment value is a non-zero value, the output of the counter **456** goes high to thereby enable the operation of the syringe driver, step **872.** Each clock pulse of the divided stepper chip output **450 (FIG. 7)** simultaneously increments the syringe **120** and decrements the counter **456,** step **874.** In this repeating fashion, the syringe plunger **118** (**FIG. 1**) moves or advances to thereby increase the pressure in the line **150** (**FIG. 1**).

At step **876** (**FIG. 9B**) the controller or host CPU queries the status of the counter **456.** If the value of the counter has not reached zero, then the syringe stop count circuit 408 **(FIG. 7)** maintains the state of the counter output, in one embodiment high or enabled. As a result, the syringe **120** increments on the next divided main clock pulse and the counter decrements, step **874.** Alternatively, if the query step determines that the counter value is zero, the output of the counter **456** is disabled, step **878,** which in turn halts the advancement of the syringe **120.** This completes the operation of the syringe for a particular target location. The operation of the controller **114** returns to step **848** (**FIG. 9A**), step **880.** The above described process repeats for each target location **706 (FIG. 6)** on the substrate **111**.

**FIG. 9C** illustrates, in more detail, the operation of the valve firing circuit **412 (FIG. 7)** in accordance with one embodiment. The dashed line **412,** valve firing circuit **412,** shown in hardware in **FIG. 7**, comprises the hardware enclosed by the dashed line. In operation, the transferred valve pulse value loads into the valve counter **480 (FIG. 7),** step **884**. If the valve pulse duration is a non-zero value, the output of the counter **480** goes high to thereby enable the operation of the valve driver **484 (FIG. 7),** shown at step **886**.

In one embodiment, the valve pulse counter **480** (**FIG. 7**) operates in relation to a reference clock **482** (**FIG. 7**) to establish the reference period for the valve operation in units of time instead of number of pulses of the stepper control chip **430** (**FIG. 7**). Thus, the data array provides information on how many reference clock pulses the valve **204** (**FIG. 3A)** will remain open, which corresponds to a period of time and not the distance traveled by the X-axis stepper motor **123 (FIG. 1)**. For example, if each clock pulse lasts 0.001 seconds, then programming the valve to remain open for 100 reference clock pulses will result in the valve remaining open for 0. seconds or 1/10 of a second.

The valve firing circuit **412 (FIG. 7)** decrements the counter **480** on the next rising edge of the reference clock, step **888 (FIG. 9C)**. This completes one clock cycle. Next, at step **890,** a query is made regarding the status of the counter. If the value of the counter **480** is non-zero, the valve firing circuit **412** maintains the state of the counter output, that is, high or valve open. As a result, the valve **204 (FIGS. 1 and 3A)** remains open and the counter **480** decrements on the next rising edge of the reference clock pulse, step **888.**

Alternatively, if the query step **890 (FIG. 9C)** determines that the counter value equals zero, the output of the counter **480 (FIG. 7)** is disabled, step **892**, which in turn disables the driver **484 (FIG. 7)** and causes the valve **204** to close. This completes the valve operation for a particular target location **706.** The operation of the system progresses in the fashion described in **FIG. 9A,** step **894**. The above described process repeats for each target location **706 (FIG. 6)** on substrate **111.**

In one embodiment, the invention may be configured to perform selective reagent dispensing operations. For example, instead of configuring the system **108** for continuous linear motion of the dispensing head **128,** the system can also provide for random access addressing of substrate target areas. Thus, the dispensing apparatus **108** could, for example, dispense reagent at the upper right hand corner of a substrate **111** and then move to the lower left hand corner and dispense reagent without necessarily dispensing at any locations therebetween. The order and pattern of dispensing is preferably automatically controlled via the data array or optionally manually through the host CPU **402 (FIG. 7).** An operator would configure the data array values to create a desired pattern of dispensed reagent **130**. This pattern could provide, for example, a symbolic or textual representation indicating the test result, or form a visible brand or trade name on the substrate **111.**

Optionally, one embodiment of the invention may be configured, for example, in a software based system where one or more EPROMs could store the computer code. Each EPROM could connect to one or more microprocessors each of which would connect to one or more drivers to provide the appropriate signal to each electro-mechanical device.

A dispensing apparatus constructed in accordance with one embodiment may also be mounted on any one of a number of other types of membrane placement and handling modules. Such dispensing platforms may be microprocessor-based and are preferably controlled through an industry standard input/output I-O controller (not shown), such as an RS232 interface. The dispensing apparatus may also be well suited for use with individual membrane strip handling modules and continuous reel-to-reel handling modules. For example, an individual membrane strip module may incorporate only X-axis table motion for dispensing. The reel-to-reel platform may incorporate a constant-speed membrane transport with optional mountings attached for motion of one or more dispensers. A drying oven (not shown) may also be used with any of the described embodiments to increase production throughput, as desired.

### Use and Operation (Some Examples)

**FIG. 6** shows a schematic view of a substrate **111**, including an enlarged view illustrating how individual "dots" or droplets 702 might preferably be arranged on the substrate **111.** Conceptually, the substrate **111** is divided into rows (X-axis) **714** and columns (Y axis) **716** having a predetermined resolution in terms of a number of addressable target areas **706** per linear distance "d". Thus, a linear distance d equal to one inch (2.54 cm) of substrate **111** traveling along one axis may, for example, contain 100-500 or more individually addressable target locations. Each target location would correspond to a number of X-axis stepper motor increments and a number of Y-axis stepper motor increments relative to a predetermined "zero" position.

Because each target location **706** has a unique address, a controller is able to precisely select particular target location(s) in which to to dispense predetermined quantities or droplets of reagent. **FIG. 6** illustrates one preferred pattern of dispensing motion in relation to the substrate **111**. This pattern advantageously decreases the time to complete a particular dispensing operation. Upon executing a first linear pass **730** along a first row, the dispensing head reverses direction and executes a second pass **734** along an adjacent second row. Such bi-directional dispensing advantageously decreases the time required to complete a dispensing operation in comparison to a unidirectional dispensing operation. It is also envisioned that for non-sequential or intermittent dispensing the controller would speed operation by dispatching the dispensing head directly to or adjacent the next desired target location without necessarily completing each successive pass or each intervening row.

### Example I - Programmed Line Mode

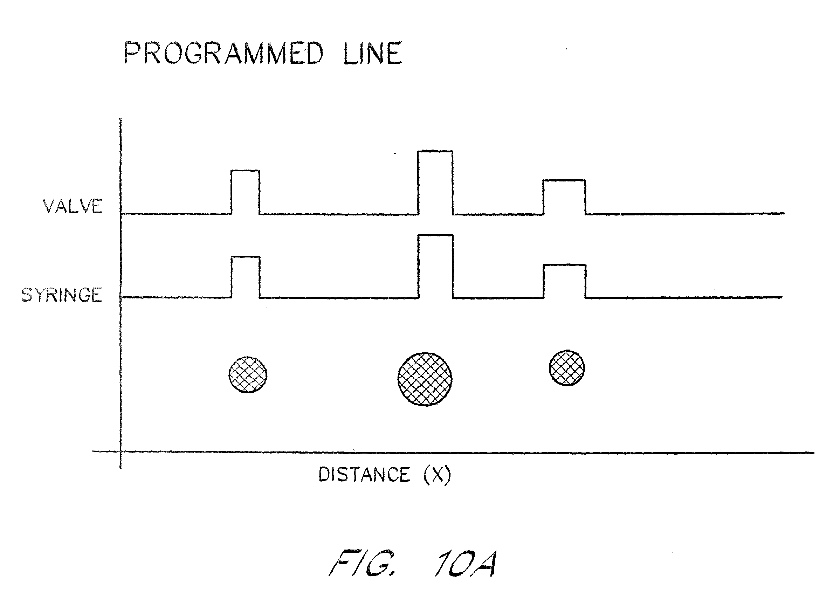

**FIG. 10A** is a schematic drawing illustrating a programmed line mode of dispense operation in accordance with one embodiment of the invention. In this mode, individual dots of the same or different amounts of fluid may be dispensed at different positions along a linear or non-linear path. The individual dots may or may not be colinear or evenly spaced, as desired. They may be spaced or offset from one another by a desired amount of spacing. This mode of operation may be useful, for example, for creating custom dot array patterns on a membrane or glass slide.

### Example 2 - Synchronized Line Mode

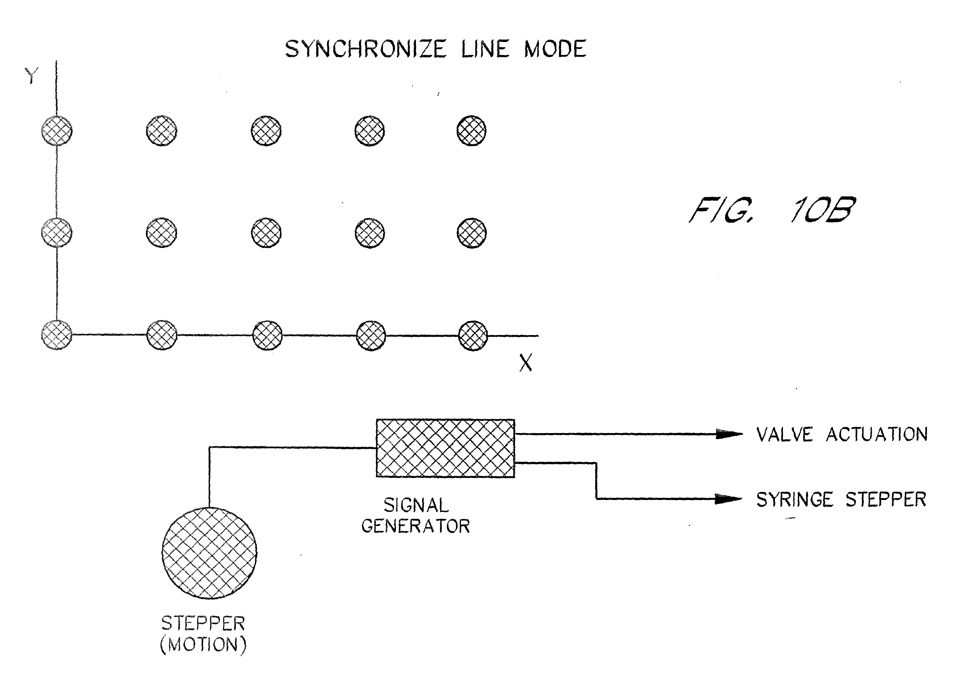

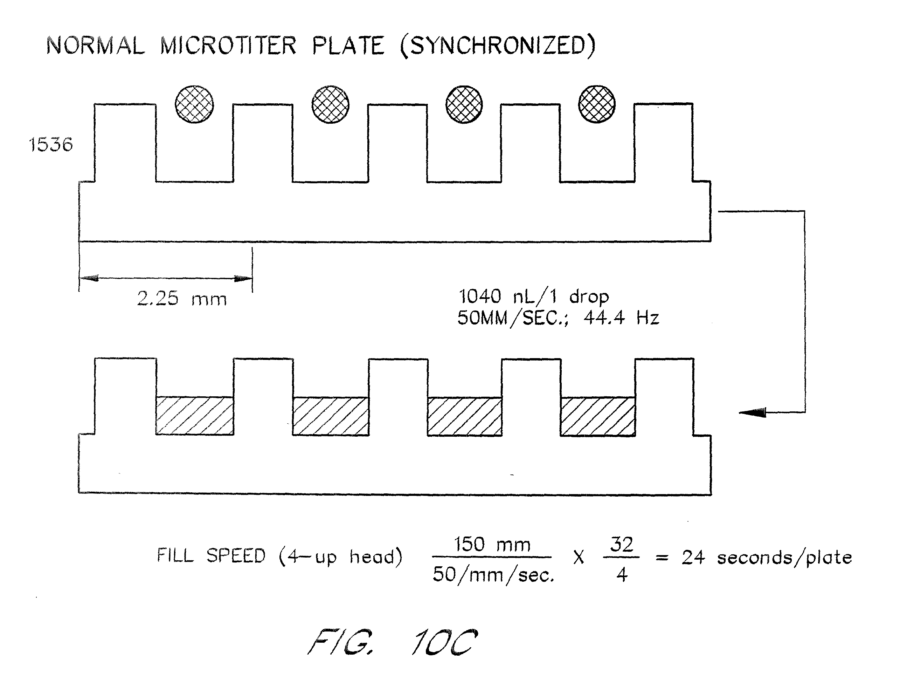

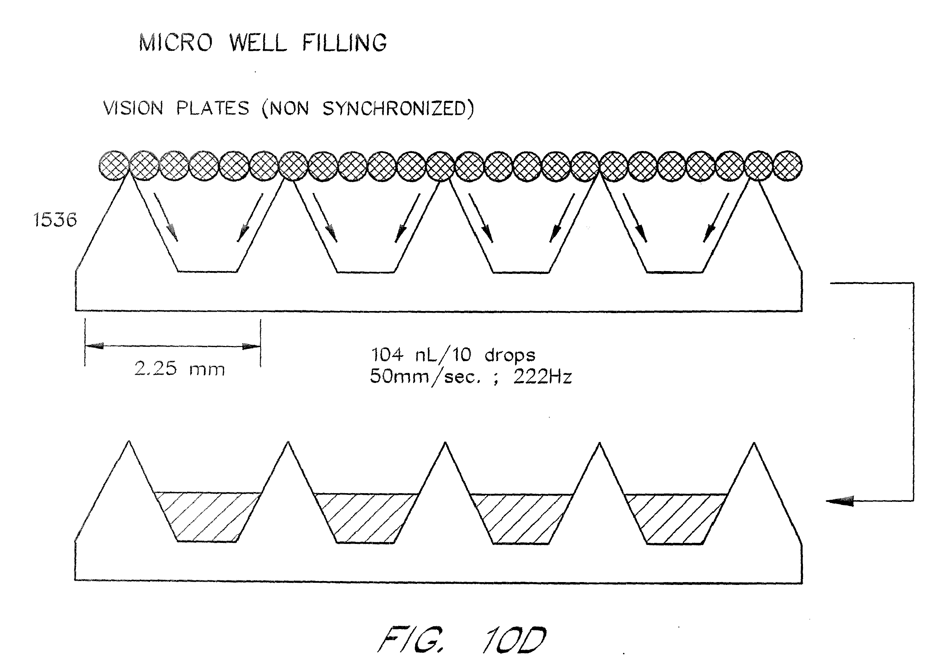

**FIG. 10B** is a schematic drawing illustrating a synchronized mode of line dispense operation in accordance with one embodiment of the invention, such as for creating high-density dot arrays on a membrane or glass slide. This mode of dispense operation is particularly suited for dispensing reagent or other fluids into a conventional well plate array, such as illustrated in **FIG. 10C,** using either a single or multi-head dispenser. For example, a standard 96-well (8 x 12) well plate may be filled using a multi-head dispenser having a 1 x 8 dispense head array. The dispenser would dispense 8 parallel lines of 12 drops each with a spacing of 9 mm between drops and a line length of 99 mm. For a 1536-well (32 x 48) well plate array the same dispenser could be used to dispense 8 parallel lines of 48 drops each with a spacing of 2.25 mm between drops and a line length of 105.75 mm. The line pattern would be repeated 4 times to fill the well plate.

The same dispense mode could also be used to dispense droplet patterns onto an electronic biosensor array. These are usually fabricated using printed arrays of sensors or electrodes on a substrate. In this case the reagent is dispensed so as to match the sensor pattern. Again this can be done using a line mode similar to the case of the conventional micro-well plate as described above.

### Example 3 - Non-synchronized Line Mode

**FIG. 10D** is a schematic drawing illustrating a non-synchronized mode of line dispense operation in accordance with one embodiment of the invention such as for creating continuous uniform lines on a flat substrate or for filling wells in a vision micro-well plate. A vision micro-well plate uses wells having an angular apex that separates each well. When dispensing a uniform continuous line of reagent the individual drops roll off the apex into the adjacent wells thus giving statistically accurate and even filling of wells.

In the non-synchronized mode of line dispense operation the valve dispense head and syringe pump operate at some harmonic of the motion stepper to produce a series of drops. For every N steps of the motion stepper one drop is dispensed. For example, if the motion stepper has a resolution of about 2 microns and the syringe pump has a resolution of 192,000 steps per full stroke then to dispense a 20.8 nL drop every 0.5 mm using a 100 uL syringe then N = 250 and M = 40. Therefore, the amount of droplets dispensed per unit of linear motion can be precisely controlled. For simultaneous X and Y motion, such as for forming a diagonal line, fairly simple adjustments can be made to the dispensing frequency to ensure the desired number of drops per unit of linear distance.

### Example 4 - Dot Array Mapping

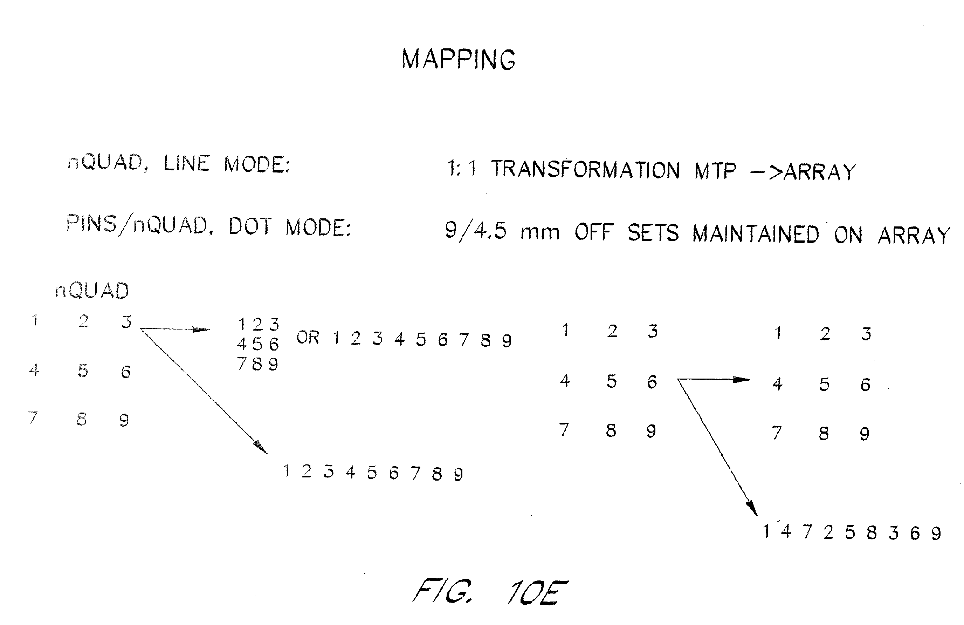

**FIG. 10E** is a schematic drawing illustrating one mode of dot array mapping in accordance with one embodiment of the invention. For example, it is often desirable to map (replicate or transform) one or more microplate arrays into a high density array on a membrane or glass slide. For instance, one could map sixteen 96-well well plates having 9 mm center-to-center well spacings into a single 1536 dot array having center-to-center spacings in the range of 100-1000 microns.

This task can be accomplished several ways using the invention disclosed herein. One example would be to successively operate one head at a time of a 8-head dispenser with 9 mm center-to-center head spacing using a synchronous line dispense mode with a large spacing between drops. For example, a common substrate is a standard 25 x 76 mm microscope slide. One can array 50 glass slides on an X-Y table and operate each of the 8 heads in succession to produce drops with a spacing in the range of 25 mm on each slide at the same position. The other 7 heads can be operated in linear succession with small offsets to produce an array of 8 dots on the glass slides with a small separation of between about 100-1000 microns between dots. Note that this operation can be done using one head at a time or, more preferably, using all 8 heads dispensing in rapid succession with small time delays to provide the desired linear spacing. By repeating this function for all sixteen plates and using suitable offsets one can map the sixteen well plates into a single 1526 array on each glass slide. In this case the map would be a miniaturized replica of each 96 well plate located in a 4x4 array.

The dispenser can also be programmed so as to transform one or more well plate arrays into a new or different high or low density array. For example, a series of two dimensional arrays may be transformed into rows or columns of a larger high-density array, or arrays may be transposed or inverted. Direct 1:1 mapping can also be achieved by operating the dispense heads in parallel synchronous line mode to produce 8 drops on each slide with a spacing of 9 mm. Other modes and variations for the use and operation of the invention will be apparent to those skilled in the art.

### Text File Control and Software

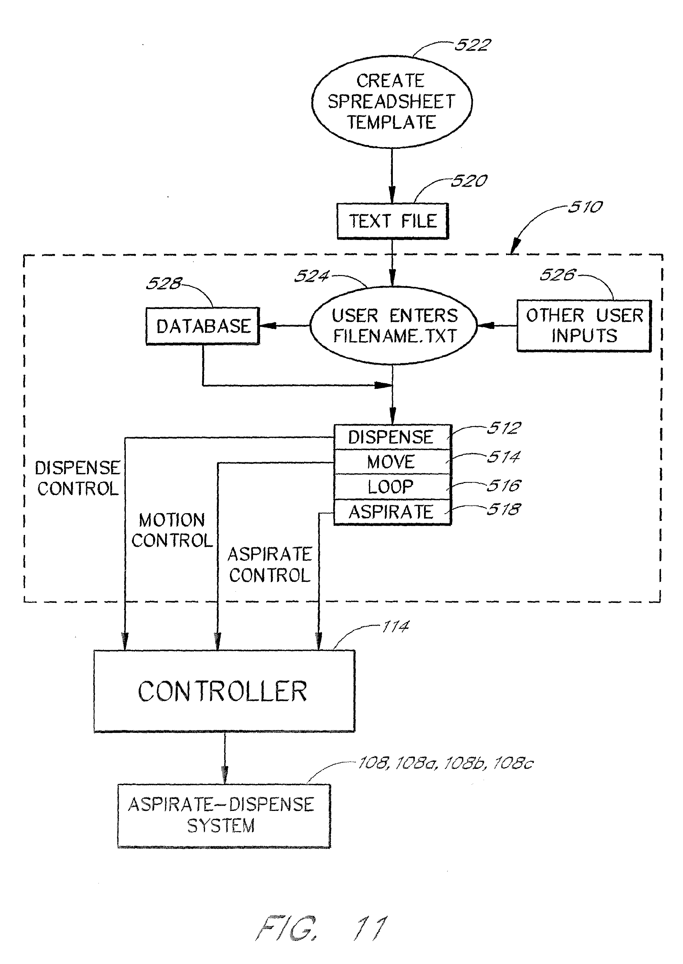

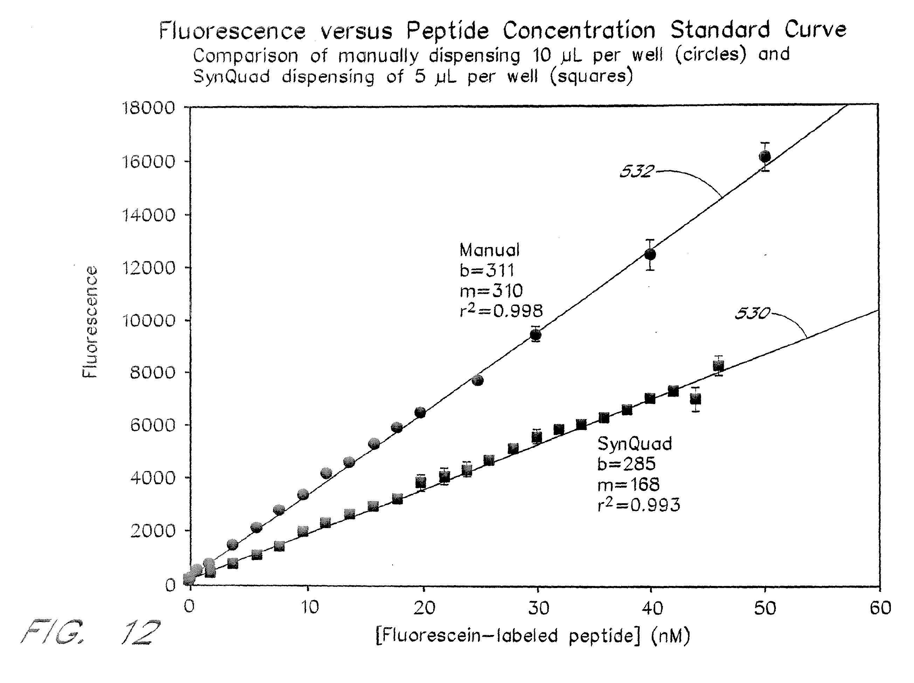

The software to control the aspirate-dispense systems **108 (FIG. 1), 108a (FIG. 2A)**, **108b (FIG. 2B)** and **108c (FIG. 2C)** may be designed in a wide variety of manners. In one embodiment, the dispense, aspirate and motion control software **510 (FIG. 11)** utilizes AxSys software as available from Cartesian Technologies, Inc. of Irvine California.

In brief, the software **510** executes a series of actions or functions for moving the dispense head **128 (FIG. 1)** or multiple dispense heads **128** as shown in **FIGS. 2A-2C** to dispense (and/or aspirate) user-defined volumes of one or more reagents or other liquids. These actions are programmed by the user entering in the volume and coordinates for the dispense (or aspirate) operation(s).

For example, if the user wishes to dispense 100 nanoliters (nL) at location X = 25 mm, Y = 38 mm, Z = 20 mm, the volume is entered into a Dispense action or function **512 (FIG. 11)** and the coordinates into a Move action or function **514 (FIG. 11).** For looped operations, such as multiple dispense locations, a Loop action or function **516 (FIG. 11)** is provided. Also, for aspirate the software **510** has an Aspirate action or function 518 **(FIG. 11).** These actions contain suitable computer codes or programs so that the software program **510** can the controller **114** with appropriate instructions or commands.

Simple operations may be manually operated by the user through the software **510**. However, for enhanced speed and complex dispensing aud/or aspirating operations, such as those involving multiple reagents which are to be combined in multiple formats, it is preferable to provide a text file **520** (**FIG. 11**) containing, for example, a list of dispense volumes and corresponding (X, Y, Z) coordinates. This text file format is advantageous for many applications, for example, if the user has 8 different reagents that are to be dispensed in 32,000 different combinations.

Text files are typically ASCII or similarly encoded files, as known in the art. Such an encoding system is a convenient way for a computer to handle data while processing the text file. A text file "word" is typically a sequence of characters ending with one or more "word terminators" such as spaces, tabs, commas, periods and carriage returns, among others.

Preferably, the text file **520** is a white space delimited text file containing lists of numbers. The white space can comprise one or more tabs, spaces or carriage returns though other suitable characters may be used with efficacy. The numbers in the text file **520** are the source of operational parameters/requirements, for example, dispense volumes, XYZ position and loop control.

Depending on the particular application, the user first generates a spreadsheet template or a spreadsheet of values to be used by the software **520 (FIG. 11)**. This step is labeled **522** in **FIG. 11.** The spreadsheet may be generated by a number of commercially available software packages, such as Microsoft Excel and the like, or other customized software.

The spreadsheet contains information such as dispense and/or aspirate volumes and corresponding coordinates. The user then saves the spreadsheet, preferably in the form of a tab-delimited text file **520** (**FIG. 11**) such as "PILENAMB.TXT". This file name is entered by the user (step **524** in **FIG. 11)** when running the software **510.** More than one text file may be used, for instance, different files may be created for access by Aspirate, Dispense, Move and/or Loop actions. Moreover, the spreadsheet itself may be in the form of a text file or other similar and/or compatible format, and hence may be directly input into the program **510**.

When the software **510** (**FIG. 11**) is run, the file **520** is read by the program **510**. In one embodiment, the values from the text file **520** are accessed or read sequentially and corresponding operations performed sequentially. In another embodiment, the values from the text file **520** are accessed or read in a substantially parallel (simultaneous) manner and corresponding operations performed substantially parallely (simultaneously). In yet another embodiment, the values from the text file **520** are accessed or read and then stored in memory to create a database **528** (**FIG. 11**), possibly, with other operational parameters or characteristics of the particular dispensing system.

In one example, the software **510** (**FIG. 11**) allows a dispensing system with an array of dispensing heads **128** (**FIGS. 2A-2C**) to be indexed in a manner where each head **128** would be able to dispense into each individual well of a microtiter plate. Preferably, and as discussed further below, within the program **510** are established one or more user-defined predetermined programmable dispense drop volumes (V_{d1}, V_{d2}, V_{d3}, ... V_{dn}), say V_{d1} is 100 nL in this case, which cumulatively form the total volume (Vₜₒₜₐₗ) to be dispensed at a particular location. Thus, the independent variable is the number of drops (N_{drop}), of volume 100 nL in this example, to be dispensed at each well location by each of the 1 x 8 dispensing heads **128** to achieve the total volume at each location. That is, N_{drop} is equal to Vₜₒₜₐₗ divided by V_{d1}.

In this example, the use of a text file provides a method to list the desired volumes of each reagent of the 1 x 8 array to be dispensed into each of the microtiter plate wells. The text file **520** (**FIG. 11**) is linked to the program **510** in a manner that as each of the 1 x 8 dispense heads **128** (**FIGS. 2A-2C**) is indexed over a specific well it reads the required volume from the text file **520** and proceeds to dispense this volume in terms of the number of drops required to for the indicated volume. The number of drops is determined by dividing the total volume by the drop size.

Advantageously, the use of text files provides a means which adds to the versatility and efficiency of dispensing (and/or aspiration) functions. As indicated above, these text files are lists of numbers that can be generated from spreadsheet programs. The text file data is used to control the looping structure of the program, the locations of the dispense head, and the volumes dispensed (and/or aspirated). For example, spreadsheet formulas can be used to generate a list of dispense volumes and XYZ coordinates. This list is preferably saved as a tab-delimited text file. From within the program **510 (FIG. 11)**, instead of the user specifying volumes, the user specifies the file name for list of volumes which the program **510** reads in a coordinated fashion and instructs the controller **114** accordingly, for example, to implement motion and dispense control of the system, for instance, as described above in connection with **FIGS. 7, 8** and **9A-9C** and TABLE 1.

Text file control maybe employed with any of the embodiments disclosed, taught or suggested herein. In general, this technology provides the ability to dispense programmed drop volumes in a quantitative format using a hydraulic coupling between a syringe pump **120 (FIGS. 1, 2A-2C** and **4)** and a micro solenoid valve **128 (FIGS. 1, 2A-2C** and **3A).** Several modes and approaches of dispensing are described herein above and further below. All of these can be controlled by information provided through one or more text files input into software interfaced with a controller to provide high-speed precision dispensing and overall operation.

In one dispensing mode, a step and repeat motion approach (move-stop-dispense-move) is used to dispense a single drop of a programmed value, for example, 100 nL. This can be done individually or in parallel with an (M x N) dispense head array **(FIGS. 2A-2C),** for example, a 1 x 8 dispense head array.

In another dispensing mode, the step and repeat motion approach is performed using high speed "bursts" of drops of a given size, for example, 100 drops with a volume of 100 nL at a frequency of 200 Hz.

In yet another dispensing mode, an "on the fly" approach is used, for example, to dispense arrays of reagent(s). In this case, each dispense head **128** (**FIGS. 1** and **2A-2C**) can dispense a given drop size with a programmed pitch, or distance between drops. The drop volume, pitch and number of drops (length of line) can all be individually programmed.

One advantage of using text file control in conjunction with the aspirate-dispense systems and operations of the embodiments herein is that complex patterns of dispense location and volume can be easily achieved through, for example, a spreadsheet template. This is useful for "combinatorial" dispensing applications where "n" numbers of reagents are combined in different reagent and/or volume ratio combinations. Desirably, the user can custom design the combinatorial experiment using the text file (and/or spreadsheet format) and then easily download the experiment to the software **510 (FIG. 11)** for execution.

Another advantage is that a wide dynamic range of volumes can be easily programmed using small volume increments. For example, a 20 nL dispense volume increment can be used in a spreadsheet template to generate a list of dispense volumes in a text file from 20 nL up to 20 µL, with 20 µL resolution. These larger volumes can be rapidly dispensed, for instance, in less than 10 seconds. In addition, the range of volumes from 20 µL to 200 µL can be dispensed using, for example, 200 nL dispense volume increments, that is, droplet sizes.

The software **510 (FIG. 11)** can be utilized in several ways to dispense a desired programmed volume at a predetermined location. One embodiment utilizes the "burst" mode where a volume is read from the text file **520** (or spreadsheet) and the software **510** converts that into an appropriate number of drops and dispenses the drops at a frequency specified by the program channel parameters. This frequency can be user-defined and independently controlled in a range from about 1 Hertz (Hz) to over about 500-1000 Hz. The maximum frequency in the "burst" mode is generally limited to the frequency at which the micro-solenoid valve **203 (FIG. 3A)** will fully close.

In another embodiment, a "nested do loop" within the software **510 (FIG. 11)** is utilized with zero X-Y displacement between well (or location) movements, that is, the dispense head **128** is stationary during the execution of the loop. In this case, the software 510 dispenses the same drop volume each loop. The number of loops times the drop size provides the volume specified by the text file **520** (or spreadsheet). In this case, the frequency is typically in the range of 5-10 Hz, though it may be lower or higher.

For example, in the case of a micro-well plate, a given well can receive reagents of a specified volume, each with a resolution of down to 5 nL. Advantageously, the user can program the desired resolution in terms of drop size to achieve the required precision of compositional mixing. An example is provided below in TABLE 2 for a total well volume of 100 µL.

**TABLE 2 (Well C5: 100 µL)**

| | **Volume** | **Drop Size** | **Resolution** |
|---|---|---|---|
| Reagent 1: | 80 µL | 200 nL | 0.2% |
| Reagent 2: | 0 | | |
| Reagent 3: | 17 µL | 50 nL | 0.05% |
| Reagent 4: | 2 µL | 5 nL | 0.005% |
| Reagent 5: | 0 | | |
| Reagent 6: | .8 µL | 5 nL | 0.005% |
| Reagent 7: | .19 µL | 5 nL | 0.005% |
| Reagent 8: | .01 µL | 5 nL | 0.005% |

Referring to TABLE 2, using burst frequencies in the range of 200 Hz, the total fill time for well C5 with the recipe of TABLE 2 is about 5-6 seconds. Advantageously, the high resolution provides the ability to easily and rapidly explore the effects of very small additions to the total reagent mix. An example application would be to investigate the use of small additions of polymers and/or surfactants to protein based solutions where the additions are in the range of 0.5% or less.

It should further be noted in general, and in specific reference to TABLE 2, that excellent absolute volume precision is obtained due to the use of a positive displacement volume control system using the pump **120 (FIGS. 1, 2A-2C** and **4)** in combination with the dispenser **128 (FIGS. 1, 2A-2C** and **3A).** Moreover, the large number of droplets with associated kinetic energy provide for good reagent mixing in the well or other target location. Additionally, splashing can be minimized by controlling the drop size relative to the fill volume. Small drops dispensed in a large volume result in little, negligible or no splashing.

### Text File Examples

The text file **520 (FIG. 11)** typically contains data to control the locations of the dispense head(s) **128 (FIGS. 1, 2A-2C)**, the corresponding volumes to be dispensed (and/or aspirated), the looping structure of the program **510 (FIG. 11)** and other associated and/or related values, parameters or system and application requirements. These associated values, parameters or system and application requirements may also be input independently by the user into the software **510,** as generally labeled **526** in **FIG. 11.** For example, these may include incremental dispense volumes V_{d1}, V_{d2}, V_{d3}, ... V_{dn} referred to earlier and also discussed further below, and the geometric configuration and/or spacing of an array of dispenser heads **128** (**FIGS. 2A-2C**).

Some examples, without limitation, of typical text files that can be utilized by the dispensing and aspirating systems of the embodiments disclosed herein are presented next. Of course, it should be understood that these text files are merely exemplary and other suitable and/or modified text files may be efficaciously used, as needed or desired.

### Volume and Move Control:

This simple example moves a single chamel dispenser **128 (FIG. 1)** to four locations and dispenses 50 nL (0.05 µL) to each location. The first row of the TEXT FILE A contains the XYZ coordinates, the second row contains the dispense volume. This is repeated for the additional dispenses.

### TEXT FILE A

| | | |
|---|---|---|
| 20.5 | 55.8 | 10.4 |
| 0.05 | | |
| 37.8 | 50.4 | 10.4 |
| 0.05 | | |
| 45.6 | 38.2 | 12 |
| 0.05 | | |
| 85.7 | 65.4 | 11 |
| 0.05 | | |

In this particular example, the software **510 (FIG. 11)** is programmed with a four pass Loop action **516** containing a Move action **514** and a Dispense action 512. With each pass through the loop, the Move action **514** reads the X, Y and Z values from the TEXT FILE A and instructs the controller **114** to move the dispensing head **128 (FIG. 1)** to those coordinates. The Dispense action **512** reads the dispense volume, and accordingly instructs the controller **114** to dispense the required volume via actuations of the pump **120** and dispenser **128,** as discussed herein.

### Loop Control for Complex Volume Dispenses:

As discussed earlier, preferably, dispensing operations are performed at a predetermined steady-state pressure. Typically, for a given fluid this steady state pressure is related to the droplet volume, that is, the steady state pressure has a different optimum value for a different desired droplet dispense volume. Also, as indicated before, the system pressure can be adjusted by advancing or retarding the syringe plunger **118** (**FIG. 1**) with the valve **204** (**FIG. 1**) closed or by pre-dispensing to raise or lower the pressure, as needed or desired. Stated differently, each dispense head or channel **128** (**FIGS. 1** and **2A-2C**) may have to be prepared for dispensing a specific drop size. In some cases, this pressure adjustment can be time consuming and slow down the overall process efficiency.

Preferably, and as also stated above, to dispense different volumes with text file control, a single predefined volume is repeated to achieve the desired total volume. For example, to dispense 40 nL, 100 nL and 300 nL, a dispense volume of 20 nL is dispensed twice, five times, and 15 times, respectively. Advantageously, this approach is extremely useful when using text files to dispense a wide range of volumes. In this particular example, instead of the text file **520 (FIG. 11)** containing the volume to be dispensed, it contains the number of repeats for the integral dispense volume (for example, 20 nL in the above example).

In the following example, an 8-channel dispenser (**FIGS. 2A-2C**) will dispense volumes from 0.2 µL to 5.0 µL to the 24 columns of a 384 micro-well plate. This dispensing recipe is shown below in TABLE 3:

**TABLE 3**

| Column | Volume (µL) |
|---|---|
| 1 | 0.2 |
| 2 | 0.4 |
| 3 | 0.6 |
| 4 | 0.8 |
| 5 | 1 |
| 6 | 1.2 |
| 7 | 1.4 |
| 8 | 1.6 |
| 9 | 1.8 |
| ! | ! |
| ! | ! |
| 23 | 4.6 |
| 24 | 5 |

To dispense the volumes of TABLE 3, in this example, the total volume in each is composed of a series of drops using two incremental or integral droplet volumes, for instance 0.1 µL and 1 µL. In this case, a user-defined TEXT FILE B is created as follows (only a portion of the file is shown):

### TEXT FILE B

| | | | | | | | | | | |
|---|---|---|---|---|---|---|---|---|---|---|
| 2 | 2 | 4 | 4 | 6 | 6 | ... | 6 | 6 | 0 | 0 |
| 0 | 0 | 0 | 0 | 0 | 0 | ... | 4 | 4 | 5 | 5 |

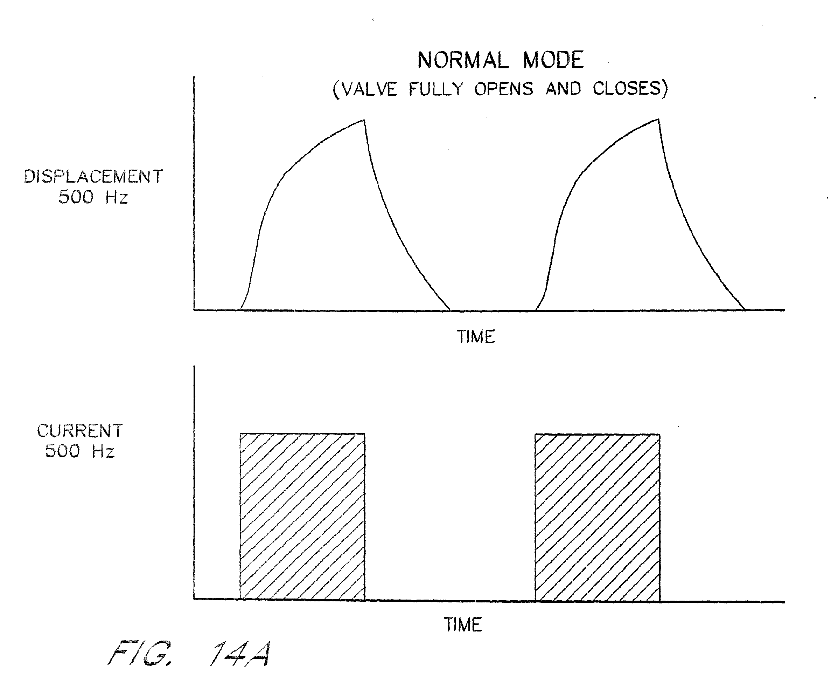

The first row in TEXT FILE B specifies the number of 0.1 µL drops whereas the second row specifies the number 1 µL drops (the numbers are duplicated because the 8-channel dispenser must dispense twice per column to fill all wells of a 384 well plate). In one embodiment of the software **510 (FIG. 13)**, a Loop action **516** uses this TEXT FILE B as its counter. In other words, the Loop **516** executes a function that contains a Dispense action **512** of 0.1 µL the number of times denoted in the TEXT FILE B. Likewise, another Loop action **516** calls a Dispense action **512** of 1 µL the prescribed number of times. These Loops combined with Move actions **514** (which can, also use the same text file, a different one or be programmed directly into the software **510** by the user) will produce a dispense recipe as shown in TABLE 3.

Thus, the 8-channel dispenser moves across the micro-well plate and dispenses a series of 0.1 µL drops into the appropriate wells. The 8-channel dispenser also moves across the micro-well plate a second time dispensing a series of 1 µL drops into the appropriate wells. Of course, other variations and modifications are possible, such as dispensing 0.1 µL from some channels while sequentially (serially) or substantially simultaneously (parallely) dispensing 1 µL form other channels. Alternatively, or in addition, either sequential (serial) or substantially simultaneous (parallel) valve firing may be employed.

### Case Study (Fluorescence Polarization Assay):

This case study uses text files to dispense reagents in a 384 well Fluorescence Polarization (FP) Assay. The volumes to generate the fluorescence versus peptide concentration standard curve, similar to the previous example, are shown below in TABLE 4.

**TABLE 4**

| Column | [Peptide](nM) | Volume 50 nM Peptide (µL) | Volume PBS, 0.01 % Tween 20 (µL) |
|---|---|---|---|
| 1 | 0 | 0 | 5.00 |
| 2 | 2 | 0.2 | 4.80 |
| 3 | 4 | 0.4 | 4.60 |
| 4 | 6 | 0.6 | 4.40 |
| 5 | 8 | 0.8 | 4.20 |
| 6 | 10 | 1 | 4.00 |
| 7 | 12 | 1.2 | 3.80 |
| 8 | 14 | 1.4 | 3.60 |
| 9 | 16 | 1.6 | 3.40 |
| 10 | 18 | 1.8 | 3.20 |
| 11 | 20 | 2 | 3.00 |
| 12 | 22 | 2.2 | 2.80 |
| 13 | 24 | 2.4 | 2.60 |
| 14 | 26 | 2.6 | 2.40 |
| 15 | 28 | 2.8 | 2.20 |
| 16 | 30 | 3 | 2.00 |
| 17 | 32 | 3.2 | 1.80 |
| 18 | 34 | 3.4 | 1.60 |
| 19 | 36 | 3.6 | 1.40 |
| 20 | 38 | 3.8 | 1.20 |
| 21 | 40 | 4 | 1.00 |
| 22 | 42 | 4.2 | 0.80 |
| 23 | 44 | 4.4 | 0.60 |
| 24 | 46 | 4.6 | 0.40 |

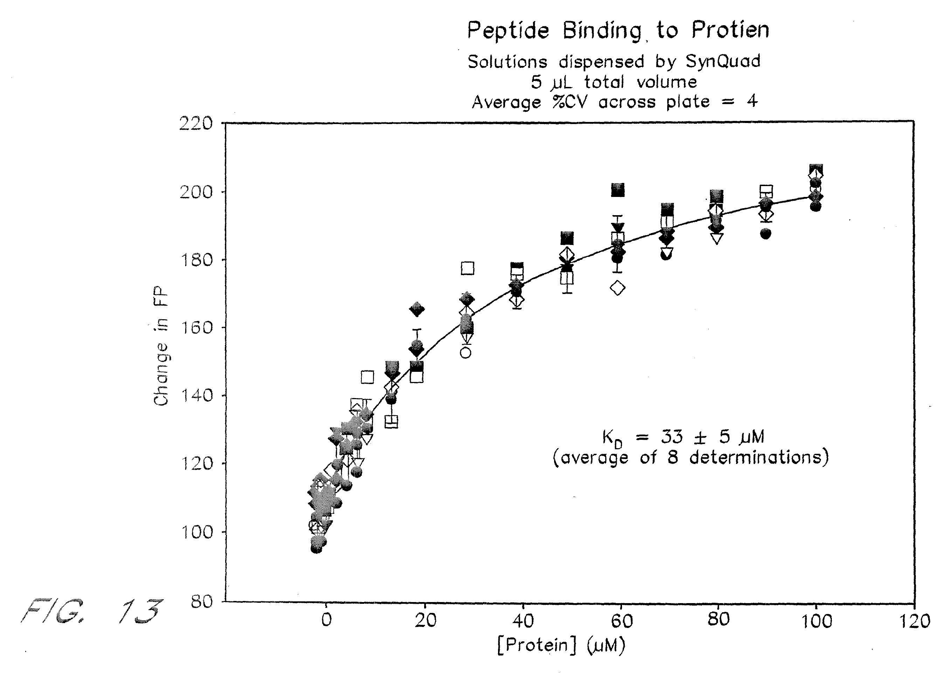

The standard curve **530** generated using the dispenser (SynQuad) with text-file enabled software is compared to a manually generated curve **532** in **FIG 12.** (Note that the different slopes are due to the different volumes used to generate the curves).

The FP Assay involves adding the fluorescent peptide to a protein and measuring the change in fluorescence polarization due to the binding of the peptide by the protein. The volume additions are shown in the following TABLE 5. Because of the wide range of dispense volumes required in this case, three drop sizes were used, namely 1 µL, 0.1 µL, 0.01 µL. The results of the FP Assay are shown in **FIG. 13** and compared favorably with the manual assay.

**TABLE 5**

| Well | [Protein] (µM) | Solution A (µL) | Solution B (µL) | Binding Buffer (µL) |
|---|---|---|---|---|
| 1 | 0 | 0 | 0 | 5 |
| 2 | 0.00 | 5 | 0 | 0 |
| 3 | 0.20 | 4.99 | 0.01 | 0 |
| 4 | 0.40 | 4.98 | 0.02 | 0 |
| 5 | 0.70 | 4.96 | 0.04 | 0 |
| 6 | 1.00 | 4.95 | 0.05 | 0 |
| 7 | 2.00 | 4.90 | 0.10 | 0 |
| 8 | 3.00 | 4.85 | 0.15 | 0 |
| 9 | 4.00 | 4.80 | 0.20 | 0 |
| 10 | 6.00 | 4.70 | 0.30 | 0 |
| 11 | 8.00 | 4.60 | 0.40 | 0 |
| 12 | 10.00 | 4.50 | 0.50 | 0 |
| 13 | 15.00 | 4.25 | 0.75 | 0 |
| 14 | 20.00 | 4.00 | 1.0 | 0 |
| 15 | 30.00 | 3.50 | 1.5 | 0 |
| 16 | 40.00 | 3.00 | 2.0 | 0 |
| 17 | 50.00 | 2.50 | 2.5 | 0 |
| 18 | 60.00 | 2.00 | 3.0 | 0 |
| 19 | 70.00 | 1.50 | 3.5 | 0 |
| 20 | 80.00 | 1.00 | 4.0 | 0 |
| 21 | 90.00 | 0.50 | 4.5 | 0 |
| 22 | 100.00 | 0 | 10 | 0 |

In TABLE 5, Solution A comprises a 20 nM fluorescent peptide/protein in binding buffer and Solution B comprises a 100 µM protein with 20 nM fluorescent peptide/protein in binding buffer.

### Motion and Dispense Control

As also discussed above, the coupled solenoid/syringe dispensing systems disclosed herein and in conjunction with text file control can perform complicated combinatorial dispensing. One goal is to be able to dispense "n" reagents in a combinatorial format to create both permutations of different reagents and permutations of different reagent volume ratios. A spreadsheet template is used to perform a transformation to develop a text format which allows the user to create a text file **520 (FIG. 11)** or database **528 (FIG. 11)** that describes which reagents, reagent volumes and X,Y (or X,Y,Z) coordinates for each specific mixture in the combinatorial array.

The text file format with the software **510** allows the software **510** to read the text file **520** (and/or database **528)** and translate this into one or more sub-programs or functions (**FIG. 11**) that provide motion parameters and dispense volumes, among other things, for each dispense channel **128** (**FIGS. 1, 2A-2C**) on the machine **108** (**FIG. 1**), **108a** (**FIG. 2A**), **108b** (**FIG. 2B**) or **108c** (**FIG. 2C**) for a given position. The reagents may be supplied by reservoirs 16 see, for example, **FIG. 1**) or through an aspirate/dispense action to load the reagents into one or more dispense heads **128**.

### Motion Control:

The software **510** (**FIG. 11**) can translate an array of dispense channels, typically in an M x N array, for example, where M = 1-8, N = 1-12, into a series of motions which places the individual dispense channels over the individual positions for dispensing of each volume. Other configurations such as M = 1 and N = 96 and other array configurations corresponding generally to 96, 384, 1536 and 2080 standard microtiter or microwell well plate formats may also be used with efficacy. There are several methods of combining XY (or XYZ) step and repeat motion with dispensing including serial scans, parallel scans and random access. "On-the-fly" dispensing can be performed by line scans.

### Serial Scan

In this case, each dispense channel **128 (FIGS. 1, 2A-2C)** in the array is scanned individually over each dispense position. The dispense volume can vary from zero to some prescribed volume. Though this approach can be time consuming it is highly generic and versatile.

### Parallel Scan

When specific geometric relationships exist between the dispense positions and dispense channel positions a parallel scan be used. An example here would be using a dispense head with individual channels **128 (FIGS. 1** and **2A-2C)** located on a grid of say 9 mm and dispensing into a microplate with wells on a 9 mm grid. In the parallel scan, the head is systematically scanned over the microwell array in both X and Y directions such that every dispense channel **128** is positioned over every well during the scan. At each position of the head there will be either be a well or no well under a dispense channel **128.** The overlay of the head with array of dispense positions is described in the text file **520 (FIG. 11)** and/or database **528 (FIG. 11)** with the volume for each dispense channel **128** for each position of the head array. For those positions where individual dispense channels **128** are not positioned over a well the dispense volume is zero. Thus each position the dispense head will have a prescribed volume for each dispense channel **128.**

### Random Access

In this case, each dispense channel **128 (FIGS. 1** and **2A-2C**) is moved directly to each well or target location that requires a volume from that dispense channel thereby skipping past wells or target locations that have zero volume for that particular channel.

### Line Scan

In the case where rows and/or columns of a microplate are to be filled with the same volumes of a reagent a line mode of dispensing can be use where drop position, pitch and volume are programmed by the user into the text file **520**, database **528** and/or the software program **510 (FIG. 11).** This mode of dispensing is a result of synchronization of XY motion with syringe motion. This allows the drop positions to be programmed. A combinatorial library can be created using combination of line scans of different reagents using scans in both X and Y directions.

### Dispense Control:

The software **510 (FIG. 11)** has the capability of providing several methods, as described herein and below, by which a dispense volume can be created including line mode, burst mode and modulation mode. All of these modes can be used with reagent supplied directly from reagent reservoirs **116** connected to the syringe pumps **120** or by using the aspirate/dispense mode where the reagents are supplied in a format such as a microtiter plate and the like. In the aspirate/dispense case, the dispense channels **128** aspirate up reagent from the reagent source plate followed by dispensing.

Many of the embodiments of aspirate-dispense systems and methods as disclosed above are typically based on the use of a combination of syringe positive displacement combined with the action of a micro solenoid valve **203 (FIG. 3A).** In one embodiment, the syringe pump 120 has 192,000 steps for full stroke motion with syringe sizes varying from about 50 µL to about 5,000 µL. The smallest possible drop size is one full step of the syringe which in this particular case is 0.260 nL using a 50 µL syringe. The largest possible single distinct drop is based on the maximum open time for the micro-solenoid valve 203 in the open/close mode of use which in one embodiment is about 4 µL.

### Line Mode

As also discussed above, in this dispense mode continuous motion ("on-the-fly") is used and the syringe and motion stepper motors are synchronized. This allows the ability to dispense drops in well-defined linear arrays where drops can be dispensed at a programmed volume and pitch. The start position of the first drop is also programmed. In this case the syringe motion is continuous with XY motion and the solenoid valve **203 (FIG. 3A)** is opened at the appropriate number of motion motor steps. The volume of the drop that is to be dispensed determines the number of syringe motor steps.

Using this line mode of dispensing one can use linear scans (as described above) to rapidly dispense drops of the same size in a line. An example would be the use of 8 dispense channels 128 (see, for example, **FIG. 2B)** on 9 mm centers to dispense drops into microtiter plates where the plate density can vary from 96 up to 9600 wells or greater. A practical example would be the use of a 4 or 8 channel system using 4 reagents to perform assay assembly in 1536 plate formats. The assay assembly in this example is the sequential dispensing of the four different reagents into all wells where each reagent could have volumes ranging from, for example, 100 nL to 3-8 µL.

### Burst Mode

As stated above, the software **510** (**FIG. 11**) provides the ability for step and repeat motion to place the dispense channels at programmed XY (or XYZ) positions. In this case, drops can be delivered to a position using the "burst" mode. The simplest example would be one drop, which is programmed as N steps of the syringe followed by an open/close of the solenoid valve **203 (FIG. 3A)**. Repeating the single drop program results in additional drops at the same position.

In this mode of operation the solenoid valve **203** typically fully opens and closes for each cycle. The actuation frequency for a typical micro-solenoid valve such that it fully opens and closes has a maximum upper limit, as the skilled artisan will recognize. In one embodiment, this maximum frequency is in the range of 1000 Hz (or a total time of about 800 µsecs). The total cycle time includes both open time to allow fluid to flow and the close time that allows the valve plunger face **258 (FIG. 3A)** to fully close the valve. As drop volume increases so does the open time required to fully move the positive displacement of the fluid volume through the valve **204**. Thus, as drop volume increases allowable operating frequency decreases. For example, at a drop size of 4 µL the operating frequency can be limited to about 15 Hz. These limitations apply to both burst and line modes as described above. Thus, in the above example, the volume delivery for the burst mode has a maximum flow rate of about 60 µL/sec.

Using this burst mode of operation combinatorial libraries can be done with, for example, 250 nL drop resolutions and fill rates per channel in the range from about 40-50 µL/sec. Thus, fill levels to about 500 µL can be achieved in reasonable times of tens of minutes or less per 96 wells for complex combinatorial libraries.

### Modulation Mode

As discussed above, the syringe positive displacement and solenoid valve 203 combination results in the syringe pump **120** determining the drop volume and the solenoid valve aiding in the ejection of a drop from the dispense channel nozzle **259 (FIG. 3A)**. The modulation mode of operation takes place when the solenoid drive current for open/close of the valve **203 (FIG. 3A)** is driven at higher frequencies than allowed for a full open and close situation. In this case, the valve plunger face **258** does not seal against the valve seat **252** but oscillates in the open position. This oscillation energy further facilitates the ejection of the fluid from the tip **205** and/or nozzle **259** through the orifice **261.** The ejection format can be in the form of a continuous jet with volume oscillations to individual drops. This mode of operation can typically be operated at much higher frequencies compared to the "burst" mode since the valve does not fully close. For example, theses frequencies can be in the range of about 6000 Hz.

The modulation mode can advantageously provide high speed dispensing of fluid using small drop sizes. This provides a robust and accurate delivery of fluid as compared to some lower frequency operations. This method also allows for selection of parameters that eliminates the need for pressure adjustment to achieve steady state dispensing between desired droplet volume changes.

The modulation mode provides robust and accurate delivery of single drops over a wide range of ejected drop volumes, ranging from about 2 nL or less to over 100 nL. The modulation mode is discussed in further detail later herein.

### Applications:

The reagent aspirating and dispensing technologies described herein have many fields of application including genomics (DNA microarraying), proteomics (protein crystallization), combinatorial chemistry, high-throughput screening, assaying, among others in key markets such as life science research, biodiagnostics, pharmaceutical, agrochemical and materials science, among others. Some examples of applications are described below.

### Combinatorial Libraries

Using the different modes of dispensing one can for example produce a combinatorial array of reagents in a set of wells. If the number of reagents is 8 then any combination of reagents and volume ratios can be created in a particular well. Thus complex libraries can be produced. Examples of applications would be in materials science where one can mix different salt solutions followed by firing to produce arrays of inorganic compounds with different compositions. In these cases the experiment is designed in terms of the different mixtures and volumes of reagents for each experiment. This are formatted into a text file or other compatible database that can be read by the system software which then generates the library. The experiments can be laid out in terms of any of the dispense methods discussed above.

### Reformatting and Arraying

In these cases generally only one reagent is placed per spot but the same reagent may be placed more than once. Another important variable is that one may want to investigate different groupings of reagents either to explore possible interactions or for convenience of analysis.

### Combinatorial Synthesis

This application area is similar to combinatorial libraries except that variation in volume is not usually a variable but rather each reagent is supplied in excess followed by a process time, temperature and then a termination and clean step. Examples would be the creation of organic compound libraries such as drug compounds where each step is the addition of a monomer that chemically reacts with an existing molecule located on a stationary solid phase located in the well. Another example would be for oligonucleotide synthesis where the four different base pairs can be added in prescribed sequences in each well to grow different molecules. After each base pair addition there is an incubation time followed by different chemistry steps to conclude the reaction, and a clean step to remove excess residual chemicals. These steps are repeated for each of the base pair sequences prescribed by the experiment. These reactions are again usually done on a solid substrate such as beads located in a filter plate. All excess reagents are washed through the filter for each set of reactions. When the collection of molecules in completed chemistries are added for cleaving the oligonucleotides and collecting them into a master plate for additional processing such as for PCR.

The combination of aspirate-dispense technologies and text file data processing, as described herein, provides both the ability to quickly program and produce large complex libraries with a large volume and well density range. For example it provides the ability to reduce oligonucleotide synthesis to high-density formats such as 1536, which advantageously reduces the volume requirement of very expensive reagents.

### Modulation Mode

In most of the embodiments above, a drop is formed by using a positive displacement from the syringe **120 (FIG. 4)** followed by an opening of the valve **203 (FIG. 3A)**. Under steady state conditions the positive displacement is ejected as a drop equal to the positive displacement. Also discussed above are burst and line modes of dispensing where drops can be delivered at frequencies up to a maximum frequency (Fₘₐₓ). This maximum frequency generally corresponds to the upper limit at which the solenoid valve **203** can be fully opened and closed, and in one embodiment this maximum frequency is about 1000 Hz or slightly higher.

As discussed above, in a fixed position this burst mode can be used to create a larger volume at a single position by dispensing drops at a frequency around or below Fₘₐₓ. When coupled with motion, a line is generated composed of individual drops. In this burst mode individual drops are formed for each value actuation where the valve goes through a complete open/close cycle.

In one embodiment, the syringe pump **120** has a full stroke of 192,000 steps with syringe sizes ranging from about 50 µL to about 5,000 µL. For example, with a 250 µL syringe the step volume is about 1.3 nL. As the single drop volume becomes smaller, it can become harder to reliably dispense droplets using the full open/close valve opening such as in the burst and line modes.

As indicated above, the software **510 (FIG. 11)** includes software algorithms based on a selection of a number of system and operational parameters/requirements such as solenoid valve open time, syringe speed, drop volume and number of drops. This allows the solenoid valve **203 (FIG. 3A)** to be used in a way denoted as "Modulation Mode".

For example, in the modulation mode, the system is programmed so that the syringe speed is 8 µL/sec, the single drop volume is 1.3 nL (0.0013 µL) with a total of 4 drops for a total volume of 5.2 nL, the open time for each drop is 150 µsecs with a total open time of 600 µsecs. The valve or time frequency can then be defined as 1/150µsecs = 6,667 Hz and the flow frequency can be defined as 8µL/sec/0.0013µL = 6,153 Hz.

In a single drop mode (valve fully opens and then closes), for example, the system is programmed so that the syringe speed is 8 µL/sec, the single drop volume is 5.2 nL, the open time for the drop is 150 µsecs. The valve frequency is then determined by the upper limit Fₘₐₓ, which in this particular case is about 1,200 Hz as determined by the minimum time for the valve to fully open and close.

The end result of each of the above approaches is a 5.2 nL drop being ejected from the nozzle and deposited on a substrate. However there are three distinct differences between the above examples of modulation mode and the single drop mode (full opening and closing of valve). Firstly, the time duration for the modulated dispensing is about 600 µsecs as compared to 150 µsecs for the single drop mode. Secondly, the open/close energy input is increased by a factor of 4 for the modulation mode. Thirdly, the effective valve frequency is in the range of 6,000 Hz per drop for the modulation mode.

It is contemplated here that the valve does not truly close at this modulation mode frequency level but only partially closes each cycle thus the fluid flow through the valve is being mechanically modulated. The modulated fluid flow then results in a more consistent and accurate release of a drop or volume from the nozzle tip. This is probably due to an oscillation of the fluid at the orifice opening **254,** tip **205,** nozzle **259** and/or exit orifice **261.**

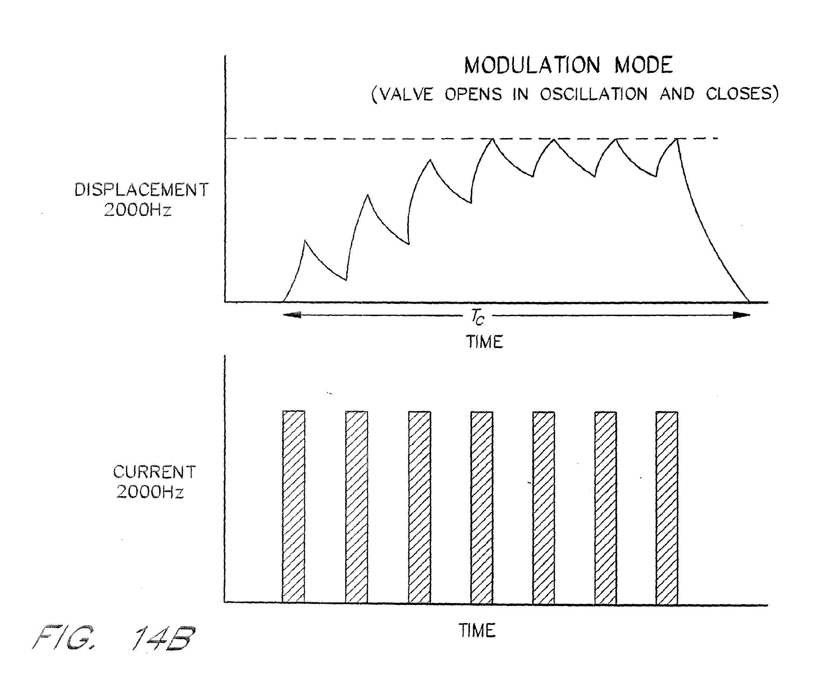

**FIGS. 14A** and **14B** are schematic graphical representations of the valve stopper face displacement and current applied to the solenoid valve **203** (**FIG. 3A**) as a function of time for the "normal" single drop mode (valve fully opens and then closes) and the modulation mode, respectively. For the normal mode **(FIG. 14A)** the valve **203** is operated at a lower frequency (say 500 Hz) and the valve 203 fully opens and closes, that is, the open displacement of the valve stopper **256** or stopper face **258** returns from some maximum value back to zero with a time interval where the open displacement remains zero.

In the modulation mode (**FIG. 14B**), for some higher frequency (say 2000 Hz), the mechanical response time is slower than the electrical frequency so that over time the open time builds up to a maximum open time but never returns to zero until the current is turned off. The valve **203** (that is, the valve stopper **256** or stopper face **258**) then operates at some small displacement, delta, or oscillates relative to the maximum open displacement with a frequency equal to the drive current for the delta displacement.

The modulation mode may be used in bursts to dispense small volumes of droplets at a fixed position to provide high resolution for a larger total dispense volume. The modulation mode may also be used in a line or "on-the-fly" mode with efficacy.

A full modulation open cycle or time period is shown as T_{c} in **FIG. 14B.** This can comprise several cycles at which the solenoid driving current is raised and lowered to zero at a sufficiently high driving frequency. This is related to the number of valve cycles in the TABLES 6-9 below.

The modulation mode can be used to dispense volumes over about a full modulated cycle T_{c} in the range from about 0.1 nL to about 1000 nL. Preferably, the modulation mode is used to dispense voluanes over about a full modulated cycle T_{c} in the range from about 1 nL to about 100 nL. More preferably, the modulation mode is used to dispense volumes over about a full modulated cycle T_{c} in the range from about 2 nL to about 20 nL.

TABLES 6-9 are matrices of ways to program drops based on syringe size, drop volume, flow rates and open times such that the system operates in a modulation mode. Most conditions were verified to eject well-defined drops.

TABLE 6 shows different conditions for different syringe sizes and flow rates at a constant open time using a single syringe step. The valve is opened and closed 4 times for each drop.

**TABLE 6**

| Syringe Volume (µL) | Step Volume (nL) | Syringe Steps | Syringe Volume (nL) | Flow Freq (Hz) | Flow Rate (µL/S) | Open Time (µs) | Time Freq (Hz) | Valve Cycles | Drop Size (nL) | Total Time (µS) |
|---|---|---|---|---|---|---|---|---|---|---|
| 50 | 0.260 | 1 | 0.260 | 6144 | 1.6 | 150 | 6667 | 4 | 1.04 | 600 |
| 100 | 0.521 | 1 | 0.521 | 6144 | 3.2 | 150 | 6667 | 4 | 2.08 | 600 |
| 250 | 1.302 | 1 | 1.302 | 6144 | 8.0 | 150 | 6667 | 4 | 5.21 | 600 |
| 500 | 2.604 | 1 | 2.604 | 6144 | 16.0 | 150 | 6667 | 4 | 10.42 | 600 |
| 1000 | 5.208 | 1 | 5.208 | 6144 | 32.0 | 150 | 6667 | 4 | 20.83 | 600 |
| 2500 | 13.021 | 1 | 13.021 | 6144 | 80.0 | 150 | 6667 | 4 | 52.08 | 600 |
| 5000 | 26.042 | 1 | 26.042 | 6144 | 160.0 | 150 | 6667 | 4 | 104.17 | 600 |
| | | | | | | | | | | |
| | | | | | | | | | | |
| 50 | 0.260 | 1 | 0.260 | 4608 | 1.2 | 200 | 5000 | 4 | 1.04 | 800 |
| 100 | 0.521 | 1 | 0.521 | 4608 | 2.4 | 200 | 5000 | 4 | 2.08 | 800 |
| 250 | 1.302 | 1 | 1.302 | 4608 | 6.0 | 200 | 5000 | 4 | 5.21 | 800 |
| 500 | 2.604 | 1 | 2.604 | 4608 | 12.0 | 200 | 5000 | 4 | 10.42 | 800 |
| 1000 | 5.208 | 1 | 5.208 | 4608 | 24.0 | 200 | 5000 | 4 | 20.83 | 800 |
| 2500 | 13.021 | 1 | 13.021 | 4608 | 60.0 | 200 | 5000 | 4 | 52.08 | 800 |
| 5000 | 26.042 | 1 | 26.042 | 4608 | 120.0 | 200 | 5000 | 4 | 104.17 | 800 |
| | | | | | | | | | | |
| | | | | | | | | | | |
| 50 | 0.260 | 1 | 0.260 | 3840 | 1.0 | 250 | 4000 | 4 | 1.04 | 1000 |
| 100 | 0.521 | 1 | 0.521 | 3840 | 2.0 | 250 | 4000 | 4 | 2.08 | 1000 |
| 250 | 1.302 | 1 | 1.302 | 3840 | 5.0 | 250 | 4000 | 4 | 5.21 | 1000 |
| 500 | 2.604 | 1 | 2.604 | 3840 | 10.0 | 250 | 4000 | 4 | 10.42 | 1000 |
| 1000 | 5.208 | 1 | 5.208 | 3840 | 20.0 | 250 | 4000 | 4 | 20.83 | 1000 |
| 2500 | 13.021 | 1 | 13.021 | 3840 | 50.0 | 250 | 4000 | 4 | 52.08 | 1000 |
| 5000 | 26.042 | 1 | 26.042 | 3840 | 100.0 | 250 | 4000 | 4 | 104.17 | 1000 |
| | | | | | | | | | | |
| | | | | | | | | | | |
| 50 | 0.260 | 1 | 0.260 | 3072 | 0.8 | 300 | 3333 | 4 | 1.04 | 1200 |
| 100 | 0.521 | 1 | 0.521 | 2880 | 1.5 | 300 | 3333 | 4 | 2.08 | 1200 |
| 250 | 1.302 | 1 | 1.302 | 3072 | 4.0 | 300 | 3333 | 4 | 5.21 | 1200 |
| 500 | 2.604 | 1 | 2.604 | 3072 | 8.0 | 300 | 3333 | 4 | 10.42 | 1200 |
| 1000 | 5.208 | 1 | 5.208 | 3072 | 16.0 | 300 | 3333 | 4 | 20.83 | 1200 |
| 2500 | 13.021 | 1 | 13.021 | 3072 | 40.0 | 300 | 3333 | 4 | 52.08 | 1200 |
| 5000 | 26.042 | 1 | 26.042 | 3072 | 80.0 | 300 | 3333 | 4 | 104.17 | 1200 |

TABLE 7 is similar to TABLE 6 but using 2 syringe steps per valve opening.

**TABLE 7**

| Syringe Volume (µL) | Step Volume (nL) | Syringe Steps | Syringe Volume (nL) | Flow Freq (Hz) | Flow Rate (µL/S) | Open Time (µS) | Time Freq (Hz) | Valve Cycles | Drop Size (nL) | Total Time (µS) |
|---|---|---|---|---|---|---|---|---|---|---|
| 50 | 0.260 | 2 | 0.521 | 3072 | 1.6 | 150 | 6667 | 2 | 1.04 | 300 |
| 100 | 0.521 | 2 | 1.042 | 3072 | 3.2 | 150 | 6667 | 2 | 2.08 | 300 |
| 250 | 1.302 | 2 | 2.604 | 3072 | 8.0 | 150 | 6667 | 2 | 5.21 | 300 |
| 500 | 2.604 | 2 | 5.208 | 3072 | 16.0 | 150 | 6667 | 2 | 10.42 | 300 |
| 1000 | 5.208 | 2 | 10.417 | 3072 | 32.0 | 150 | 6667 | 2 | 20.83 | 300 |
| 2500 | 13.021 | 2 | 26.042 | 3072 | 80.0 | 150 | 6667 | 2 | 52.08 | 300 |
| 5000 | 26.042 | 2 | 52.083 | 3072 | 160.0 | 150 | 6667 | 2 | 104.17 | 300 |
| | | | | | | | | | | |
| | | | | | | | | | | |
| 50 | 0.260 | 2 | 0.521 | 2304 | 1.2 | 200 | 5000 | 2 | 1.04 | 800 |
| 100 | 0.521 | 2 | 1.042 | 2304 | 2.4 | 200 | 5000 | 2 | 2.08 | 800 |
| 250 | 1.302 | 2 | 2.604 | 2304 | 6.0 | 200 | 5000 | 2 | 5.21 | 800 |
| 500 | 2.604 | 2 | 5.208 | 2304 | 12.0 | 200 | 5000 | 2 | 10.42 | 800 |
| 1000 | 5.208 | 2 | 10.417 | 2304 | 24.0 | 200 | 5000 | 2 | 20.83 | 800 |
| 2500 | 13.021 | 2 | 26.042 | 2304 | 60.0 | 200 | 5000 | 2 | 52.08 | 800 |
| 5000 | 26.042 | 2 | 52.083 | 2304 | 120.0 | 200 | 5000 | 2 | 104.17 | 800 |
| | | | | | | | | | | |
| | | | | | | | | | | |
| 50 | 0.260 | 2 | 0.521 | 1920 | 1.0 | 250 | 4000 | 2 | 1.04 | 1000 |
| 100 | 0.521 | 2 | 1.042 | 1920 | 2.0 | 250 | 4000 | 2 | 2.08 | 1000 |
| 250 | 1.302 | 2 | 2.604 | 1920 | 5.0 | 250 | 4000 | 2 | 5.21 | 1000 |
| 500 | 2.604 | 2 | 5.208 | 1920 | 10.0 | 250 | 4000 | 2 | 10.42 | 1000 |
| 1000 | 5.208 | 2 | 10.417 | 1920 | 20.0 | 250 | 4000 | 2 | 20.83 | 1000 |
| 2500 | 13.021 | 2 | 26.042 | 1920 | 50.0 | 250 | 4000 | 2 | 52.08 | 1000 |
| 5000 | 26.042 | 2 | 52.083 | 1920 | 100.0 | 250 | 4000 | 2 | 104.17 | 1000 |
| | | | | | | | | | | |
| | | | | | | | | | | |
| 50 | 0.260 | 2 | 0.521 | 1536 | 0.8 | 300 | 3333 | 2 | 1.04 | 1200 |
| 100 | 0.521 | 2 | 1.042 | 1440 | 1.5 | 300 | 3333 | 2 | 2.08 | 1200 |
| 250 | 1.302 | 2 | 2.604 | 1536 | 4.0 | 300 | 3333 | 2 | 5.21 | 1200 |
| 500 | 2.604 | 2 | 5.208 | 1536 | 8.0 | 300 | 3333 | 2 | 10.42 | 1200 |
| 1000 | 5.208 | 2 | 10.417 | 1536 | 16.0 | 300 | 3333 | 2 | 20.83 | 1200 |
| 2500 | 13.021 | 2 | 26.042 | 1536 | 40.0 | 300 | 3333 | 2 | 52.08 | 1200 |
| 5000 | 26.042 | 2 | 52.083 | 1536 | 80.0 | 300 | 3333 | 2 | 104.17 | 1200 |

TABLE 8 is for a 250 µL syringe using a 250 µL open time but varying the syringe steps per valve opening from 1-7. In all cases good drops were dispensed.

**TABLE 8**

| Syringe Volume (µL) | Step Volume (nL) | Syringe Steps | Syringe Volume (nL) | Flow Freq (Hz) | Flow Rate (µL/S) | Open Time (µS) | Time Freq (Hz) | Valve Cycles | Drop Size (nL) | Total Time (µS) |
|---|---|---|---|---|---|---|---|---|---|---|
| 250 | 1.302 | 1 | 1.302 | 6144 | 8.0 | 150 | 6667 | 2 | 2.60 | 300 |
| 250 | 1.302 | 2 | 2.604 | 3072 | 8.0 | 150 | 6667 | 2 | 5.21 | 300 |
| 250 | 1.302 | 3 | 3.906 | 2048 | 8.0 | 150 | 6667 | 2 | 7.81 | 300 |
| 250 | 1.302 | 4 | 5.208 | 1536 | 8.0 | 150 | 6667 | 2 | 10.42 | 300 |
| 250 | 1.302 | 5 | 6.510 | 1229 | 8.0 | 150 | 6667 | 2 | 13.02 | 300 |
| 250 | 1.302 | 6 | 7.813 | 1024 | 8.0 | 150 | 6667 | 2 | 15.63 | 300 |
| 250 | 1.302 | 7 | 9.115 | 878 | 8.0 | 150 | 6667 | 2 | 18.23 | 300 |

TABLE 9 is the an extension of Table 8 using a 250 µL syringe size but using decreasing flow rates and longer open times. In all cases drops were delivered.

**TABLE 9**

| Syringe Volume (µL) | Step Volume (nL) | Syringe Steps | Syringe Volume (nL) | Flow Freq (Hz) | Flow Rate (µL/S) | Open Time (µS) | Time Freq (Hz) | Valve Cycles | Drop Size (nL) | Total Time (µS) |
|---|---|---|---|---|---|---|---|---|---|---|
| 250 | 1.302 | 1 | 1.302 | 6144 | 8.0 | 150 | 6667 | 2 | 2.60 | 300 |
| 250 | 1.302 | 2 | 2.604 | 3072 | 8.0 | 150 | 6667 | 2 | 5.21 | 300 |
| 250 | 1.302 | 3 | 3.906 | 2048 | 8.0 | 150 | 6667 | 2 | 7.81 | 300 |
| 250 | 1.302 | 4 | 5.208 | 1536 | 8.0 | 150 | 6667 | 2 | 10.42 | 300 |
| 250 | 1.302 | 5 | 6.510 | 1229 | 8.0 | 150 | 6667 | 2 | 13.02 | 300 |
| 250 | 1.302 | 6 | 7.813 | 1024 | 8.0 | 150 | 6667 | 2 | 15.63 | 300 |
| 250 | 1.302 | 7 | 9.115 | 878 | 8.0 | 150 | 6667 | 2 | 18.23 | 300 |
| | | | | | | | | | | |
| | | | | | | | | | | |
| 250 | 1.302 | 1 | 1.302 | 4608 | 6.0 | 200 | 5000 | 2 | 2.60 | 800 |
| 250 | 1.302 | 2 | 2.604 | 2304 | 6.0 | 200 | 5000 | 2 | 5.21 | 800 |
| 250 | 1.302 | 3 | 3.906 | 1536 | 6.0 | 200 | 5000 | 2 | 7.81 | 800 |
| 250 | 1.302 | 4 | 5.208 | 1152 | 6.0 | 200 | 5000 | 2 | 10.42 | 800 |
| 250 | 1.302 | 5 | 6.510 | 922 | 6.0 | 200 | 5000 | 2 | 13.02 | 800 |
| 250 | 1.302 | 6 | 7.813 | 768 | 6.0 | 200 | 5000 | 2 | 15.63 | 800 |
| 250 | 1.302 | 7 | 9.115 | 658 | 6.0 | 200 | 5000 | 2 | 18.23 | 800 |
| | | | | | | | | | | |
| | | | | | | | | | | |
| 250 | 1.302 | 1 | 1.302 | 3840 | 5.0 | 250 | 4000 | 2 | 2.60 | 1000 |
| 250 | 1.302 | 2 | 2.604 | 1920 | 5.0 | 250 | 4000 | 2 | 5.21 | 1000 |
| 250 | 1.302 | 3 | 3.906 | 1280 | 5.0 | 250 | 4000 | 2 | 7.81 | 1000 |
| 250 | 1.302 | 4 | 5.208 | 960 | 5.0 | 250 | 4000 | 2 | 10.42 | 1000 |
| 250 | 1.302 | 5 | 6.510 | 768 | 5.0 | 250 | 4000 | 2 | 13.02 | 1000 |
| 250 | 1.302 | 6 | 7.813 | 640 | 5.0 | 250 | 4000 | 2 | 15.63 | 1000 |
| 250 | 1.302 | 7 | 9.115 | 549 | 5.0 | 250 | 4000 | 2 | 18.23 | 1000 |
| | | | | | | | | | | |
| | | | | | | | | | | |
| 250 | 1.302 | 1 | 1.302 | 3072 | 4.0 | 300 | 3333 | 2 | 2.60 | 1200 |
| 250 | 1.302 | 2 | 2.604 | 1536 | 4.0 | 300 | 3333 | 2 | 5.21 | 1200 |
| 250 | 1.302 | 3 | 3.906 | 1024 | 4.0 | 300 | 3333 | 2 | 7.81 | 1200 |
| 250 | 1.302 | 4 | 5.208 | 768 | 4.0 | 300 | 3333 | 2 | 10.42 | 1200 |
| *250* | 1.302 | 5 | 6.510 | 614 | 4.0 | 300 | 3333 | 2 | 13.02 | 1200 |
| 250 | 1.302 | 6 | 7.813 | 512 | 4.0 | 300 | 3333 | 2 | 15.63 | 1200 |
| 250 | 1.302 | 7 | 9.115 | 439 | 4.0 | 300 | 3333 | 2 | 18.23 | 1200 |

One advantage of the modulation mode is that it provides a robust method of delivering small volumes such as below 50-100 nL. An example would be to deliver 5.2 nL with a 250 µL syringe using one syringe step (1.3 nL) with one valve actuation at 150 µS intervals repeated 4 times. This mode of operation provides reliable drop ejection with low coefficient of variations. These are contemplated to be due to efficient ejection of the positive displacement of fluid from the channel nozzle tip or orifice using an enhanced level of energy transfer from the solenoid valve.

Another advantage of the modulation mode is that it can provide high speed volume delivery. That is, this mode of operation can deliver fluid at much higher rates, which are typically limited by syringe speeds rather than the solenoid open/close times. For example using a 5000 µL syringe with a single step volume of 0.026 µL operating at 6000 Hz the volume delivery rate of ejected fluid is in the range of 150 µL/sec.

In the burst and line modes of operation, a change in desired drop size can result in a change in the optimum steady state pressure for quantitative delivery of drop volumes. Thus pressure adjustment may be required which can add more time and complication to the dispense process. The modulation mode can be used to eliminate the need for pressure adjustment by building drops volumes based on the number of valve oscillations and a common syringe step size.

### Pictorial Illustration of Certain Embodiments

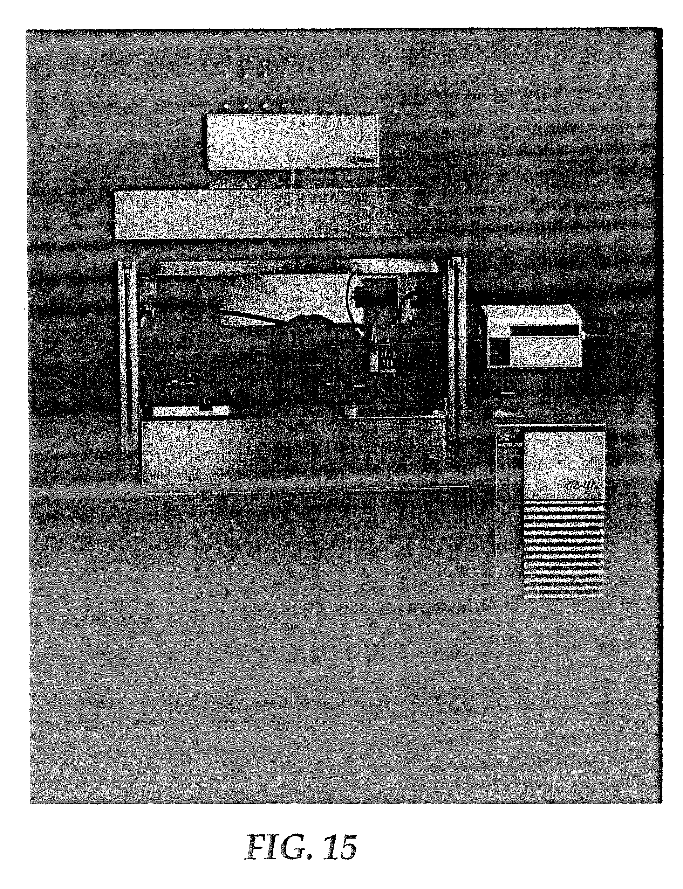

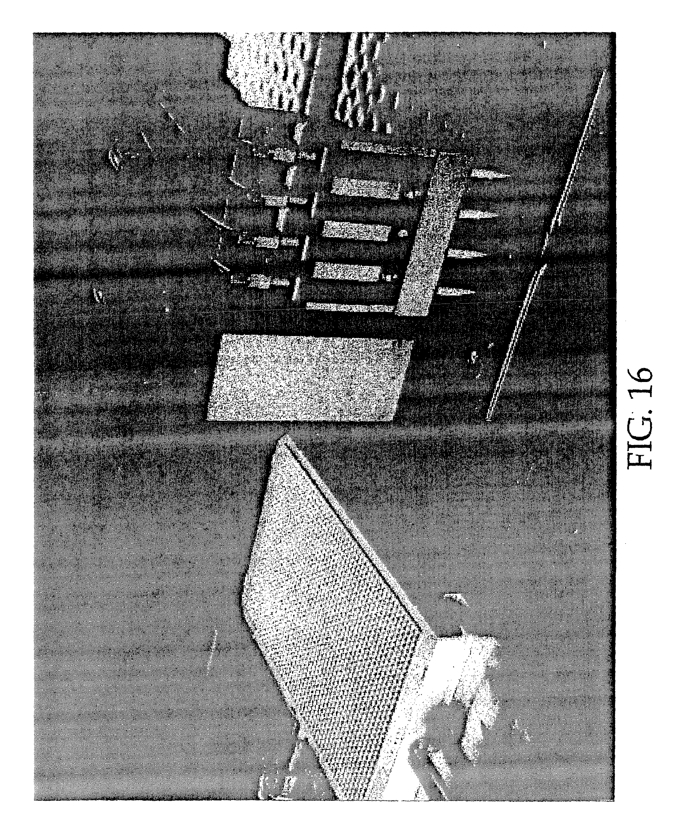

**FIG. 15** is a photographic view of an aspirating and dispensing apparatus comprising a dispense head with a (1 x 4) array of dispense channels and having features and advantages in accordance with one embodiment of the invention. **FIG. 16** is a photographic close-up of the dispensing head of **FIG. 15**.

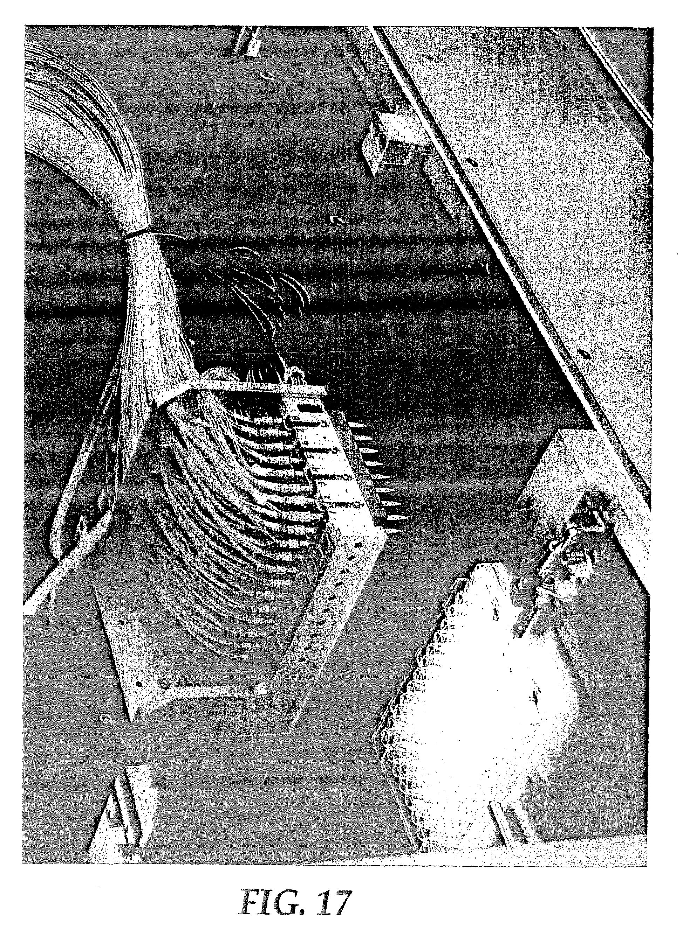

**FIG. 17** is a photographic close up view of a dispensing head comprising a (8 x 12) array of dispensing channels and having features and advantages in accordance with one embodiment of the invention.

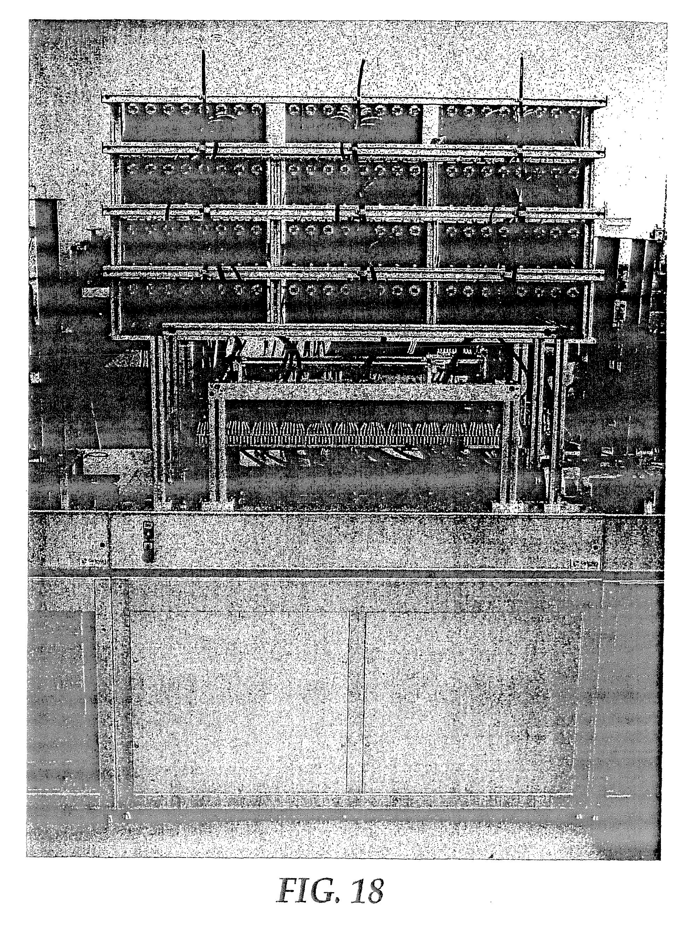

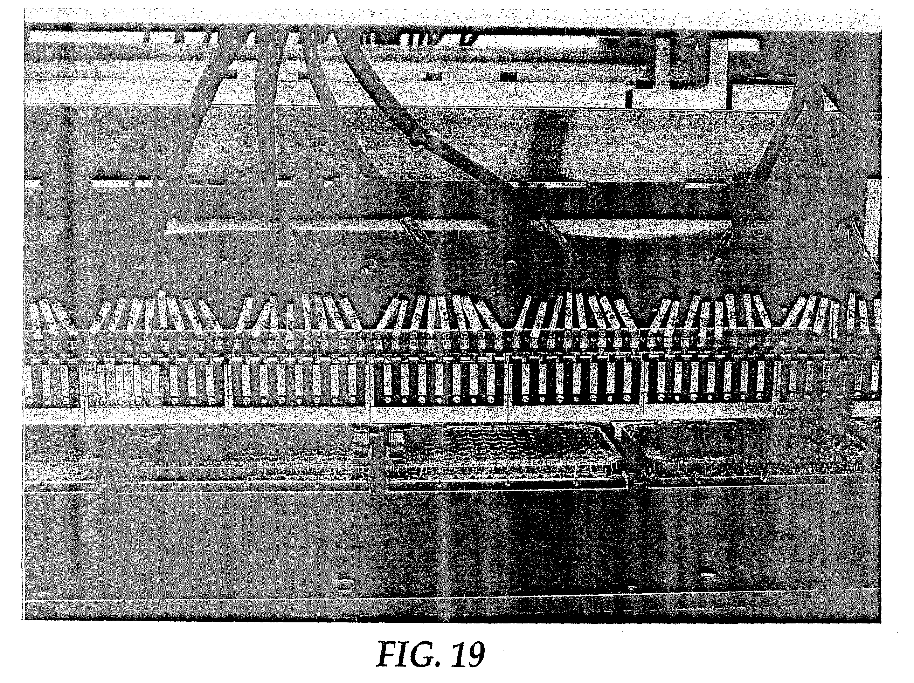

**FIG. 18** is a photographic view of an aspirating and dispensing apparatus comprising a dispense head with a (1 x 96) array of dispense channels and having features and advantages in accordance with one embodiment of the invention. **FIG. 19** is a photographic close-up of the dispensing head of **FIG. 18**.

### Dispensing and Suspended Drop Technology

Some embodiments relate generally to dispensing of fluid droplets and in particular to methods and systems of dispersing, suspending or arranging microfluidic or sub-microfluidic volumes of droplets of chemical, biological or other reagents or liquids below the surface of a cover or host fluid using non-contact dispensing for creating an assay or reaction that produces a detectable signal or a by-product such as a harvestable protein crystal. Advantageously, evaporation of valuable reagents is substantially prevented or reduced. Another advantage, in the case of miscible reagents, is that the drop velocities provide good mixing. Yet another advantage is that, in the non-contact dispensing scheme, the nozzle or tip is not immersed into the host fluid, thereby facilitating cleaning.

In protein crystallization, for example, a mineral oil is sometimes used as a cover layer aver reagents that have been dispensed into wells of a crystallization or microtiter plate. The mineral oil is used as an evaporation barrier. Typically, the assay reagents are first dispensed the wells followed by dispensing of the mineral oil.

In accordance with one embodiment, the reagents are dispensed through the mineral oil. For example, 100 nanoliter (nL) drops of reagents can be dispensed through the mineral oil in a 1536 well format. In some embodiments, one or more of the arrangements of **FIGS. 1-4** and **14-19** are used to dispense the drops or droplets. In other embodiments, other suitable dispensing technologies some of which are disclosed, noted or suggested herein may also be efficaciously used, as needed or desired. Advantageously, dispensing of reagents through the mineral oil can prevent evaporation of valuable reagents which may otherwise occur in the time frame when the reagents in the wells are exposed to possible evaporation prior to dispensing of the mineral oil.

In accordance with another embodiment, drops of reagents may be shot though a mineral oil cover to react with previously dispensed reagents which have been dried on the bottom wells. In some embodiments, one or more of the arrangements of **FIGS. 1-4** and **14-19** are used to dispense the drops or droplets. In other embodiments, other dispensing technologies some of which are disclosed, noted or suggested herein may also be efficaciously used, as needed or desired.

In accordance with one embodiment, a method is provided of arranging reagent droplets in a host fluid. The method comprises the step of dispensing a predetermined amount of host fluid in a receptacle such that a surface of the host fluid is exposed. A predetermined microfluidic or sub-microfluidic volume of a reagent in the form of a droplet is ejected from a non-contact dispenser at a controlled velocity and/or momentum onto the exposed surface of the host fluid such that the droplet penetrates the surface of the host fluid.

The embodiments described herein can be used to dispense droplets or drops using a wide variety of dispensers and dispensing systems. These include any of the embodiments of **FIGS. 1-4** and **14-19.**

In general, the preferred embodiments include any form of non contact ink jet dispensing using an actuator that would eject a drop from a nozzle which is part of a tip configuration (see, for example, **FIGS. 3C-3E**). The actuator can include, without limitation, a solenoid actuator (see, for example, **FIG. 3A**), a piezoelectric actuator (see, for example, **FIG. 3B**)**,** a pneumatic solenoid actuator, a pneumatic actuator, an electrostatic actuator, a magnetic actuator, a pressure actuator, a magneto-constriction actuator, a fluid-constriction actuator, a heat-actuated actuator, a bubble-jet actuator, among others.

In accordance with one embodiment, a positive displacement pump (see, for example, **FIG. 4)** is hydraulically connected to the dispenser for metering precise and/or predetermined quantities of reagent or other liquid to the dispenser. The pump preferably comprises a syringe-type pump. A wide variety of other direct current (DC) fluid sources or means may also be used, however, to achieve the benefits and advantages as disclosed, taught or suggested herein. These may include, without limitation, rotary pumps, peristaltic pumps, squash-plate pumps, and the like, or a pressurized fluid source electronically regulated to provide a current source pseudo-effect. Other types of pumps or fluid sources, such as a pressurized reservoir, and other voltage fluid sources or means may also be efficaciously used with the embodiments described herein, as needed or desired.

### Suspended Assays

As assay volumes become smaller the issue of evaporation becomes more important. This is also the case where the volume is to be heated, for example, as in the case of a polymerase chain reaction (PCR).

A method used to substantially eliminate or reduce evaporation of reagents is to place a substantially inert, immiscible fluid with a very low vapor pressure over the reacting reagents. This is generally denoted herein as the "host" or "cover" fluid, liquid or reagent. Some examples of applications which use such a host or cover fluid to reduce evaporation are PCR reactions, small volume assays and protein crystallization.

In some embodiments, the host or cover fluid is designed and/or configured for purposes other than, or in addition to, prevention of evaporation. The cover fluid can, for example, provide a controlled rate of evaporation or transport from the "covered" reagents. Alternatively, or in addition, the cover reagent may contain ingredients or components that react in a controlled way with the covered reagents. Thus, in various embodiments, the cover fluids or layers are designed to be substantially fully inert or interactive with the reagent or liquid drops.

Typically, the reagents are dispensed in the wells prior to placing the cover fluid or else dispensed using contact dispensing through the oil. Contact dispensing implies either contact of the dispensing nozzle or tip with the host fluid or containing surfaces.

The contact dispense through the cover fluid can complicate the overall process because of the possible need to clean the tips and possible lack of naixing of the different assay reagents. The cleaning of the tips can be difficult since reagents like mineral oil are very difficult to clean. The mixing of the different reagents is often accomplished by using centrifuging to force the suspended fluids together in each well.

### Ink Jet Non-Contact Dispensing

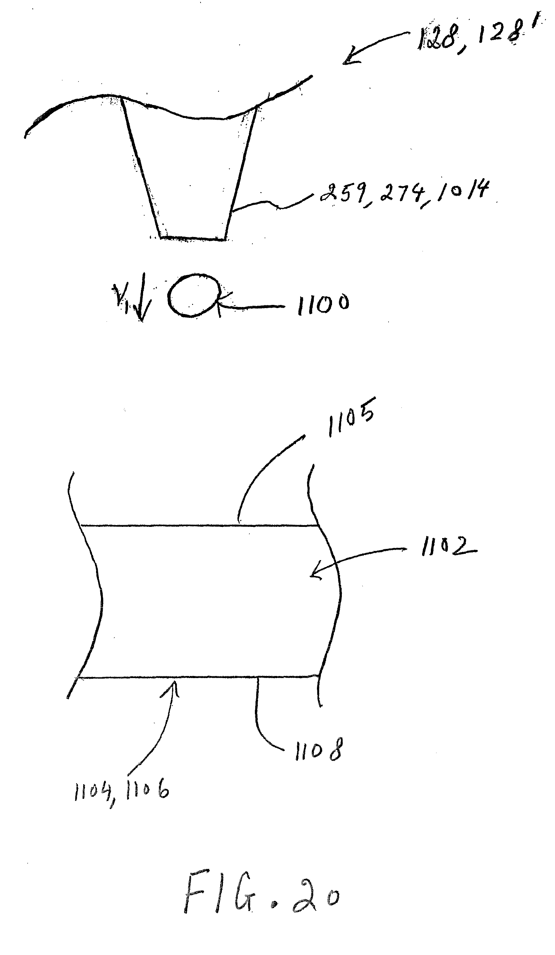

Referring in particular to **FIG. 20,** a dispenser **128, 128'** with a nozzle **259, 274, 1014** is used to dispense a microfluidic or sub-microfluidic drop or droplet **1100** at a velocity V₁ into or onto a host fluid **1102.** The host fluid **1102** has an exposed surface **1105** and is contained in a microwell **1104** of a microtiter plate or the like or a well-less plate **1106** with a bottom containment surface **1108**. The drop volume is in the range from about 1 nanoliter (nL)or less to about 5,000 nL or more.

One of the characteristics of dispensing a small drop **1100 (FIG. 20)** with reasonable velocity V₁, for example, in the range of about 10 meters/sec (m/s), into a body of fluid **1102** is that the smaller drop **1100** penetrates the exposed surface **1105** and moves through the fluid **1102** with decreasing velocity until loss of momentum due to friction causes the drop **1100** to come to rest, as schematically illustrated in **FIG. 21.**

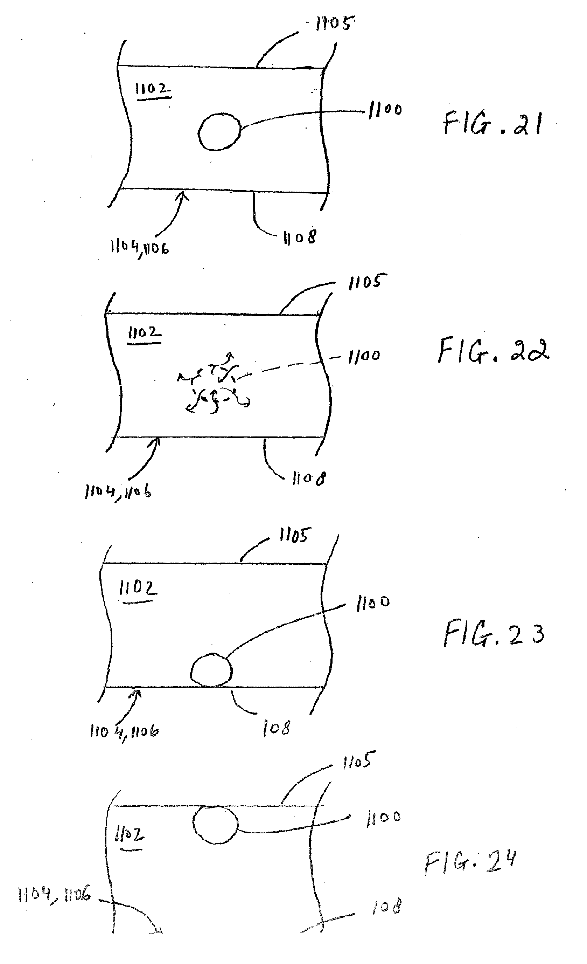

As schematically illustrated in **FIG. 22**, the droplet **1100** dissolves in the host liquid **1102** if the two fluids (droplet and host) are miscible. If the fluids (droplet and host) are not miscible, the small drop **1100** remains suspended in the host liquid **1102** and eventually sinks to the bottom of the well due to gravity (see **FIG. 23)** or rises due to buoyancy (see **FIG. 24**), depending on the densities or specific gravities of the fluids (droplet and host).

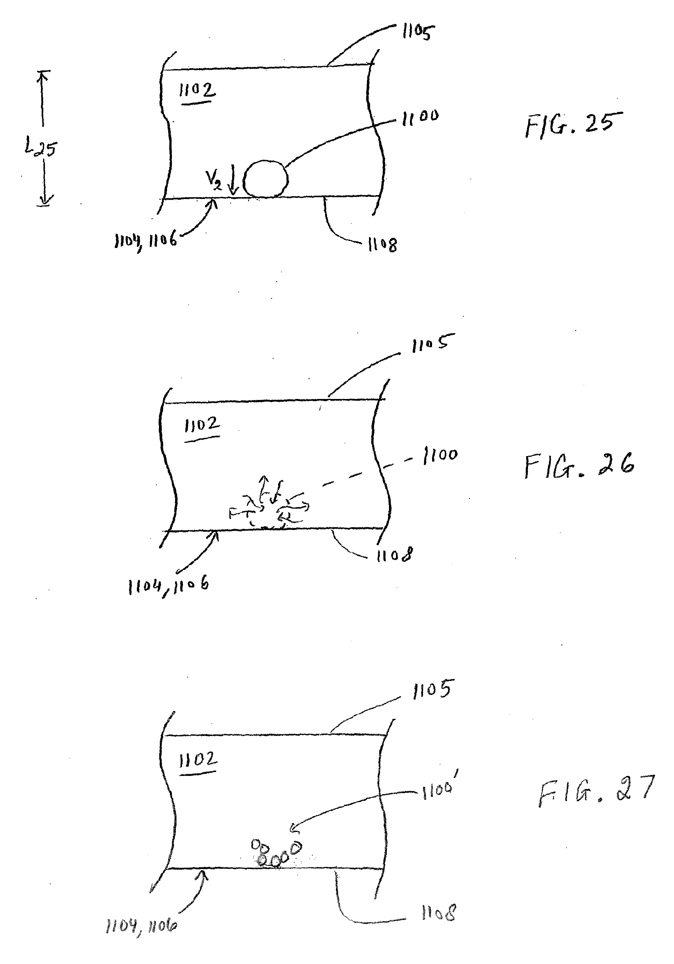

In the case where the host fluid volume is contained by surfaces with dimensions smaller than the drop travel distance, for example, the length L₂₅ in **FIG. 25,** the drop **1100** will impact the containment surface **1108** with a finite velocity V₂ and stop. If the surface tension is large and velocity V₂ relatively slow the drop **1100** will maintain its drop character and then slowly dissolve if soluble in the host fluid **1102** (see **FIG. 26).**

If the velocity V₂ is relatively high and/or surface tension low the drop **1100** can dispense into smaller drops **1100'** (see **FIG. 27**). Referring to **FIG. 28**, the droplets **1100'** will dissolve more quickly if soluble in the host fluid **1102**. Otherwise, the droplets **1100'** can remain dispersed if insoluble in the host fluid **1102** (see **FIGS. 29** and **30).**

Another characteristic of non-contact dispensing using precision motion systems is the ability to accurately place drops at precise XY positions. This provides the ability to obtain good mixing of the various reagents due a combination of superimposed positioning and kinetic energy induced mixing by serially placing drops **1100a, 1100b** at the same XY position (see **FIGS. 31** and **32**).

Referring in particular to **FIGS, 33** and **34,** arrays **1110** of reagents comprising drops **1100a** are created within a single confinement well of a plate **1104** or a well-less plate **1106.** The arrays may be one-dimensional (linear), two-dimensional or other suitable configuration, as needed or desired. One example would be to place an array **1110** of different reagents in a well of a plate **1104** or a well-less plate **1106** filled with the host fluid **1102** (e.g. mineral oil or equivalent) and then follow with an array **1112** comprising drops **1110b** of a common reagent to perform a screen of the common reagent against the library array **1110.** The array **1110** can be located on one or more of the containment surfaces **1108** (see **FIG. 33**) or be suspended in the host fluid **1102** (see **FIG. 34**).

Referring in particular to **FIGS. 35-38**, yet another characteristic of non-contact dispensing, in the case of an immiscible host fluid, is that the drops **1100a, 1100b** will be maintained as a drop due to surface tension of the drop fluid and that interacting/contacting drops **1100a, 1100b** that are miscible will contract into a single drop **1100ab.**

The embodiments of **FIGS. 1-4** and **14-19** provide a special case of ink jet dispensing based on programmable dispense volume using positive displacement hydraulically coupled to a valve such as a solenoid valve. Drop velocities and momentum can be varied. As discussed in detail above, some of the key characteristics of this dispensing technology include: (i) line mode dispense with programmable drop volume and pitch between drops; (ii) step and repeat with single drop or burst mode (multiple drops); (iii) precision location of dispense position; (iv) individual drop volumes in the range from about 1 nL to about 5,000 nL and larger volumes can be generated using multiple drops or burst mode; and (v) modulation mode to provide robust and accurate delivery of microfluidic and sub-microfluidic volumes.

The drop velocity and/or momentum can be controlled by controlling the system pressure, valve frequency and/or duty cycle. In one embodiment, the drop ejection velocity is about 10 m/s. In another embodiment, the drop ejection velocity is in the range from about 7.5 m/s to about 15 m/s. In yet another embodiment, the drop ejection velocity is in the range from about 5 m/s to about 20 m/s. In other embodiments, the drop ejection velocity may be higher or lower, as needed or desired.

As indicated above, the embodiments described herein can be used to dispense droplets or drops using a wide variety of dispensers and dispensing systems. These include any of the embodiments of **FIGS. 1-4** and **14-19**.

Also as indicated above, the preferred embodiments include any form of non contact ink jet dispensing using an actuator that would eject a drop from a nozzle which is part of a tip configuration (see, for example, **FIGS. 3C-3E)**. The actuator can include, without limitation, a solenoid actuator (see, for example, **FIG. 3A**), a piezoelectric actuator (see, for example, **FIG. 3B),** a pneumatic solenoid actuator, a pneumatic actuator, an electrostatic actuator, a magnetic actuator, a pressure actuator, a magneto-constriction actuator, a fluid-constriction actuator, a heat-actuated actuator, a bubble-jet actuator, among others.

In accordance with one embodiment, a process is provide which includes arranging drops, using non contact dispensing, into the host fluid to create a useful assay or reaction that produces a useful signal such as optical radiation that can be detected or a useful by product such as a protein crystal that can be harvested. The host fluid can extend from a large finite XY dimension with a finite Z thickness (small relative to XY) such as a well-less plate **1106** (see **FIG. 39**) to an array of wells **1114,** each with specific XY dimension, of a microtiter plate 1104 (see **FIG. 40**). An example of the well array would be a microtiter plate **1104** with 96, 384, 1536 or 2080 wells **1114**.

The dispensed drops can have sufficient energy to reach the bottom of the well or not enough so they are suspended in the host media above the bottom of the well (see, for example, **FIGS. 23** and **24**). In the latter case the drops will eventually drop to the bottom of the well if the specific gravity is greater than that of the host fluid or rise to the top if the specific gravity is less than that of the host fluid. The measurement or extraction of a byproduct can be made before or after gravity movement of the drops.

### Some Exemplary Cases

### Pre-Applied Regents to Containment Surface

In this embodiment, and referring in particular to **FIG. 41,** one or more of the containment surfaces **1108** can be pretreated to interact in a specific way with drops **1100** that are ejected through the host fluid **1102** to the treated surface **1108.** This can be a coating **1116** applied to the well or plate surfaces **1108** by various processes such as liquid, plasma, thin film processes, among others.

Examples include coating the well or plate surface **1108** to make it hydrophobic or hydrophilic to subsequent drop injections to cause the drops **1100** to either wet (see **FIG. 43**) or not wet (see **FIG. 43**) the surface **1108.** Another example is to dispense one or more components of an assay on the bottom surface **1108** followed by placing the host fluid **1102** and then ejecting drops **1100** into the covered reagents.

Referring in particular to **FIG. 44**, another exemplary embodiment includes dispensing a first reagent **1100a** of a two-reagent assay on the well or plate bottom **1108** followed by drying, application of the host fluid **1102** and then addition of a second reagent **1100b** to complete the assay. In this case, the second reagent **1100b** interacts with the first reagent **1100a** to execute the assay or chemical reaction while the host fluid 1102 prevents evaporation during processes such as incubation, reading, and the like. Reading of the assay is performed through the host fluid **1102** and/or the side or bottom containment walls such as wall **1108.**

### Add Separate Active Device in Containment Well

In this embodiment, an active device is placed on the bottom **1108** of the containment well **1104** or well-less plate **1106.** This active device can also be pre-treated with reagents to control specific properties of the device surface.

Referring in particular to **FIG. 45,** one example includes a means of introducing a reagent into a small micro fluidic chip **1120.** In this case, the portholes **1122** on the chip have a hydrophilic treatment but are hydrophobic relative to the host fluid **1102.** The reagents or drops **1100** are ejected to the portholes **1122** through the host fluid **1102** and drawn into the chip **1120** via capillary action between the drop and hole surface. Advantageously, this method allows the ejection of small, precise volumes into the chip **1120** with evaporation control. By ejecting one or more drops **1100** of different reagents at high speed, advantageously, it would be possible to mix small volumes of reagents prior to being drawn the porthole **1122**.

Referring in particular to **FIG. 46**, another example involves the interaction of the dispensed fluids to precipitate a solid on the surface of the active device such as in protein crystallization using the Parallel Synthesis epitaxial growth chip **1130**. In this case, if the surface **1132** of the active chip **1130** is hydrophilic, it then draws the precipitant solution or mother liquor **1100a** plus protein **1100b** across the surface **1132** of the chip **1130** and crystallization will occur at the appropriate epitaxial lattice spacing position while advantageously preventing evaporation.

### All Drops Placed Through the Host Fluid

In this embodiment, a number of drops **1100** are placed in sequence at the same XY position (see, for example, **FIGS. 35-38**) through the host fluid **1102.** The drops can be collected against a containment surface such as the bottom of the well or suspended in the host fluid at some specific Z position. The drops collectively interact to form a single larger drop. It is also possible for the drops to interact to form a solid or new immiscible fluid component that can separate from the initial combined droplet.

One example of the above strategy involving protein crystallization is the case where a drop of protein is mixed with precipitant solution to cause a protein crystal to form. This differs from the typical "microbatch mode" where the drops of protein and precipitant are first dispensed into a dry well and then covered with the host fluid.

Another example involves performing an assay with a small, contained volume made up of at least two ejected drops, which is protected from evaporation by the host fluid. In this case, the plate holding the assays can be heated or chilled to obtain enhanced activation of physical chemistry processes and detection of the assay. The kinetic energy of the subsequent drops insures mixing. In the case of an assay, advantageously, small volume assays can be performed in large well formats without the constraints that well walls might impose. For example, constraints such as bubble entrapment or detection signal scattering from walls could be substantially eliminated or minimized.

Another example involves a method to mix small, precise volumes of reagents without evaporation that can be extracted from the host fluid or used in situ to execute some new function. A precipitant solution could be made using this technique followed by injection of a protein drop.

### Drop Strategies

### Sequential Single Drops

This embodiment includes the ability to sequentially dispense drops of the same and/or different reagents and different voluanes at the same or different XYZ positions.

### Sequential Volume Transfers using Burst Modes

In this embodiment, burst modes (as discussed in detail above) are utilized which use high frequency operation of the solenoid, which increases the transfer volume momentum as compared to the single drop mode. For example, a 50 nL drop can be delivered with a 4 kHz burst of 10 nL drops which means that the solenoid valve opens 5 times to deliver 50 nL rather than one time. Advantageously, the increased momentum provides greater mixing power for the volume delivery.

### Arraying

In this embodiment, drops are delivered to form XY arrays of drop combinations. In this manner, an assay array can be performed in a given well in a liquid state using small, contained volumes. The array would advantageously be stable against evaporation and could be heated or chilled, as needed or desired, without evaporation.

### Reagent Strategies

### Host Fluid

In this embodiment, the host fluid can be a single or multiple component system. The various combinations include: (i) drop and host totally immiscible; (ii) drop and host miscible; and (iii) selective components in the drop/host are miscible in both the drop and host where the remaining components are immiscible.

The miscibility issue is also temperature dependent. Moreover, even in the case where a drop component is miscible in both the drop solution and host fluid the thermodynamic conditions of solubility will substantially dictate whether the component will migrate from the drop to the host. In the case where thermodynamics dictates that a reagent is more stable in the host, the system can be used for selective component separations. In the extreme case the host could be permeable to some components in the drops, which allows these components to vent to atmosphere (evaporate). Note also that the host fluid could be considered as a component of the drop mixture where components from the host could diffuse into the drop to create new properties.

### Injection Fluid

In this embodiment, the different modes of drop ejection are single drops or burst mode volil-mes. Adva-ti-tageously, there is also some flexibility to to control drop velocity and/or momentum.

### Containment Wall Treatments

In this embodiment, the containment walls can be treated to make the walls hydrophobic, hydrophilic or interactive (soluble, chemically active, etc.) relative to the drop touching the wall.

### Applications

### Protein Crystallization

The preferred embodiments presented herein provide a novel way to process the "microbatch" approach to screening a given protein against a library of precipitant reagents using non-contact dispensing. Typically, the " microbatch" approach is used to dispense drops of the precipitant and protein into a given well and then cover it with the mineral oil very quickly.

Disadvantageously, this provides a slow tedious process and/or very expensive equipment using high density heads to perform the operations quickly. For example, systems that use 96 head "Hydras" that dispense the drops of protein, precipitant and mineral oil in sequence in order to minimize evaporation.

Advantageously, with the non-contact approach of the preferred embodiments, the host fluid (e.g: oil) is first dispensed or put down and then the protein can be dispensed through the host fluid (e.g. oil) with a one channel dispenser **128** (see, for example, **FIG. 3A**) at very high speeds followed by dispensing of the precipitant solutions. In most cases in protein crystallization, throughput is not as critical but rather evaporation is the more major issue. In this case, a small number of channels (e.g. about four or eight) can be used for the precipitant aspirate-dispense (A/D), desirably saving on cost. Larger numbers of dispensing channels can be used for cases where total throughput is important, for example, ten or more channels.

In accordance with one embodiment, a well-less plate format is used where there is only a perimeter dam to contain the host fluid (e.g. mineral oil). In some cases, the use of individual wells may be superfluous with the mineral oil process and the use of a well-less plate would actually be easier to apply the mineral oil to the plate. In this case, the mineral oil depth would be about 3-4 mm and even less with drop sizes in the range of about 50-100 nL.

Another embodiment involves adding secondary additions to to the protein/precipitant solution in situ. Examples of secondary additions include the addition of ligands and/or heavy metal ions. The former is for studies of ligand binding and the later is for phase determination in the X-ray structure analysis. In the latter case, the thermodynamic condition of a mixture of a protein with a precipitant can now be perturbed by adding additional reagent via a non-contact drop. For example, the pH could be increased by adding a small volume drop of a higher pH reagent.

### Epitaxial Growth for Crystallization

In this embodiment, an active device is placed on the well surface where each device has a combinatorial array of lattice posts (see, for example, **FIG. 46).** Each post has a different one dimensional lattice structure that serves as an epitaxial protein site. The device is covered with the host fluid (e.g. mineral oil) followed by ejection of protein and precipitant drops onto the active device surface. Ligands and/or heavy metal ions can also be added as discussed above.

### Assays

In this embodiment, liquid assays with very small volumes are made either with confining wells or well-less configurations using the host fluid method. It has been amply demonstrated that assay volumes down into the 50 nL range will work. Much of the problem has been in developing low volume plate technology compatible with liquid handling and readers.

In this case, a conventional 96-well format with mineral oil or some other suitable host fluid can be used to perform low volume assays down the 50 nL range using the drop ejection method. Advantageously, it is also a simple step to actually perform an array of assay in a 96 flat bottom plate using this method. Again, this format can be executed without the need for separation wells. The well-less plate could support a 96, 384 or 1536 or other format, as needed or desired.

### Arrays

In this embodiment, attached and non-attached arrays are produced with the ejection method and then hybridized in place with ejected probe. The advantages here include: (i) more efficient use of the probe; and (ii) ability to geometrically place arrays configurations and probe at will. For example, an array can be made of a single gene and each gene can be hybridized with a different probe, and so forth Some embodiments are further discussed below.

In this embodiment, the reacted probe provides a discriminated signal from the unreacted probe. In this case, the array can be read in situ and the array can be either attached or non-attached to the surface.

In this embodiment, for the case where there is no discriminated signal, the arrays are attached and the plate washed and dried after hybridization.

In this embodiment, the arraying can be done with or without confining wells for subarrays.

### Combinatorial Chemistry

In this embodiment, a combinatorial library is created using mixtures with the host fluid by the serial ejection of different drops at varying volumes in the same XY position. One example is the creation of protein crystallization precipitant reagent libraries. Another example is when the goal is to produce an inorganic solid from salts. If the host solution is volatile then the system can be directly fired to produce an array of salts on the substrate surface.

### Another Dispensing System Embodiment

**FIGS. 47-50** show arrangements of another dispensing system having features and advantages in accordance with one embodiment. Copending U.S. Patent Application No. 09/637,745, filed August 11, 2000, and International Application No. PCT/GB00/03094, filed August 11, 2000, International Publication No. WO 01/13128 A1, published February 22, 2001, both entitled APPARATUS FOR LIQUID SAMPLE HANDLING, the entirety of each one of which is hereby incorporated by reference, disclose in further detail the system of **FIGS. 47-50**.

The apparatus generally comprises a plurality of hollow capillaries, a housing which retains the capillaries in their desired orientation and means to effect sample removal from the capillaries. Each capillary is open at both ends and has a defined internal volume. On contact of an open end of the capillary with a sample a defined volume of sample is drawn up into the capillary by capillary action.

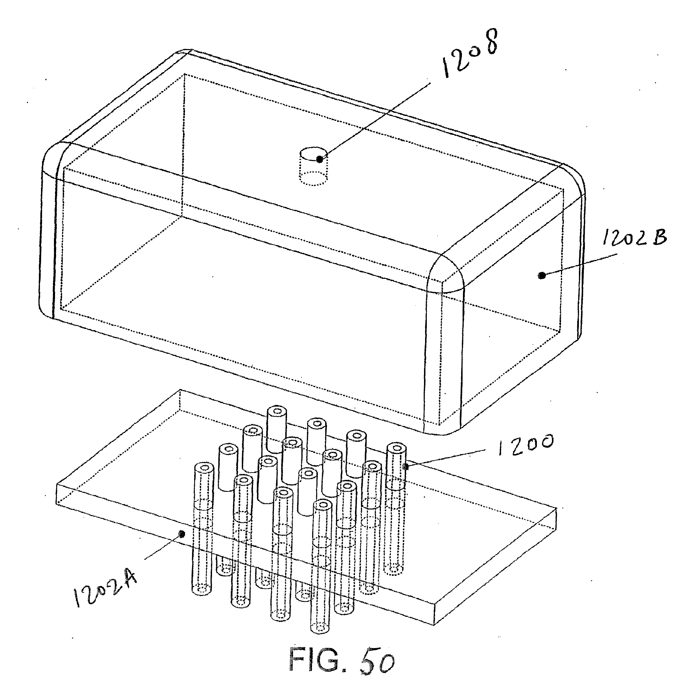

In **FIG. 47,** the capillaries **1200** are retained in their desired orientation by the housing portion **1202. FIG. 47** shows a one-dimensional array and **FIG. 48** shows a two-dimensional array.

In **FIG. 49,** capillaries **1200** are retained within the housing **1202.** which has two portions which form a cavity. A portion **1202A** which retains the capillaries in their desired orientation and a portion **1202B** which is provided with means supply pressurized gas to the cavity. Portions **1202A** and **1202B** are preferably separable but are capable of engaging to form a pressure tight seal. Pressurized gas is provided by means of a control valve **1204** and suitable pipework **1206.**

In **FIG. 50,** housing portions **1202A** and **1202B** are shown in an exploded view. Pressurized gas is supplied through orifice **1208.**

From the foregoing description, it will be appreciated that a novel approach for handling microfluidic and sub-microfluidic liquid volumes has been disclosed. While the components, techniques and aspects of the invention have been described with a certain degree of particularity, it is manifest that many changes may be made in the specific designs, constructions and methodology herein above described without departing from the spirit and scope of this disclosure.

Various modifications and applications of the invention may occur to those who are skilled in the art, without departing from the true spirit or scope of the invention. It should be understood that the invention is not limited to the embodiments set forth herein for purposes of exemplification, but is to be defined only by a fair reading of the appended claims, including the full range of equivalency to which each element thereof is entitled.

## Claims

1. A dispensing system for dispensing a liquid droplet into a receptacle, comprising:
a dispenser comprising an exit orifice;
said receptacle comprising at least one containment surface;
a host fluid contained in said receptacle such that said host fluid has an exposed surface not in contact with said exit orifice;
whereby, said dispenser dispenses a droplet from said exit orifice at a velocity such that said droplet penetrates said exposed surface of said host fluid.

2. A system as claimed in claim 1, wherein said droplet is suspended in said host fluid between said exposed surface and said containment surface.

3. A system as claimed in claim 1, wherein said droplet is suspended in said host fluid at said exposed surface.

4. A system as claimed in claim 3, wherein a second droplet is superimposed on said droplet in said host fluid to induce mixing.

5. A system as claimed in claim 3, wherein a second droplet is superimposed on said droplet in said host fluid to form one larger droplet.

6. A system as claimed in claims 4 or 5, wherein an array of droplets are suspended in said host fluid at said exposed surface and a plurality of second droplets are superimposed on a respective one of said droplets of said array.

7. A system as claimed in claim 1, wherein said droplet is positioned in said host fluid at said containment surface.

8. A system as claimed in claim 7, wherein a second droplet is superimposed on said droplet in said host fluid to induce mixing.

9. A system as claimed in claim 7, wherein a second droplet is superimposed on said droplet in said host fluid to form one larger droplet.

10. A system as claimed in claims 8 or 9, wherein an array of droplets are positioned in said host fluid at said containment surface and a plurality of second droplets are superimposed on a respective one of said droplets of said array.

11. A system as claimed in claims 4, 5, 8 or 9, wherein the two droplets comprise the same liquid or reagent.

12. A system as claimed in claims 4, 5, 8 or 9, wherein the two droplets comprise different liquids or reagents.

13. A system as claimed in claims 6 or 10, wherein the array of droplets and the plurality of droplets comprise the same liquid or reagent.

14. A system as claimed in claims 6 or 10, wherein the array of droplets and the plurality of droplets comprise different liquids or reagents.

15. A system as claimed in claim 1, wherein said droplet contacts said containment surface with an impact velocity and substantially stops.

16. A system as claimed in claims 2, 3, 5, 7, 9 or 15, wherein said droplet dissolves in said host fluid.

17. A system as claimed in claim 16, wherein said droplet disperses into a plurality of smaller droplets.

18. A system as claimed in claim 17, wherein said smaller droplets are suspended in said host fluid at said exposed surface.

19. A system as claimed in claim 17, wherein said smaller droplets are positioned in said host fluid at said containment surface.

20. A system as claimed in claims 17, 18 or 19, wherein said smaller droplets dissolve in said host fluid.

21. A system as claimed in claim 1, wherein said containment surface is treated.

22. A system as claimed in claim 21, wherein said containment surface is treated with a hydrophobic coating such that when said droplet is in said host fluid at said containment surface it does not wet said containment surface.

23. A system as claimed in claim 22, wherein said containment surface is treated with a hydrophilic coating such that when said droplet is in said host fluid at said containment surface it wets said containment surface.

24. A system as claimed in claim 21, wherein said containment surface is treated with a first reagent and wherein said droplet comprises a second reagent.

25. A system as claimed in claim 24, wherein said reagents interact to execute an assay or reaction while said host fluid prevents evaporation.

26. A system as claimed in claim 1, wherein an active device is positioned on said containment surface.

27. A system as claimed in claim 26, wherein said device comprises a micro fluidic chip with one or more portholes.

28. A system as claimed in claim 27, wherein one or more droplets of different reagents or liquids are ejected into said host fluid such that they mix in a predetermined manner and are then drawn into selected portholes while said host fluid prevents evaporation.

29. A system as claimed in claim 26, wherein said device comprises a growth chip.

30. A system as claimed in claim 29, wherein second droplet is dispensed and both said droplets are drawn across a surface of said chip and interact while said host fluid prevents evaporation.

31. A system as claimed in claim 30, wherein one of said droplets comprises a precipitant solution or mother liquor and the other one of said droplets comprises protein and they interact to cause protein crystallization.

32. A system as claimed in claim 1, wherein said droplet has a volume in the range from about 0.1 nanoliters (nL) to about 5000 nL.

33. A system as claimed in claim 1, wherein said velocity is in the range from about 5 m/s to about 20 m/s.

34. A system as claimed in claim 33, wherein said velocity is in the range from about 7.5 m/s to about 15 m/s.

35. A system as claimed in claim 35, wherein said velocity is about 10 m/s.

36. A system as claimed in claim 1, wherein said receptacle comprises a well of an array of wells.

37. A system as claimed in claim 1, wherein said receptacle comprises a welless plate.

38. A system as claimed in claims 1, 2, 3, 6 or 18, wherein said exposed surface comprises an upper surface of said host fluid.

39. A system as claimed in claims 1, 2, 7, 10, 15, 19, 21, 22, 23, 24 or 26, wherein said containment surface comprises a lower surface of said receptacle.

40. A system as claimed in claim 1, wherein said dispenser comprises an ink jet non-contact dispenser.

41. A system as claimed in claim 1, wherein said dispenser comprises a solenoid dispenser.

42. A system as claimed in claim 1, wherein said dispenser comprises a piezo dispenser.

43. A system as claimed in claims 40, 41 or 42, wherein said system comprises pump in series with said dispenser.

44. A system as claimed in claim 43, wherein said pump comprises a positive displacement pump.

45. A system as claimed in claim 1, wherein said dispenser comprises a pneumatic dispenser.

46. A system as claimed in claim 1, wherein said host fluid comprises an inert liquid.

47. A system as claimed in claim 1, wherein said host fluid comprises an immiscible liquid.

48. A system as claimed in claim 1, wherein said host fluid comprises mineral oil.

49. A system as claimed in claim 1, wherein said droplet comprises a chemical or biological reagent.

50. A system as claimed in claim 1, wherein said droplet comprises a reagent selected from the group consisting of DNA, cDNA, RNA, a protein, a peptide, and an oligonucletide.

51. A method of arranging reagent droplets in a host fluid, comprising the steps of:
dispensing a predetermined amount of host fluid in a receptacle such that a surface of said host fluid is exposed; and
ejecting a predetermined microfluidic or sub-microfluidic volume of a reagent in the form of a droplet from a non-contact dispenser at a controlled velocity and/or momentum onto said surface of said host fluid such that said droplet penetrates said surface of said host fluid.

52. A method as claimed in claim 51, wherein said droplet has a density greater than the density of said host fluid.

53. A method as claimed in claim 51, wherein said droplet has a density less than the density of said host fluid.

54. A method as claimed in claim 51, wherein said host fluid comprises an inert liquid.

55. A method as claimed in claim 51, wherein said host fluid comprises an immiscible liquid.

56. A method as claimed in claim 51, wherein said host fluid comprises mineral oil.

57. A method as claimed in claim 51, wherein said droplet comprises a protein precipitant.

58. A method as claimed in claim 51, wherein said host fluid comprises a protein.

59. A method as claimed in claim 51, wherein said dispenser is an ink jet non-contact dispenser.

60. A method as claimed in claim 51, wherein said dispenser is a solenoid dispenser.

61. A method as claimed in claim 51, wherein said dispenser is a piezo dispenser.

62. A method as claimed in claim 51, wherein said dispenser is a pneumatic dispenser.

63. A method as claimed in claim 51, wherein said volume is in the range from about 0.1 nL to about 5000 nL.

64. A method as claimed in claim 63, wherein said volume is in the range from about 0.1 nL to about 1000 nL.

65. A method as claimed in claim 64, wherein said volume is in the range from about 1 nL to about 1000 nL.

66. A method as claimed in claim 65, wherein said volume is in the range from about 0.1 nL to about 100 nL.

67. A method as claimed in claim 66, wherein said volume is in the range from about 2 nL to about 50 nL.

68. A method as claimed in claim 67, wherein said volume is in the range from about 5 nL to about 20 nL.

69. All systems, methods, products, apparatus and/or other disclosures and any combination thereof included in the foregoing description.
